(19) Europäisches Patentamt
European Patent Office
Office européen des brevets

(11) **EP 2 512 258 B1**

(12) **FASCICULE DE BREVET EUROPEEN**

(45) Date de publication et mention
de la délivrance du brevet:
**09.11.2016 Bulletin 2016/45**

(51) Int Cl.:
*A23C 3/00* *(2006.01)*     *A23C 9/142* *(2006.01)*
*A01J 11/16* *(2006.01)*     *B01D 65/08* *(2006.01)*
*B01D 61/14* *(2006.01)*

(21) Numéro de dépôt: **10805803.3**

(22) Date de dépôt: **14.12.2010**

(86) Numéro de dépôt international:
**PCT/FR2010/052709**

(87) Numéro de publication internationale:
**WO 2011/080449 (07.07.2011 Gazette 2011/27)**

(54) **PROCEDE POUR REDUIRE LA TENEUR BACTERIENNE D'UN MILIEU ALIMENTAIRE ET/OU BIOLOGIQUE D'INTERET, CONTENANT DES GOUTTELETTES LIPIDIQUES**

VERFAHREN ZUR MINIMIERUNG DER BAKTERIENKONZENTRATION EINES BESTIMMTEN LEBENSMITTELS UND/ODER BIOLOGISCHEN MEDIUMS MIT FETTTRÖPFCHEN

METHOD FOR REDUCING THE BACTERIAL CONTENT OF A FOOD AND/OR BIOLOGICAL MEDIUM OF INTEREST CONTAINING LIPID DROPLETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2009 FR 0958960**

(43) Date de publication de la demande:
**24.10.2012 Bulletin 2012/43**

(73) Titulaire: **Institut National de la Recherche Agronomique (INRA)**
**75341 Paris Cedex 07 (FR)**

(72) Inventeurs:
• **FAUQUANT, Jacques**
  **F-35137 Pleumeleuc (FR)**
• **ROBERT, Benoît**
  **F-35850 Romille (FR)**
• **LOPEZ, Christelle**
  **35740 Pace (FR)**

(74) Mandataire: **Jacobacci Coralis Harle**
**14-16 Rue Ballu**
**75009 Paris (FR)**

(56) Documents cités:
WO-A1-03/054175     FR-A1- 2 692 441
FR-A1- 2 776 208     JP-A- 3 266 921
JP-A- 5 023 072

• THIEBAUD M ET AL: "High-pressure homogenisation of raw bovine milk. Effects on fat globule size distribution and microbial inactivation.", INTERNATIONAL DAIRY JOURNAL, vol. 13, no. 6, 2003, pages 427-439, XP002594166, ISSN: 0958-6946
• MUKHOPADHYAY S ET AL: "Effectiveness of cross-flow microfiltration for removal of microorganisms associated with unpasteurized liquid egg white from process plant.", JOURNAL OF FOOD SCIENCE, vol. 74, no. 6, août 2009 (2009-08), pages M319-M327, XP002630978,
• SABOYA L V ET AL: "Current developments of microfiltration technology in the dairy industry.", LAIT, vol. 80, no. 6, 2000, pages 541-553, XP002594167,

**Description**

## DOMAINE DE L'INVENTION

La présente invention se rapporte au domaine de l'épuration microbienne de milieux alimentaires et/ou biologiques contenant des lipides.

L'invention concerne plus précisément un procédé de traitement pour réduire la teneur bactérienne, et de préférence encore pour la stérilisation, d'un milieu alimentaire et/ou biologique contenant des gouttelettes lipidiques, de préférence en suspension.

Ce procédé de traitement selon l'invention est tout particulièrement adapté pour l'épuration microbienne des laits de mammifères, qui contiennent des gouttelettes lipidiques sous forme de globules gras.

## ART ANTERIEUR

La plupart des milieux alimentaires et/ou biologiques contiennent des bactéries qui doivent être éliminées, au moins en partie, en vue de leur conservation et/ou de leur consommation.

Dans certains cas, cette élimination bactérienne est avantageusement obtenue au moyen de traitements thermiques.

Selon l'effet bactéricide souhaité, la température de conservation après traitement (température ambiante ou 4°C) et/ou la durée de conservation recherchée (jours, mois), le milieu est porté à une température plus ou moins élevée, pendant des périodes de temps plus ou moins longues.

Malheureusement, ces traitements thermiques génèrent en pratique des effets négatifs sur les qualités organoleptiques et nutritionnelles de certains milieux ; et ils ne sont pas toujours entièrement satisfaisants pour la conservation.

C'est notamment le cas de certains milieux contenant des gouttelettes lipidiques.

Par exemple, le lait de consommation (généralement le lait de vache) est habituellement soumis à des traitements thermiques du type UHT (Ultra Haute Température) ou pasteurisation, pour réduire plus ou moins efficacement sa teneur bactérienne.

Dans les traitements thermiques dits UHT, le lait est amené, pendant deux à quatre secondes, à une température comprise entre 120°C et 150°C.

Ce traitement thermique a l'inconvénient de modifier irréversiblement certains composants du lait, principalement les protéines, le lactose et les minéraux. Ces laits UHT présentent un goût de « cuit » qui déplait à certains consommateurs, particulièrement à ceux des pays habitués à consommer du lait frais. De plus, des travaux récents ont montré que les traitements thermiques du type UHT altèrent la digestibilité et les propriétés nutritionnelles des constituants du lait (Lacroix et al., 2008). Enfin, les traitements thermiques UHT rendent le lait inapte à sa transformation en fromage.

Le lait pasteurisé classique (72 à 85°C pendant 20 secondes) n'a plus, quant à lui, les faveurs des industriels ni de la grande distribution (5 à 6 jours en rayons, avec des coûts importants de transport, de stockage et de gestion). Les industriels, les distributeurs et les consommateurs seraient intéressés par des laits frais ayant une durée de conservation allongée par rapport celle des laits frais pasteurisés actuels (à savoir une durée de conservation d'au moins 9 jours).

Au regard des inconvénients liés à l'emploi de tels traitements thermiques, la microfiltration constituerait une alternative particulièrement intéressante, qui permettrait une épuration microbienne efficace de ces milieux alimentaires et/ou biologiques d'intérêt, contenant des gouttelettes lipidiques.

Cette technique d'épuration a notamment l'intérêt de limiter les élévations de température (la température du milieu reste généralement inférieure à 57°C). De plus, les micro-organismes, spores et cellules d'origine mammaire (ou cellules somatiques) sont retenus physiquement par la membrane de microfiltration employée (Saboya et Maubois, 2000).

Cependant, les procédés actuels de microfiltration impliquent généralement un nombre important d'étapes, présentent un coût de revient élevé ou bien nécessitent des nettoyages fréquents à cause du colmatage lié au mauvais passage des composants du milieu au travers de la membrane de microfiltration.

En effet, les membranes aptes à retenir les bactéries comportent des pores dont le seuil de coupure est inférieur à 1,4 $\mu$m (Saboya et Maubois, 2000) ; or cette taille des pores conduit également à une rétention de nombreux autres composants d'intérêt alimentaire ou biologique, présentant une taille supérieure à ce seuil de coupure de la membrane.

Dans le cas du lait de mammifère par exemple, ce sont les bactéries qui seraient retenues, mais aussi les globules gras (diamètre compris entre 0,2 et 15 $\mu$m, avec un diamètre moyen de 4 $\mu$m) et au moins une partie des protéines.

Les pores de ces membranes sont alors rapidement colmatés par la matière retenue ; le débit à travers la membrane décline rapidement et la membrane doit être fréquemment nettoyée.

De plus, comme évoqué ci-dessus, une épuration bactérienne du lait de mammifère par microfiltration, sans traitement préalable de ce lait, provoquerait la rétention des globules gras et des protéines sur la membrane, ce qui affecterait les qualités biochimiques du produit final.

Dans le cas du lait, pour limiter ces problèmes de colmatage, la plupart des procédés d'épuration par microfiltration incluent :

- tout d'abord, une séparation du lait écrémé et de la crème,
- et ensuite, un traitement séparé du lait écrémé, d'une part, et de la crème, d'autre part.

Pour cela, le lait est préalablement écrémé par centrifugation : la phase aqueuse du lait (dénommée « lait écrémé », contenant les protéines, les minéraux et le lactose) est séparée de la crème qui contient les globules gras (diamètre moyen d'environ 4 $\mu$m).

La partie « lait écrémé » est ensuite microfiltrée pour retenir sur la membrane les microorganismes, les spores et les cellules somatiques. La crème est, de son côté, traitée thermiquement, par exemple par stérilisation UHT (120 à 150°C pendant 2 à 4 secondes) ou pasteurisation (72 à 85°C pendant 20 secondes).

La crème est ensuite réincorporée au lait écrémé microfiltré dans des proportions variables selon le taux de matière grasse que l'on veut obtenir dans le lait de consommation (par exemple en France, 15 ou 36 g/litre de matière grasse pour le lait demi-écrémé ou entier, respectivement).

L'ensemble est ensuite homogénéisé avec éventuellement un traitement thermique final, suivi d'un conditionnement aseptique.

Un procédé de ce genre, dans lequel le lait écrémé et la crème sont traités séparément, est décrit par exemple dans le document FR-2 692 441.

Ce document préconise en plus d'homogénéiser le lait écrémé, avant de le soumettre à une microfiltration du type dynamique.

Cette technique de microfiltration dynamique consiste à déplacer la surface de la membrane de microfiltration, ou un corps solide près de cette surface, de façon à générer un phénomène de cisaillement limitant la vitesse de colmatage de la membrane.

Cependant, ce type de procédé n'est pas entièrement intéressant en ce qu'il implique obligatoirement une séparation du lait écrémé et de la crème, puis un traitement séparé du lait écrémé et de la crème. L'industrialisation d'un tel procédé s'avère ainsi particulièrement complexe et onéreux.

De manière alternative, ce document FR-2 692 441, et le document FR-2 699 792, divulguent encore un procédé pour la production d'un lait ayant une teneur bactérienne réduite par rapport à un lait brut, dans lequel le lait, entier ou écrémé, est homogénéisé avant de le soumettre à une telle microfiltration du type dynamique.

En pratique, le lait est passé au travers d'un homogénéisateur, pour la mise en oeuvre d'une unique opération d'homogénéisation au cours de laquelle est obtenue une réduction de la taille des gouttelettes lipidiques du milieu.

Plus précisément, dans le document FR-2 692 441, l'opération d'homogénéisation du lait, entier ou écrémé, est mise en oeuvre par son passage au sein d'un unique homogénéisateur à double étage.

Le document FR-2 699 792 précise quant à lui uniquement que le lait passe dans l'homogénéisateur pour réduire la taille des gouttelettes lipidiques composant l'émulsion.

Or, tel que précisé dans le document FR-2 699 792, la mise en oeuvre de ce procédé s'accompagne de phénomènes de colmatage rapides et fréquents (survenant après seulement 60 à 180 minutes, d'après les exemples présentés), liés au mauvais passage de la matière grasse au travers de la membrane.

Afin de pallier ces inconvénients liés au colmatage de la membrane de filtration, le document FR-2 699 792 préconise des nettoyages fréquents des membranes de microfiltration dynamique, ce qui s'avère être en pratique un frein majeur à l'utilisation de ce procédé à l'échelle industrielle.

D'autre part, le document JP-A-5 023072 présente un exemple dans lequel le lait entier à traiter est passé au travers d'un homogénéisateur à double étage, pour effectuer une unique opération d'homogénéisation conduisant à une réduction de la taille des gouttelettes lipidiques. Ce lait homogénéisé est ensuite traité par microfiltration au moyen d'une membrane Membralox de 0,1 m$^2$, dont les pores ont une section moyenne de 1,4 $\mu$m.

Ce dernier procédé n'est pas optimal sur le plan du taux de perméation au travers de la membrane de microfiltration. De plus, il est déconseillé d'employer une membrane de microfiltration dont les pores ont une taille inférieure à 1 $\mu$m, pour prévenir une rétention totale des gouttelettes lipidiques.

Il existe ainsi un besoin pour de nouveaux procédés qui apporteraient une solution au problème du traitement des milieux alimentaires et/ou biologiques contenant des gouttelettes lipidiques, avantageusement en suspension, en particulier du genre lait entier ou partiellement écrémé, autorisant un passage efficace, et sur une longue durée, de la matière grasse au travers d'une membrane de microfiltration tout en assurant son épuration microbienne (voire sa stérilisation).

## RESUME DE L'INVENTION

Il est fourni selon l'invention de nouveaux procédés pour réduire la teneur bactérienne d'un milieu alimentaire et/ou biologique d'intérêt contenant des gouttelettes lipidiques, avantageusement des gouttelettes lipidiques en suspension ou en dispersion, par une technique de microfiltration.

Le procédé selon l'invention comprend les étapes suivantes :

(a) une étape d'homogénéisation appliquée audit milieu d'intérêt de manière à obtenir un milieu d'intérêt homogénéisé, ladite étape (a) générant, dans ledit milieu d'intérêt homogénéisé, des gouttelettes lipidiques (avantageusement en suspension) ayant un diamètre adapté pour permettre ensuite leur passage à travers une membrane de microfiltration ayant un seuil de coupure déterminé,

(b) une étape de microfiltration appliquée audit milieu d'intérêt homogénéisé, obtenu à l'étape (a), sur une membrane ayant un seuil de coupure permettant le passage dans le perméat de microfiltration d'au moins une partie desdites gouttelettes lipidiques tout en retenant dans le rétentat de microfiltration au moins une partie des bactéries, et

(c) la récupération dudit perméat issu de l'étape (b), ledit perméat constituant un milieu alimentaire et/ou biologique homogénéisé dont la teneur bactérienne est réduite par rapport au milieu d'intérêt de départ (avant la mise en oeuvre dudit procédé).

Le procédé selon l'invention est caractérisé par le fait que :

- d'une part, l'étape d'homogénéisation (a) comprend au moins deux opérations d'homogénéisation successives appliquées sur ledit milieu d'intérêt à une pression comprise entre 300 bar et 950 bar (de préférence encore entre 500 et 950 bar), lesquelles opérations d'homogénéisation conduisent chacune à une réduction de la taille desdites gouttelettes lipidiques, et
- d'autre part, l'étape de microfiltration (b) consiste en une étape de microfiltration tangentielle.

Dans un mode de réalisation préféré, les opérations d'homogénéisation successives, mises en oeuvre lors de l'étape (a), sont au nombre de deux ou trois, et de préférence au nombre de deux.

Encore selon un mode de réalisation préféré, l'étape d'homogénéisation (a) est mise en oeuvre selon des paramètres assurant un maintien de la température du milieu d'intérêt dans un domaine de valeur compris entre 30°C et 100°C tout au long de ladite étape d'homogénéisation (a), de préférence compris entre 30°C et 70°C, de préférence encore entre 40°C et 70°C, et de préférence encore entre 45°C et 65°C.

Dans ce cas, lors de l'étape d'homogénéisation (a), une opération de refroidissement est avantageusement appliquée au milieu d'intérêt entre deux opérations d'homogénéisation successives, de sorte à autoriser l'augmentation de sa température lors de l'opération d'homogénéisation suivante, tout en assurant le maintien de ladite température dans le domaine de valeur thermique recherché.

Toujours selon une caractéristique de l'invention, les opérations d'homogénéisation de l'étape d'homogénéisation (a) vérifient avantageusement le paramètre suivant : une température d'entrée du milieu d'intérêt, avant chaque homogénéisation, comprise entre 30°C et 90°C, de préférence entre 30°C et 65°C, et de préférence encore de l'ordre de 45°C.

En particulier en vue d'une étape de microfiltration tangentielle (b) sur une membrane ayant un seuil de coupure de l'ordre de 1,4 $\mu$m, l'étape d'homogénéisation (a) comprend avantageusement deux opérations d'homogénéisation successives, chacune mise en oeuvre avec une pression comprise entre 300 bar et 900 bar, et de préférence encore de l'ordre de 600 bar.

D'autre part, en particulier en vue d'une étape de microfiltration tangentielle (b) sur une membrane ayant un seuil de coupure de l'ordre de 0,8 $\mu$m, l'étape d'homogénéisation (a) comprend deux opérations d'homogénéisation successives, chacune mise en oeuvre avec une pression comprise entre 700 bar et 900 bar, et de préférence encore de l'ordre de 800 bar, utile.

Encore selon une caractéristique, l'étape de microfiltration tangentielle (b) est avantageusement mise en oeuvre sur une membrane ayant un seuil de coupure compris entre 0,5 $\mu$m et 1,8 $\mu$m, de préférence entre 0,5 $\mu$m et 1,5 $\mu$m, et de préférence encore entre 0,5 $\mu$m et 1 $\mu$m.

Dans ce cas, pour réduire partiellement la teneur bactérienne du milieu alimentaire et/ou biologique d'intérêt :

- l'étape d'homogénéisation (a) est avantageusement mise en oeuvre de sorte qu'au moins 85 %, et de préférence au moins 95 %, des gouttelettes lipidiques aient un diamètre inférieur à 1 $\mu$m, et
- l'étape de microfiltration tangentielle (b) est avantageusement mise en oeuvre sur une membrane ayant un seuil de coupure compris entre 1 $\mu$m et 1,8 $\mu$m, et de préférence de l'ordre de 1,4 $\mu$m.

Pour stériliser le milieu alimentaire et/ou biologique d'intérêt:

- l'étape d'homogénéisation (a) est avantageusement mise en oeuvre de sorte qu'au moins 85 %, et de préférence au moins 95 %, des gouttelettes lipidiques aient un diamètre inférieur à 0,3 $\mu$m, et
- l'étape de microfiltration tangentielle (b) est mise en oeuvre sur une membrane ayant un seuil de coupure compris entre 0,3 $\mu$m et 0,9 $\mu$m, et de préférence de l'ordre de 0,8 $\mu$m.

Encore selon l'invention, lors de l'étape de microfiltration tangentielle (b), on utilise une membrane minérale adaptée à l'installation de microfiltration tangentielle mise en oeuvre.

Dans un mode de réalisation particulier, l'étape de microfiltration tangentielle (b) est avantageusement mise en oeuvre sur une seule membrane de microfiltration ou bien en cascade, c'est-à-dire en pratiquant au moins deux microfiltrations successives présentant chacune un facteur de concentration volumique propre.

Dans ce cas, l'étape de microfiltration tangentielle (b) est avantageusement mise en oeuvre en cascade, avec une première microfiltration mise en oeuvre selon un facteur de concentration volumique de l'ordre de 8 à 12 (de préférence de l'ordre de 10), et avec une seconde microfiltration mise en oeuvre selon un facteur de concentration volumique de l'ordre de 2 à 10 (de préférence de l'ordre de 2).

Encore selon l'invention, l'étape de microfiltration tangentielle (b) est avantageusement réalisée avec co-courant, de sorte à obtenir une pression transmembranaire uniforme sur la longueur de la membrane.

Toujours selon l'invention, les paramètres appliqués lors de l'étape de microfiltration tangentielle (b) vérifient avantageusement les conditions suivantes :

- une température pour le milieu homogénéisé ajustée entre 50°C et 60°C, et de préférence entre 56°C et 57°C,
- un débit de perméation compris entre 150 et 300 L/h/m$^2$,
- un facteur de concentration volumique compris entre 8 et 100, de préférence entre 8 et 25 (sur une seule membrane de microfiltration ou bien en cascade),
- une vitesse de balayage comprise entre 6 et 8 m/s, et
- une pression d'alimentation variant entre 1,5 et 2,5 bar.

Selon encore une caractéristique de l'invention, de préférence préalablement à l'étape d'homogénéisation (a), la teneur en matières grasses et/ou en protéines du milieu d'intérêt est avantageusement standardisée, de sorte à tenir compte notamment des rendements et des pertes à l'issue de l'étape de microfiltration (b) dudit procédé de traitement et aussi pour optimiser la taille des gouttelettes lipidiques.
Le rapport protéines / matière grasse est avantageusement standardisé selon une valeur comprise entre 0,3 et 1, et de préférence selon un rapport de l'ordre de 0,5 ou 0,8.

Encore selon une caractéristique de l'invention, le perméat issu de l'étape de récupération (c) est avantageusement soumis à un traitement thermique final (par exemple du type pasteurisation ou inactivation enzymatique).
Ce traitement vise en particulier à détruire la population bactérienne résiduelle et/ou à inactiver les enzymes susceptibles d'altérer la qualité du produit issu de l'étape (c).

Selon encore une autre caractéristique, la ou les matières grasses constitutives des gouttelettes lipidiques contenues dans le milieu alimentaire et/ou biologique sont d'origine animale et/ou végétale.

Dans ce cas, à titre de milieu alimentaire, on traite avantageusement du lait de mammifère, de préférence du lait entier et de préférence encore du lait partiellement écrémé, dans lequel les gouttelettes lipidiques consistent en des globules gras.

Selon une alternative, à titre de milieu alimentaire, on traite avantageusement un produit issu du lait de mammifère, de préférence (i) la crème obtenue par concentration des globules gras d'un lait de mammifère ou (ii) un mélange contenant un ou plusieurs composants du lait (par exemple du lait écrémé, du lait partiellement écrémé ou du lait entier) et des gouttelettes lipidiques contenant de la matière grasse d'origine végétale et/ou animale (par exemple issue de poisson).

Dans le cas d'un traitement de la crème issue de lait de mammifère, les étapes suivantes sont avantageusement mises en oeuvre :

- préalablement à l'étape d'homogénéisation (a), ladite crème à traiter est enrichie en protéines du lait de sorte à obtenir un rapport protéines / matière grasse compris entre 0,3 et 1,
- l'étape d'homogénéisation (a) est mise en oeuvre sur ladite crème enrichie en protéines du lait,
- préalablement à l'étape de microfiltration tangentielle (b), ladite crème enrichie en protéines du lait et homogénéisée est diluée dans du lait écrémé.

La présente invention concerne encore un produit, à savoir un milieu alimentaire et/ou biologique homogénéisé et microfiltré, constitué par le perméat de microfiltration obtenu à l'issue du procédé selon l'invention.

Dans le cas d'un produit laitier ayant une teneur en matière grasse totale inférieure à 20 g/kg, de préférence de l'ordre de 10 à 20 g/kg (c'est-à-dire par exemple un lait de consommation dit «partiellement écrémé » et de préférence demi-écrémé (15 g/kg)), les paramètres vérifient avantageusement les caractéristiques suivantes :

- une population en gouttelettes lipidiques la plus importante en volume comprise dans un domaine s'étendant entre 0,12 et 0,15 $\mu$m,
- une valeur de $d_{4.3}$ comprise entre 0,12 et 0,16 $\mu$m,
- une valeur de $d_{3.2}$ comprise entre 0,10 et 0,12 $\mu$m,
- au moins 95% des gouttelettes lipidiques ont une taille maximale de 0,3 $\mu$m, et
- une teneur en protéines solubles dont le taux de dénaturation est inférieur à 10 %.

Dans le cas d'un produit laitier ayant une teneur en matière grasse totale inférieure à 40 g/kg, de préférence de l'ordre de 10 à 40 g/kg (de préférence un lait de consommation dit « entier » ou un lait infantile ou un lait de croissance), les paramètres vérifient avantageusement les caractéristiques suivantes :

- une population en gouttelettes lipidiques la plus importante en volume comprise dans un domaine s'étendant entre 0,14 et 0,17 $\mu$m,
- une valeur de $d_{4.3}$ comprise entre 0,15 et 0,35 $\mu$m,
- une valeur de $d_{3.2}$ comprise entre 0,12 et 0,16$\mu$m,
- au moins 95% des gouttelettes lipidiques ont une taille maximale de 1 $\mu$m, et
- une teneur en protéines solubles dont le taux de dénaturation est inférieur à 10 %.

Sur le plan de la teneur bactérienne en flore totale, les produits laitiers obtenus par le procédé selon l'invention comportent avantageusement moins de 50 Unité Formant une Colonie (ou « UFC ») par millilitre, de préférence moins de 10 UFC / mL (en particulier à l'issue d'une microfiltration tangentielle sur membrane de 1,4$\mu$m), et de préférence encore moins de 1 UFC / mL (en particulier à l'issue d'une microfiltration tangentielle sur membrane de 0,8$\mu$m).

La présente invention porte encore sur une composition comprenant un produit tel que défini ci-dessus.

La présente invention porte également sur l'installation pour la mise en oeuvre du procédé selon l'invention.

## DESCRIPTIONS DES FIGURES

**Figure 1 :** Schéma général du procédé selon l'invention, pour l'épuration microbienne d'un milieu d'intérêt contenant des gouttelettes lipidiques ;

**Figure 2 :** Schéma général du procédé selon l'invention, comportant une microfiltration préalable sur membrane 12 $\mu$m, une microfiltration sur deux types différents de membranes (avec un seuil de coupure de 0,8 et 1,4 $\mu$m, respectivement) et différents traitements thermiques finaux ;

**Figure 3** : Schéma d'un procédé de traitement d'un lait entier, pour l'obtention d'un lait demi-écrémé ;

**Figure 4** : Schéma d'un procédé alternatif de traitement d'un lait entier, pour l'obtention d'un lait demi-écrémé ;

**Figure 5 :** Schéma d'un procédé de traitement d'un lait entier, en vue de l'obtention d'un lait demi-écrémé, standardisé en matière grasse et en protéines ;

**Figure 6 :** Schéma d'un procédé de traitement d'un lait entier sans cellules somatiques, pour **l'obtention** d'un lait demi-écrémé ;

**Figure 7 :** Schéma d'un procédé d'obtention d'un lait entier sans cellules somatiques, partant d'un lait entier ;

**Figure 8 :** Schéma d'un procédé d'obtention d'un lait entier, partant d'un lait entier ;

**Figure 9 :** Schéma d'un procédé alternatif d'obtention d'un lait de consommation après homogénéisation d'une crème enrichie en protéines ;

**Figure 10 :** Schéma d'un procédé d'obtention d'un lait infantile ou lait de croissance ;

**Figures 11 à 13 :** Effet de la pression d'homogénéisation et du nombre d'homogénéisation sur le pourcentage de gouttelettes lipidiques respectivement supérieures à 0,3 $\mu$m, 0,5 $\mu$m et 0,8 $\mu$m dans le produit d'intérêt après homogénéisation ; Légende : (1) homogénéisation une fois, (2) homogénéisation deux fois ;

**Figure 14 :** Evolution de la pression transmembranaire (en bar) au cours du temps (en min), lors d'une microfiltration tangentielle sur une membrane de 0,8 $\mu$m de lait cru standardisé en matière grasse (20,75 g/kg, par ajout de lait écrémé dans du lait entier) avec une teneur en matière azotée totale de 33,54 g/kg, préalablement homogénéisé deux fois à 370 bar (T entrée = 50°C) ;

**Figure 15 :** Distribution (en % volume) de tailles des gouttelettes lipidiques (en $\mu$m) après deux homogénéisations

successives à 370 bar (température d'entrée à 50°C) puis une microfiltration tangentielle à 0,8μm, d'un lait cru standardisé en matière grasse (20,75 g/kg, par ajout de lait écrémé dans du lait entier) avec une teneur en matière azotée totale de 33,54 g/kg, préalablement homogénéisé ; Légende : (1) Lait standardisé ; (2) Lait homogénéisé 1 fois ; (3) Lait homogénéisé 2 fois ; (4) Rétentat de microfiltration (prélevé après 6 h de microfiltration) ; (5) Microfiltrat (prélevé après 6 h de microfiltration) ;

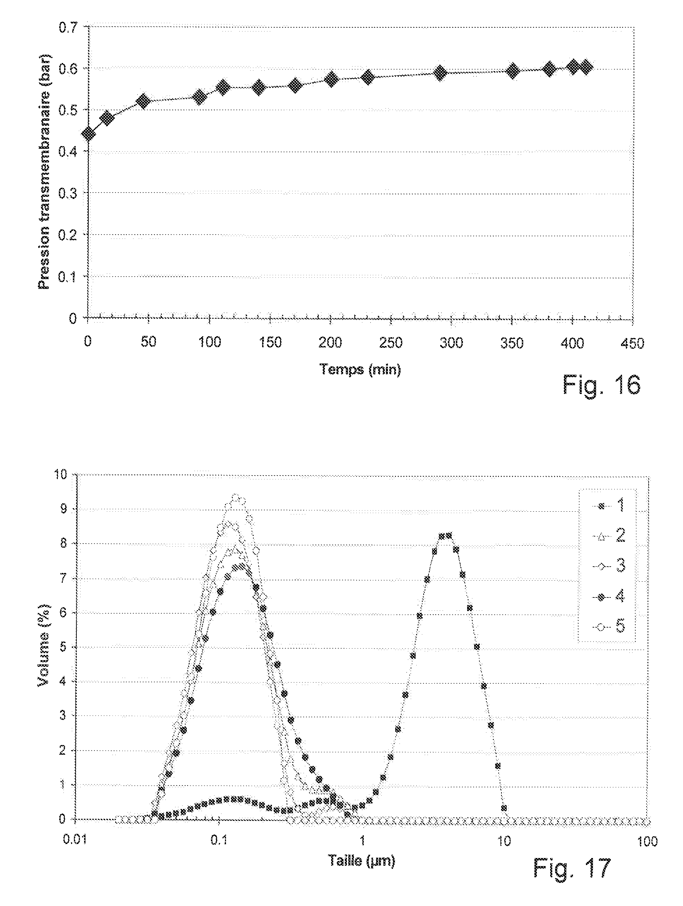

**Figure 16 :** Evolution de la pression transmembranaire (en bar) au cours du temps (en min), lors d'une microfiltration tangentielle à 0,8 μm de lait cru standardisé en matière grasse (17,5 g/kg, par ajout de crème au lait) avec une teneur en matière azotée totale de 37,7 g/kg (ajout de rétentat de microfiltration de lait obtenu à 0,1 μm), préalablement homogénéisé deux fois à 800 bar (T entrée = 45°C) ;

**Figure 17 :** Distribution (en volume %) de tailles des gouttelettes lipidiques (en μm) après deux homogénéisations successives à 800 bar (température d'entrée à 45°C) puis une microfiltration tangentielle à 0,8μm, d'un lait entier cru standardisé en matière grasse (17,5 g/kg, par ajout de crème au lait) avec une teneur en matière azotée totale de 37,7 g/kg (ajout de rétentat de microfiltration de lait obtenu à 0,1 μm) ; Légende : (1) Lait standardisé ; (2) Lait homogénéisé 1 fois ; (3) Lait homogénéisé 2 fois ; (4) Rétentat 0,8 μm (prélevé après 7 h de microfiltration) ; (5) Microfiltrat 0,8 μm (prélevé après 7 h de microfiltration) ;

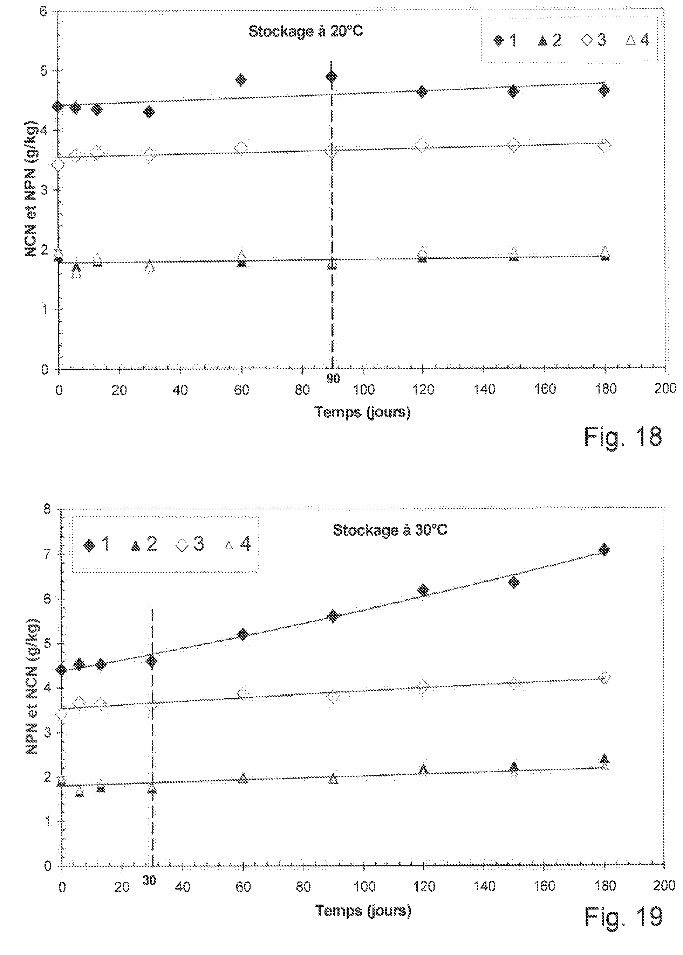

**Figure 18 :** Evolution des concentrations en NPN et en NCN (en g/kg) de laits conservés à 20°C au cours du temps (en jours) ; Légende: (1) NCN du lait traité à 96°C pendant 6 secondes ; (2) NPN du lait traité à 96°C pendant 6 secondes ; (3) NCN du lait traité à 140°C pendant 4 secondes ; (4) NPN du lait traité à 140°C pendant 4 secondes ;

**Figure 19 :** Evolution des concentrations en NPN et en NCN (en g/kg), de laits conservés à 30°C en fonction du temps (en jours) ; Légende : (1) NCN du lait traité à 96°C pendant 6 secondes ; (2) NPN du lait traité à 96°C pendant 6 secondes ; (3) NCN du lait traité à 140°C pendant 4 secondes ; (4) NPN du lait traité à 140°C pendant 4 secondes ;

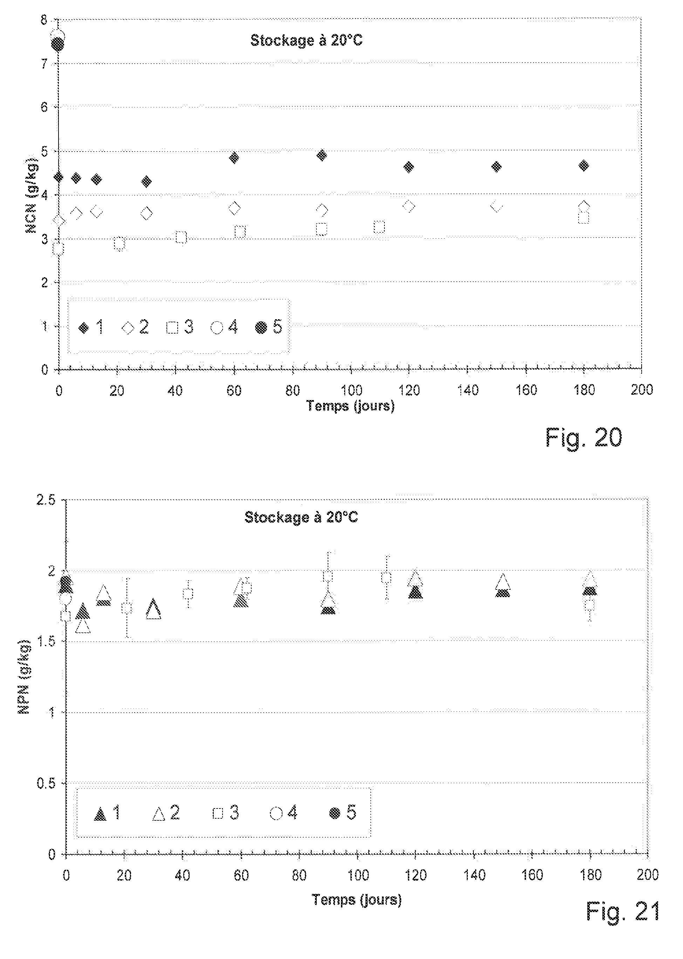

**Figure 20 :** Comparaison de l'évolution de la concentration en NCN (en g/kg) en fonction du temps (en jours) au cours d'un stockage à 20°C, entre les laits expérimentaux et des laits industriels UHT (n=4) ; Légende : (1) NCN du lait traité à 96°C pendant 6 sec ; (2) NCN du lait traité à 140°C pendant 4 sec ; (3) NCN des laits industriels UHT ; (4) NCN du lait sans traitement thermique ; (5) NCN du lait homogénéisé et microfiltré sans traitement thermique ;

**Figure 21 :** Comparaison de l'évolution de la concentration en NPN (en g/kg) en fonction du temps (en jours) au cours d'un stockage à 20°C, entre les laits expérimentaux et des laits industriels UHT (n=4) ; Légende : (1) NPN du lait traité à 96°C pendant 6 sec ; (2) NPN du lait traité à 140°C pendant 4 sec ; (3) NPN des laits industriels UHT ; (4) NPN du lait sans traitement thermique ; (5) NPN du lait homogénéisé et microfiltré sans traitement thermique ;

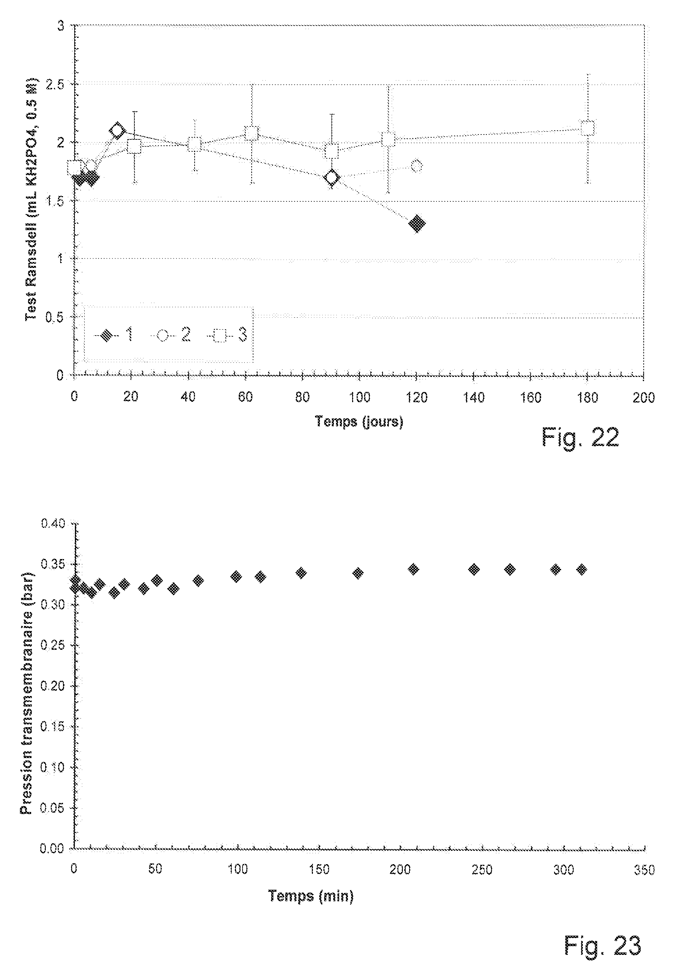

**Figure 22 :** Test de Ramsdell, comparaison des laits expérimentaux et des laits industriels UHT conservés à 20°C (mL de $KH_2PO_4$, 0,5 M en fonction du temps en jours) ; Légende : (1) Lait traité thermiquement à 96°C pendant 6 secondes ; (2) Lait traité thermiquement à 140°C pendant 4 secondes ; (3) Lait industriel UHT (n=5) ;

**Figure 23 :** Evolution de la pression transmembranaire (en bar) au cours du temps (en min), lors d'une microfiltration tangentielle sur 1,4 μm d'un lait standardisé à 17,5 g/kg de matière grasse et homogénéisé deux fois à 600 + 60 bar (T entrée = 45°C) ;

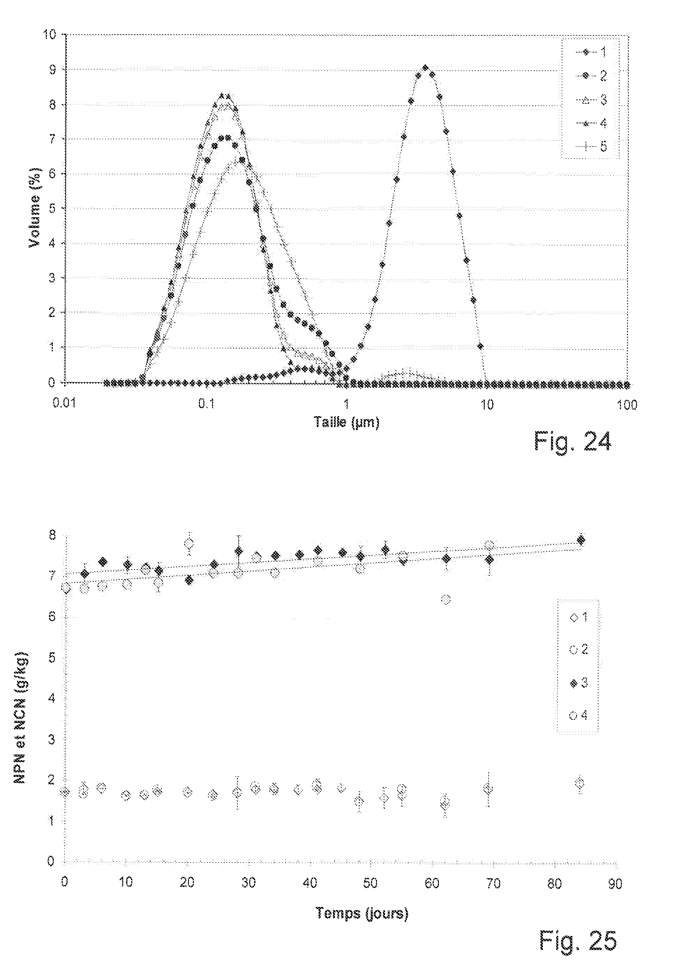

**Figure 24 :** Distribution (en volume %) de tailles de gouttelettes lipidiques (en μm) après deux homogénéisations successives à 600 + 60 bar puis une microfiltration tangentielle sur 1,4 μm d'un lait cru standardisé en matière grasse à 17,5 g/kg ; Légende : (1) Lait standardisé, (2) Lait homogénéisé 1 fois, (3) Lait homogénéisé 2 fois, (4) Microfiltrat 1,4 μm (lait microfiltré), (5) Rétentat 1,4 μm ;

**Figure 25 :** Evolution des concentrations en NCN et en NPN (en g/kg) en fonction du temps (en jours) au cours du stockage à 5 ± 1°C des laits microfiltrés sur 1,4 μm. Légende : (1) NPN du lait non traité thermiquement, (2) NPN du lait traité thermiquement à 72°C pendant 18 secondes, (3) NCN du lait non traité thermiquement, (4) NCN du lait traité thermiquement à 72°C pendant 18 secondes ;

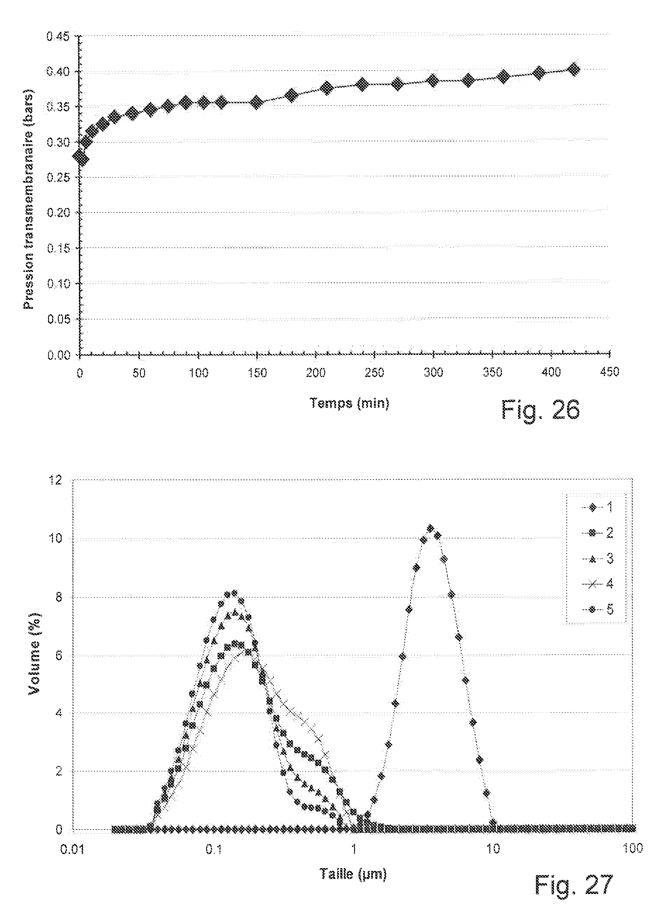

**Figure 26 :** Evolution de la pression transmembranaire (en bar) au cours du temps (en min), lors d'une microfiltration tangentielle sur 1,4 μm d'un lait standardisé à 38 g/kg de matière grasse et homogénéisé deux fois à 600 + 60 bar (T entrée = 45°C) ;

**Figure 27 :** Distribution (en volume %) de tailles de gouttelettes lipidiques (en μm) après deux homogénéisations successives à 600 + 60 bar puis une microfiltration tangentielle sur 1,4 μm d'un lait cru standardisé en matière grasse à 38 g/kg ; Légende : (1) Lait standardisé, (2) Lait homogénéisé 1 fois, (3) Lait homogénéisé 2 fois, (4) Rétentat 1,4 μm, (5) Microfiltrat 1,4 μm ;

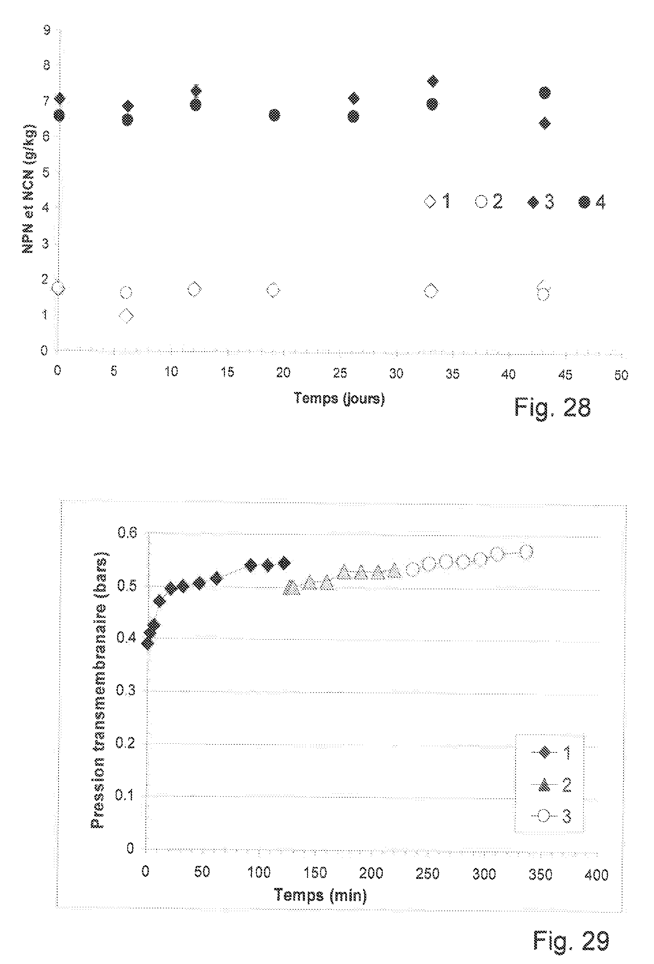

**Figure 28 :** Evolution des concentrations en NCN et en NPN (en g/kg) en fonction du temps (en jours) au cours du stockage à 5 ± 1°C des laits microfiltrés sur 1,4 μm (laits entiers). Légende : (1) NPN du lait non traité thermiquement, (2) NPN du lait traité thermiquement à 72°C pendant 15 secondes, (3) NCN du lait non traité thermiquement, (4) NCN du lait traité thermiquement à 72°C pendant 15 secondes ;

**Figure 29 :** Evolution de la pression transmembranaire (en bar) au cours du temps (en min), lors d'une microfiltration tangentielle sur 0,8 μm d'un lait standardisé à 18 g/kg de matière grasse et homogénéisé deux fois à 800 + 80 bar (T entrée = 45°C). (1) Facteur de concentration volumique FCV = 10 et débit de perméation = 200 L/h/m², (2) FCV = 15 et débit de perméation = 150 L/h/m$^2$, (3) FCV = 20 et débit de perméation = 150 L/h/m$^2$ ;

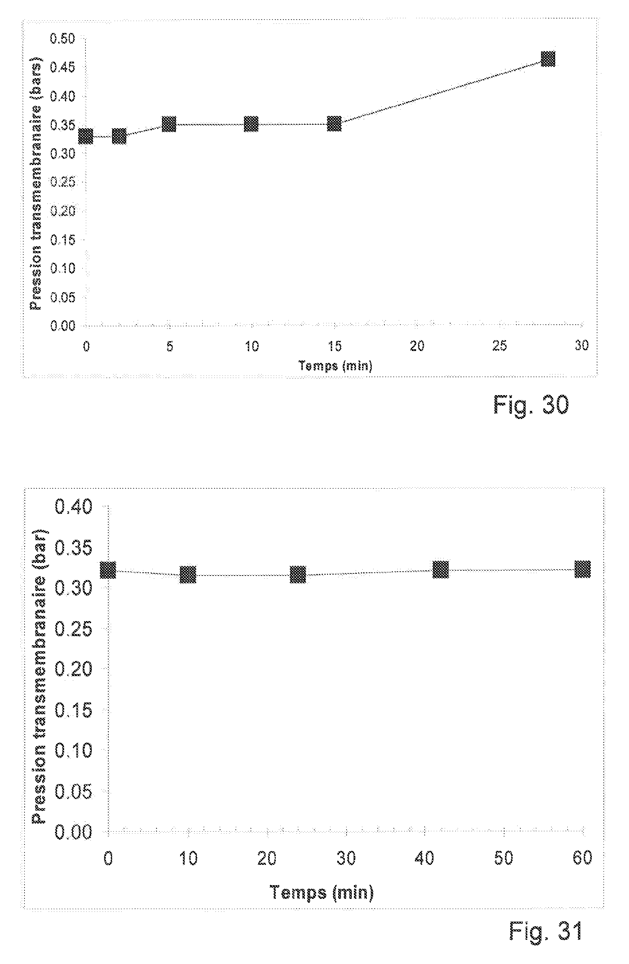

**Figure 30 :** Evolution de la pression transmembranaire (en bar) au cours du temps (en min), lors d'une microfiltration tangentielle sur 1,4 $\mu$m du rétentat FCV10 obtenu après une première microfiltration d'un lait standardisé à 38 g/kg de matière grasse et homogénéisé deux fois à 640 + 60 bar ;

**Figure 31 :** Evolution de la pression transmembranaire (en bar) au cours du temps (en min), lors d'une microfiltration tangentielle sur 1,4 $\mu$m du rétentat FCV10 obtenu après une première microfiltration d'un lait standardisé à 17,5 g/kg de matière grasse et homogénéisé deux fois à 640 + 60 bar ;

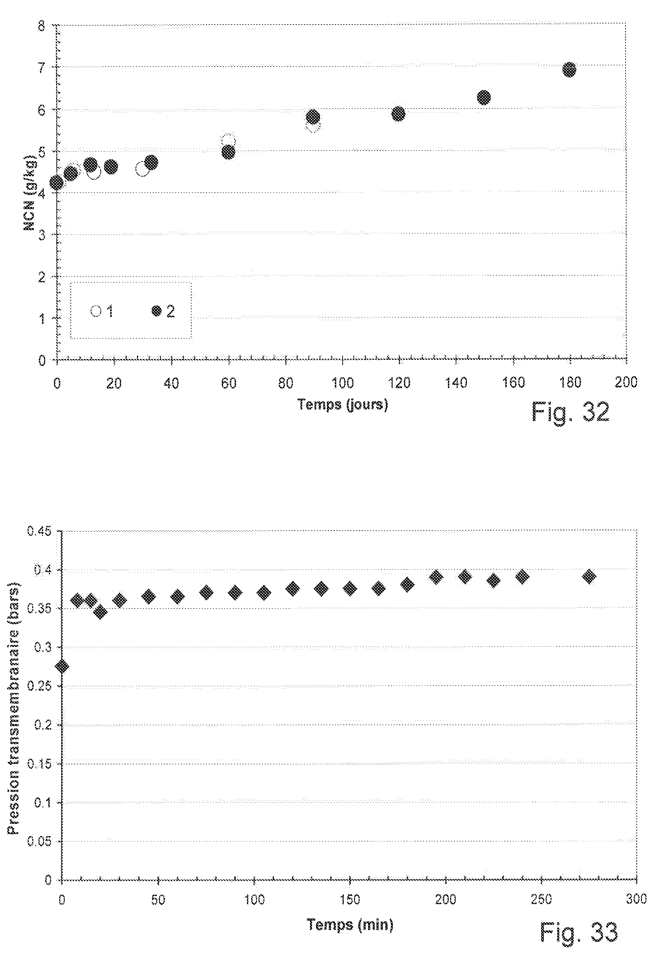

**Figure 32 :** Comparaison de l'évolution de la concentration en NCN (g/kg) en fonction du temps (en jours) au cours d'un stockage à 30°C, de différents laits expérimentaux traités thermiquement à 96°C pendant 6 secondes ; Légende : (1) Lait initial contenant des cellules somatiques ; (2) Lait microfiltré sur 12 $\mu$m pour éliminer les cellules somatiques avant le procédé ;

**Figure 33 :** Evolution de la pression transmembranaire (en bar) au cours du temps (en min) lors d'une microfiltration tangentielle sur une membrane de 1,4 $\mu$m d'une préparation à base de lait écrémé et de matière grasse végétale, préalablement émulsionnée puis homogénéisé 2 fois à 650 + 65 bar ;

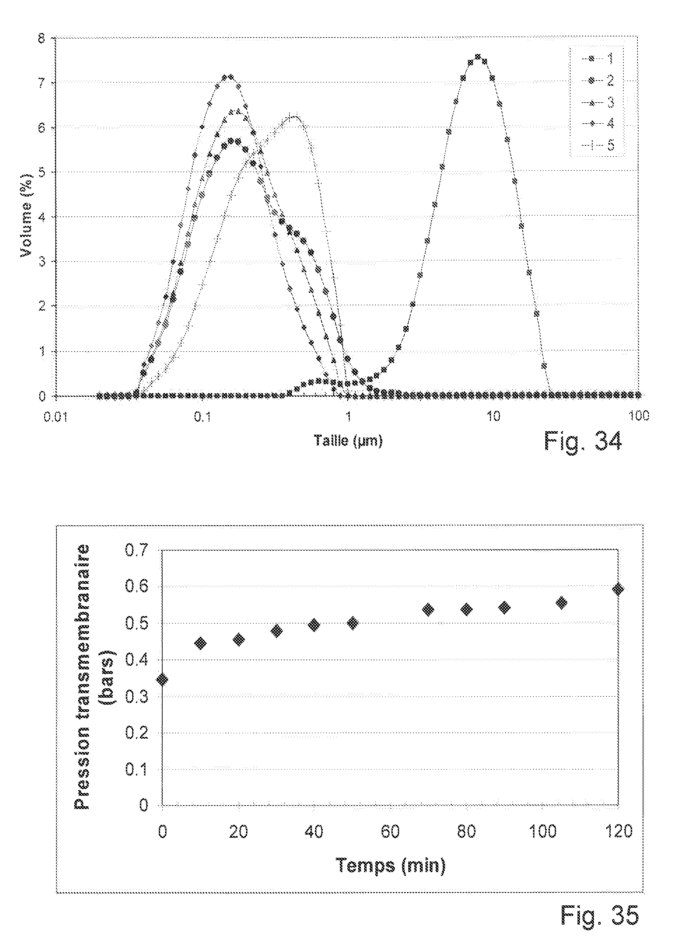

**Figure 34 :** Distribution (en volume %) de tailles de gouttelettes lipidiques (en $\mu$m) d'une préparation à bases de lait écrémé et de matière grasse végétale standardisée, émulsionnée, homogénéisée 2 fois à 650 + 65 bar puis microfiltrée sur 1,4 $\mu$m ; Légende: (1) Produit émulsionné, (2) Produit homogénéisé 1 fois, (3) Produit homogénéisé 2 fois, (4) Microfiltrat 1,4 $\mu$m, (5) Rétentat 1,4 $\mu$m ;

**Figure 35 :** Evolution de la pression transmembranaire (en bar) au cours du temps (en min) lors d'une microfiltration tangentielle sur une membrane de 0,8 $\mu$m d'une préparation à base de lait écrémé et de matière grasse végétale, préalablement émulsionnée puis homogénéisé 2 fois à 850 + 85 bar ;

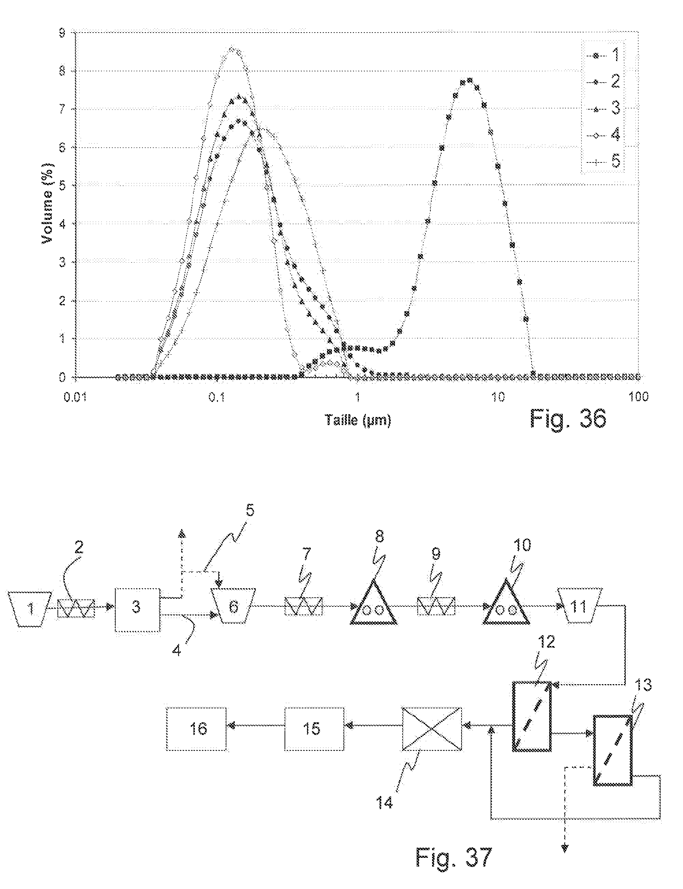

**Figure 36 :** Distribution (en volume %) de tailles de gouttelettes lipidiques (en $\mu$m) d'une préparation à bases de lait écrémé et de matière grasse végétale standardisée, émulsionnée, homogénéisée 2 fois à 850 + 85 bar puis microfiltrée sur 0,8 $\mu$m ; Légende: (1) Produit émulsionné, (2) Produit homogénéisé 1 fois, (3) Produit homogénéisé 2 fois, (4) Microfiltrat 0,8 $\mu$m, (5) Rétentat 0,8 $\mu$m ;

**Figure 37 :** Schéma fonctionnel d'une installation pour la mise en oeuvre du procédé selon l'invention

## DESCRIPTION DE L'INVENTION

Le demandeur s'est attaché à mettre au point de nouveaux procédés de traitement par microfiltration d'un milieu alimentaire et/ou biologique d'intérêt contenant des gouttelettes lipidiques, avantageusement en suspension, qui soient aptes à permettre une réduction de leur teneur bactérienne (voire une stérilisation) et dont les problèmes de colmatage soient réduits par rapport aux procédés de microfiltration antérieurs.

Ces procédés devraient de préférence être efficaces pour l'épuration microbienne du lait dit « entier » ou du lait partiellement écrémé, contenant des gouttelettes lipidiques sous forme de globules gras.

Dans ce contexte, le demandeur est parvenu à développer un procédé assurant une épuration microbienne effective, pouvant être mise en oeuvre en continu sur de longues durées (au moins 7 heures) avec un colmatage significativement réduit par rapport aux procédés de traitement de l'art antérieur.

Le demandeur montre que, de manière surprenante, ces avantages sont obtenus par un procédé de traitement comprenant la combinaison (a) d'une étape d'homogénéisation composée d'au moins deux opérations d'homogénéisation successives, lesdites opérations d'homogénéisation conduisant chacune à une réduction de la taille desdites gouttelettes lipidiques, puis (b) d'une étape de microfiltration du type microfiltration tangentielle, appliquée au milieu homogénéisé.

L'efficacité de ce procédé s'avère inattendue. En effet, les documents FR-2 699 792 et FR-2 692 441 précités présentent justement la microfiltration tangentielle de liquides contenant des gouttelettes lipidiques comme une technique particulièrement sensible aux problèmes de colmatage, provoquant alors un déclin rapide du flux de filtration ; ces documents dissuadent fortement l'homme du métier d'employer une telle technique de microfiltration tangentielle, et incitent expressément l'homme du métier à s'orienter vers les techniques de microfiltration dynamique.

Par ailleurs, bien que certains documents de l'art antérieur décrivent les procédés de traitement du lait incluant des opérations d'homogénéisation successives (par exemple Thiebaud et al., International Dairy Journal, 2003, vol 13, issue 6, p. 427 - 439), il n'est aucunement suggéré qu'une telle technique d'homogénéisation serait intéressante ou adaptée pour optimiser un procédé d'épuration microbienne par microfiltration, et encore moins son intérêt préalablement à la mise en oeuvre d'une microfiltration tangentielle.

En particulier, le document Thiebaud et al. (2003) préconise d'utiliser des homogénéisations à très haute pression pour provoquer la lyse des cellules de microorganismes et ainsi réduire la flore endogène revivifiable contaminant le lait.

Ainsi, ce document Thiebaud et al. (2003) ne vise aucunement un procédé intégrant une étape de microfiltration pour assurer une épuration microbienne.

Bien au contraire, l'épuration microbienne par microfiltration nécessite de préserver les cellules de microorganismes intactes, revivifiables ou non, afin qu'elles soient retenues physiquement lors de l'étape de microfiltration, de sorte que le perméat en soit dépourvu ou qu'il en contienne des teneurs fortement réduites.

Or, tel qu'indiqué ci-dessus, le document Thiebaud et al. (2003) propose d'employer les techniques d'homogénéisation pour lyser les cellules de microorganismes, ce qui empêcherait leur retenue par microfiltration et, en corollaire, rendrait ineffective une combinaison de cette technique d'homogénéisation avec un procédé de filtration.

En comparaison avec la technologie classique utilisant des traitements thermiques pour l'épuration microbienne des laits de consommation, l'invention permet :

a/ de produire un lait contenant de la matière grasse exempte de microorganismes et de cellules somatiques, l'avantage de la microfiltration étant d'éliminer physiquement les microorganismes et les cellules somatiques qui sont retenus sur les membranes, et

b/ d'assurer la préservation des qualités biochimiques, organoleptiques et nutritionnelles originelles des laits contenant de la matière grasse, qui sont habituellement altérées par les traitements à haute température.

Par rapport au lait écrémé épuré par microfiltration, et dans lequel la matière grasse a été ensuite ajoutée, l'invention permet :

a/ d'éliminer le circuit parallèle de traitement thermique de la crème, utilisé actuellement en industrie pour la fabrication du lait de consommation ;

b/ d'éviter les éventuels multiples traitements thermiques de la crème : avant l'écrémage, après écrémage, et après le mélange/homogénéisation avec le lait écrémé épuré, conduisant à une altération des vitamines liposolubles (vitamines A, D, E, K) qui sont thermosensibles, et

c/ d'assurer l'absence de cellules somatiques, de spores et de cadavres bactériens provenant du traitement thermique de la crème.

Eu égard aux procédés employant une microfiltration dynamique sur le lait entier, tel que décrit notamment dans le document FR-2 699 792, l'invention apporte l'intérêt de proposer un procédé industrialisable, en ce sens qu'il est apte à assurer une microfiltration efficace du milieu liquide d'intérêt, pendant de longues périodes (de préférence au moins 7 heures) et cela sans nettoyage fréquent venant interrompre le procédé (comparé aux nettoyages nécessaires toutes les deux à trois heures pour maintenir un débit suffisant, dans le document FR-2 699 792).

Dans le cas du lait de mammifère, ce procédé autorise avantageusement, d'une part, un rendement intéressant en termes de passage de la matière grasse et des protéines au travers de la membrane, à savoir de préférence d'au moins 70%, de préférence encore 85%, et de préférence encore de l'ordre de 90% et, d'autre part, une dénaturation limitée des protéines laitières, à savoir de préférence un taux de dénaturation des protéines solubles inférieur à 10%.

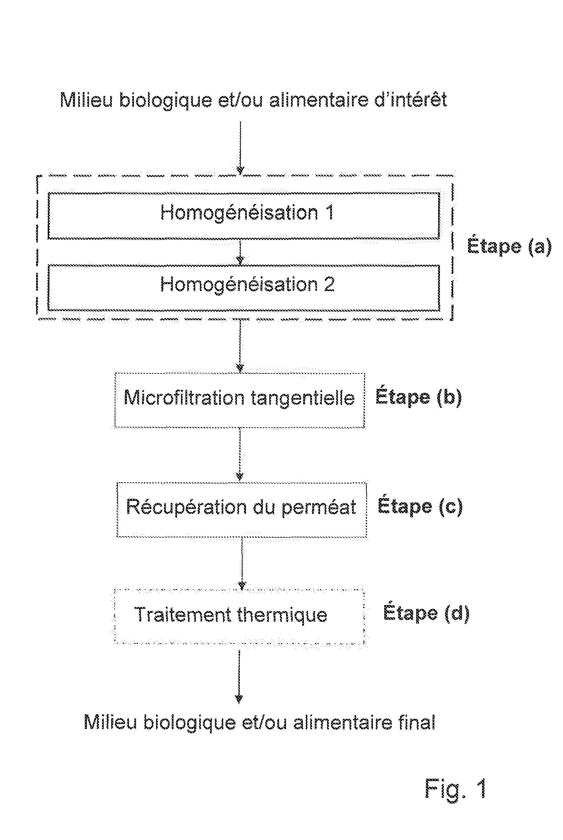

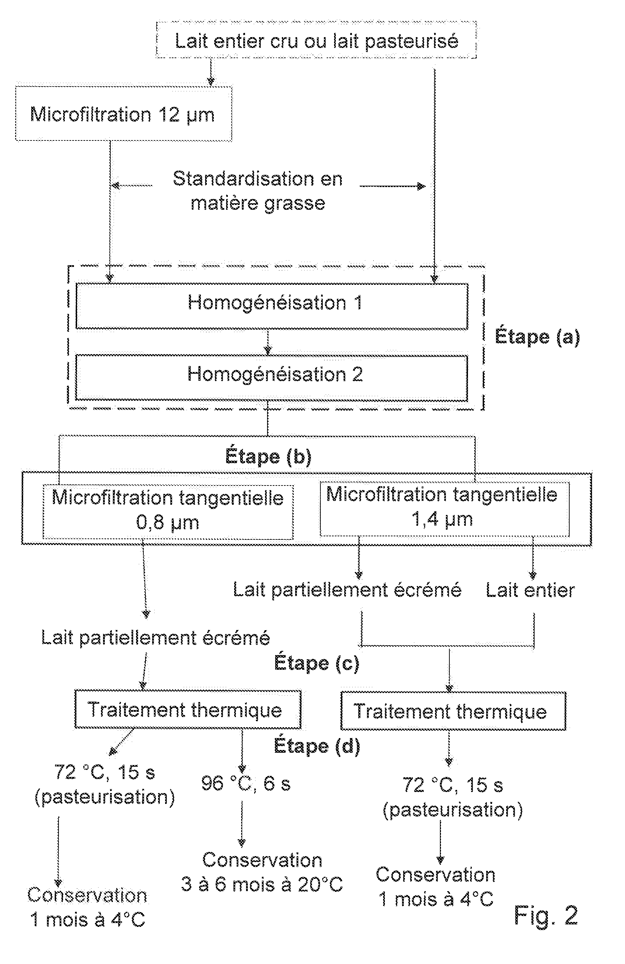

Tel qu'illustré sur les figures 1 et 2, le procédé de traitement selon l'invention comprend, partant d'un milieu biologique et/ou alimentaire d'intérêt contenant des gouttelettes lipidiques, avantageusement en suspension, au moins la succession des étapes suivantes :

(a) une étape d'homogénéisation appliquée audit milieu d'intérêt, de manière à générer, dans ledit milieu d'intérêt, des gouttelettes lipidiques ayant un diamètre adapté pour permettre ensuite leur passage à travers une membrane de microfiltration ayant un seuil de coupure déterminé, ladite homogénéisation comprenant au moins deux opérations d'homogénéisation successives appliquées sur ledit milieu d'intérêt, lesquelles opérations d'homogénéisation conduisent chacune à une réduction de la taille desdites gouttelettes lipidiques,

(b) une étape de microfiltration tangentielle appliquée audit milieu d'intérêt homogénéisé, issu de l'étape (a), sur une membrane ayant un seuil de coupure autorisant le passage dans le perméat d'au moins une partie desdites gouttelettes lipidiques tout en retenant dans le rétentat au moins une partie des bactéries, et

(c) la récupération dudit perméat issu de l'étape (b), ledit perméat constituant un milieu alimentaire et/ou biologique homogénéisé dont la teneur bactérienne est réduite par rapport au milieu d'intérêt avant la mise en oeuvre dudit procédé.

Ainsi, le microfiltrat, perméat ou filtrat de microfiltration (qui est la fraction du milieu d'intérêt traversant la membrane de microfiltration) se compose du milieu avec une teneur bactérienne nulle, ou au moins réduite (par rapport au milieu d'intérêt avant traitement) essentiellement sans changement des teneurs en matières grasses et en protéines.

La fraction du concentré ou rétentat (qui est la fraction du milieu retenue par la membrane de microfiltration) se compose du milieu ayant une teneur bactérienne accrue (par rapport au milieu d'intérêt avant son traitement).

De préférence, ce procédé conduit à une rétention, dans le rétentat, d'au moins 99,9% des bactéries dans le cas d'une microfiltration tangentielle sur une membrane de 1,4 $\mu$m ; et ce procédé conduit à une teneur bactérienne inférieure à 1 UFC / mL dans le microfiltrat pour une microfiltration tangentielle sur une membrane de 0,8 $\mu$m.

Pour préciser encore les différents aspects de la présente invention, seront détaillés successivement ci-dessous :

1/ les milieux alimentaires et/ou biologiques d'intérêt, particulièrement adaptés à la mise en oeuvre du procédé selon l'invention,

2/ les caractéristiques de l'étape d'homogénéisation, mise en oeuvre dans le cadre de la présente invention,

3/ les caractéristiques de l'étape de microfiltration tangentielle, mise en oeuvre dans le cadre de la présente invention,

4/ les caractéristiques d'une étape optionnelle pour le traitement thermique final du milieu homogénéisé et microfiltré,

5/ une forme de réalisation possible pour une installation de mise en oeuvre du procédé,

6/ les paramètres biochimiques spécifiques de produits laitiers obtenus à l'issue du procédé selon l'invention,

7/ des modes de réalisation particuliers du procédé de traitement selon l'invention, et

8/ des exemples illustrant l'intérêt et l'efficacité du procédé de traitement selon l'invention.

**Milieux alimentaires et/ou biologiques d'intérêt**

Le milieu alimentaire et/ou biologique d'intérêt consiste, de manière générale, en un liquide contenant des gouttelettes lipidiques avantageusement en suspension.

Ce milieu consiste encore avantageusement en une émulsion du type huile dans eau.

Pour pouvoir être soumis au procédé de l'invention, il convient que les milieux à traiter soient aptes à être pompés, de manière à pouvoir subir les étapes d'homogénéisation (a) et de microfiltration tangentielle (b).

Ces milieux traités peuvent donc être des émulsions, suspensions ou des liquides contenant des gouttelettes lipidiques. Il peut donc s'agir, comme indiqué précédemment, de milieux biologiques et/ou de milieux alimentaires, très préférentiellement le lait ou un produit issu du lait, tel que la crème, le lactosérum ou le babeurre, ou un mélange contenant un ou plusieurs laits ou un ou plusieurs composants du lait avec éventuellement une ou plusieurs matières grasses végétales et/ou animales.

Le lait peut provenir de n'importe quelle femelle laitière : vache, chèvre, brebis, ânesse, bufflesse, jument, femme, isolément ou en mélange. Le procédé de l'invention est tout particulièrement approprié au traitement du lait entier ou du lait partiellement écrémé (en particulier du lait cru).

Dans ce qui suit, l'invention a été généralement décrite en référence au lait. Celui-ci constitue, en effet, un cas particulièrement intéressant de liquide alimentaire et biologique pouvant être soumis au procédé selon l'invention.

La matière grasse contenue dans le lait produit par les mammifères (vaches, chèvres, brebis, bufflesses, juments, ânesses, femmes, etc.) est à plus de 95 % sous forme de gouttelettes lipidiques sphériques, appelées globules gras, visibles au microscope optique, ayant un diamètre variant entre 0,1 et 20 $\mu$m.

Pour ce qui est du lait de vache, leur diamètre moyen se situe entre 3 et 5 $\mu$m et leur dispersion gaussienne est majoritairement comprise entre 1 et 10 $\mu$m. Les globules gras les plus nombreux (80 %) ont un diamètre inférieur à 1 $\mu$m, mais ils ne représentent qu'une très faible proportion en poids de la matière grasse laitière. La distribution de taille des globules gras de lait varie légèrement avec la race, l'alimentation et le stade de lactation des vaches.

Les globules gras natifs du lait sont enveloppés par une membrane de structure complexe comprenant majoritairement (i) de nombreuses espèces protéiques (20 à 40 selon les auteurs) qui peuvent être glycosylées comme la butyrophiline, ou avoir des propriétés enzymatiques comme la xantine oxydase, (ii) des lipides complexes (phospholipides , sphingolipides et glycolipides, dont certains présentent des glycations complexes, notamment acide sialique, N-acétyl-galactosamine, etc.). Cette membrane native des globules gras entoure un coeur majoritairement composé de triglycérides (98% des lipides du lait), qui sont partiellement cristallisés à température ambiante (Lopez et al., 2008).

Le lait de mammifère à traiter se présente avantageusement sous la forme d'un lait entier, ou de préférence encore d'un lait partiellement écrémé (de préférence encore sous la forme d'un lait dit « demi-écrémé »).

Le lait arrive avantageusement en citerne. Il est de préférence cru, mais il peut aussi être pasteurisé (72 à 80°C, pendant 10 à 20 secondes).

Par « lait entier », on entend en particulier un lait brut, non traité. On entend encore un lait de consommation dont la teneur en matière grasse a été préalablement standardisée à environ 36 g / litre ; une telle étape de standardisation est détaillée par la suite.

Par « lait partiellement écrémé », on entend la séparation et l'élimination d'une partie des globules gras par rapport au reste du lait.

Ce phénomène, dit de l'écrémage, est basé sur la différence de masse volumique (densité) existant entre les globules gras et le liquide dans lequel ils sont suspendus ou dispersés.

On peut citer pour cela en particulier l'écrémage dit « centrifuge », où le lait entier soumis à une rotation centrifuge de l'ordre de 4000 à 5000 tours/minute, au sein d'un empilement de disques coniques (Towler, 1986, Modern Dairy Technology, Edition Robinson), est séparé, en continu, en crème et en lait écrémé. La crème, obtenue selon ce procédé, est réintroduite dans le lait écrémé dans des proportions variables selon ce que l'on veut obtenir en concentration de matière grasse dans le lait de consommation (par exemple 15 ou 36 g/litre de matières grasses pour les laits dits demi-écrémés ou laits dits entiers, respectivement).

Cet écrémage permet également d'éliminer les particules exogènes du lait (paille, etc.), et une partie des cellules somatiques du lait.

Tel qu'illustré sur la figure 2, le lait entier peut éventuellement subir également une étape préalable de microfiltration tangentielle sur membrane 12 μm. Cette étape a pour objectif d'éliminer les cellules somatiques et les particules exogènes du lait entier.

Il s'agit avantageusement d'une étape préalable à l'étape (a) d'homogénéisation, mise en oeuvre juste après la réception du lait entier cru.

Une fois les cellules somatiques éliminées par microfiltration sur membrane de 12 μm, la standardisation de la teneur en matières grasses du lait peut être obtenue par écrémage de seulement une partie du lait, puis par ajout du lait écrémé dans le lait brut sans cellules somatiques.

Comme cela est aussi illustré sur la figure 2, la teneur en matières grasses et/ou en protéines du milieu d'intérêt peut encore être standardisée de sorte notamment à tenir compte de la composition finale recherchée, mais également des rendements et des pertes à l'issue de l'étape de microfiltration tangentielle (b) du procédé de traitement. Ces étapes de standardisation seront décrites par la suite.

Par exemple, la teneur en matières grasses peut être standardisée pour tenir compte des pertes liées à l'étape de microfiltration tangentielle (b).

De même, dans le cas où le lait initial serait pauvre en protéines, une standardisation de la teneur en protéines peut être envisagée.

Cette standardisation de la teneur en matière grasse et/ou en protéines, peut être réalisée au cours du procédé de traitement :

- avant l'étape d'homogénéisation (a), et/ou
- entre les étapes d'homogénéisation (a) et de microfiltration (b).

D'autre part, le milieu alimentaire d'intérêt peut encore consister en un produit qui est issu du lait de mammifère.

Ce produit consiste ainsi avantageusement en une crème, obtenue par concentration des globules gras d'un lait de mammifère. Cette crème, d'usage généralisé dans l'industrie laitière, constitue un milieu fortement enrichi en globules gras du lait (sa teneur est de l'ordre de 400 g/kg).

Cette crème peut éventuellement être standardisée en matière grasse et enrichie en d'autres composants du lait tels que les protéines.

De préférence, cette crème standardisée comporte un rapport protéines / matière grasse compris entre 0,3 et 0,8, de préférence de l'ordre de 0,5.

Le milieu d'intérêt peut également consister en une préparation à base de lait, de préférence de lait écrémé, dans laquelle sont ajoutées des matières grasses végétales émulsionnées, tel que le lait dit « infantile » ou le lait dit de « croissance ».

Ces laits infantiles et de croissance contiennent, de manière classique en soi, des gouttelettes lipidiques dont la matière grasse est d'origine végétale ou consiste en un mélange de matières grasses végétales et animales. Ils contiennent de préférence également des sucres (lactose, maltodextrines), des protéines, des vitamines et des minéraux.

Cette matière grasse végétale peut être composée d'un mélange d'huiles, lesquelles huiles sont choisies avantageusement parmi l'huile de colza, l'huile de soja, l'huile de coprah, l'huile de tournesol et l'huile de palme.

Là encore, de préférence, ce produit comporte un rapport protéines / matière grasse compris entre 0,3 et 0,8, et de préférence de l'ordre de 0,5.

De tels laits infantiles et laits de croissances sont présentés en détails par exemple dans la Directive Européenne 2006/141/CE du 22 décembre 2006 «concernant les préparations pour nourrissons et les préparations de suite et modifiant la directive 1999/21/CE ».

**Etape d'homogénéisation du procédé selon l'invention (étape (a))**

L'homogénéisation est une méthode mécanique pour réduire la taille des particules en suspension dans un milieu.

L'étape d'homogénéisation est appliquée au milieu d'intérêt de sorte que les gouttelettes lipidiques dispersées ou en suspension dans ledit milieu d'intérêt subissent une réduction de diamètre adaptée en fonction du seuil de coupure de la membrane de microfiltration employée dans l'étape suivante de microfiltration tangentielle (b).

Plus précisément, ces gouttelettes lipidiques générées sont réduites à une taille suffisante pour permettre leur passage à travers la membrane de microfiltration.

Dans le cadre de la présente invention, il est montré que, de manière surprenante, l'application d'au moins deux opérations d'homogénéisation successives, sur le milieu d'intérêt, permet d'optimiser significativement l'étape suivante de microfiltration tangentielle (b).

Par « une opération d'homogénéisation », on entend une opération conduisant à une réduction de la taille des gouttelettes lipidiques dans le milieu soumis à ladite opération.

Ces opérations d'homogénéisation successives sont avantageusement au nombre de deux ou trois, et de préférence encore au nombre de deux.

Par « opérations d'homogénéisation successives », on entend un processus comprenant les étapes suivantes :

(i) le milieu d'intérêt subit une première opération d'homogénéisation, puis

(ii) le milieu issu de ladite première opération d'homogénéisation (i) est soumis à une seconde opération d'homogénéisation, puis

(iii) le milieu issu de la seconde opération d'homogénéisation (ii) est récupéré pour la mise en oeuvre de l'étape suivante de microfiltration tangentielle (b).

En fonction du nombre d'opérations d'homogénéisation souhaitées, des opérations d'homogénéisation supplémentaires peuvent encore être mises en oeuvre successivement entre l'étape de la seconde homogénéisation (ii) et l'étape de récupération (iii).

Dans le procédé de l'invention, on peut utiliser n'importe quel type d'homogénéisateur. On utilisera en particulier un homogénéisateur à haute pression.

L'homme du métier connaît les caractéristiques générales des installations d'homogénéisation, et, si besoin est, il peut encore se reporter notamment au document « Homogénéisation à haute pression des dispersions alimentaires liquides », rédigé par Sébastien Roustel, Technique de l'Ingénieur (2010) ou « The high pressure dairy homogenizer », L.W Phipps, Technical Bulletin, Ed NIRD (1985).

De manière générale, les homogénéisateurs peuvent être divisés en deux catégories :

- les homogénéisateurs à « simple étage », comportant une seule tête ou valve d'homogénéisation, et
- les homogénéisateurs à « double étage », équipés de deux têtes ou valves d'homogénéisation, montées en cascade.

Pour cette seconde catégorie d'homogénéisateur, le milieu contenant les gouttelettes lipidiques passe donc au travers de deux têtes ou valves successives, lesdites têtes ou valves ayant chacune une fonction bien spécifique traduite par une pression différente.

En pratique, le premier étage, en amont, est celui au sein duquel est appliquée, dans la tête ou la valve, une pression ayant pour effet de diminuer la taille des gouttelettes lipidiques et correspondant à l'une des opérations d'homogénéisation selon l'invention.

Le second étage, en aval, est quant à lui celui dans lequel la pression appliquée dans la tête ou la valve, correspond avantageusement entre 10% et 20% de la pression appliquée sur la tête ou valve dudit premier étage. La fonction de ce second étage est ainsi de rompre les agrégats ou flocs qui se forment dans le milieu après le passage au travers du premier étage précité.

Par exemple, dans le cas du lait de mammifère, l'homogénéisateur consiste avantageusement en un appareil permettant de projeter le lait sous une très forte pression dans une tubulure à l'extrémité de laquelle s'applique une valve (par exemple un clapet conique en agate ou en acier, associé à un siège). Le lait se trouve laminé en passant au travers de cette valve, ce qui conduit à une réduction de la taille des globules gras et à la rupture de la membrane globulaire native.

En pratique, les opérations d'homogénéisation successives peuvent avantageusement être mises en oeuvre (i) soit par la recirculation du milieu d'intérêt au sein d'un unique homogénéisateur (à simple étage ou à double étage), (ii) soit par le passage du milieu d'intérêt au sein de deux homogénéisateurs (chacun à simple étage ou à double étage) montés en série.

D'autre part, notamment dans le cas du lait de mammifère, la température appliquée au milieu est un paramètre important : il convient de préférence d'éviter une dénaturation des protéines solubles par un couple temps / température trop élevé, tout en maintenant une température située au-dessus de la température de fusion de la matière grasse (entre 40 et 42°C pour les globules gras issus de lait de mammifère).

Pour éviter ou au moins limiter les altérations liées aux phénomènes thermiques de réchauffement, l'étape d'homogénéisation (a) est de préférence mise en oeuvre selon des paramètres (notamment de température du milieu et de pression d'homogénéisation) assurant un maintien de la température du milieu d'intérêt dans un domaine de valeur compris entre 30°C et 100°C, de préférence entre 30°C et 90°C, de préférence encore entre 30°C et 65°C à 70°C, et de préférence compris entre 40°C et 70°C, et de préférence encore entre 45°C et 65°C, tout au long de ladite étape d'homogénéisation (a).

Il convient en effet de tenir compte notamment de l'élévation de température générée par chacune des opérations d'homogénéisation successives.

Pour maintenir cette température dans le domaine de valeur souhaité, il est de préférence prévu de mettre en oeuvre une opération de refroidissement sur le milieu d'intérêt entre les deux opérations d'homogénéisation successives. Cette opération de refroidissement vise à autoriser l'augmentation de la température du milieu au cours de chaque opération d'homogénéisation, tout en assurant le maintien de cette température dans le domaine de valeur thermique toléré.

Cette opération de refroidissement intermédiaire vient ainsi limiter, voire éviter, la dénaturation des protéines solubles, tout en maintenant une température située au-dessus de celle de la fusion de la matière grasse.

Les opérations d'homogénéisation successives de cette étape (a) vérifient avantageusement chacune les paramètres suivants :

- une pression comprise entre 300 et 950 bar, et de préférence encore comprise entre 500 et 950 bar,
- une température d'entrée du milieu d'intérêt, avant chaque homogénéisation, comprise entre 30°C et 65°C, de préférence entre 43°C et 47°C, et de préférence encore de l'ordre de 45°C (ces températures sont utiles en particulier pour le lait, et plus généralement les milieux d'intérêt contenant des protéines solubles).

Le demandeur montre que les paramètres correspondants s'avèrent particulièrement intéressants pour maintenir la température dans le domaine de température toléré par le milieu, pour limiter la dénaturation protéique du milieu, et aussi, de manière tout à fait inattendue, pour optimiser l'efficacité de l'étape suivante de microfiltration tangentielle (b).

De manière générale, si la dénaturation protéique du milieu n'est pas un facteur limitatif, la température du milieu d'intérêt peut être maintenue dans un domaine de valeur plus large, à savoir compris entre 30°C et 100°C.

Dans le cas d'un homogénéisateur à double étage, la pression d'homogénéisation précitée correspond à la pression appliquée au premier étage ; la pression du second étage est réglée habituellement à une valeur correspondant à environ 10 % de la pression dudit premier étage.

Par convention, dans la présente description, on notera les pressions d'homogénéisation « n + m bar », pour lesquelles « n » et « m » correspondent respectivement aux pressions appliquées au sein du premier étage et du second étage.

Le cas échéant, le milieu d'intérêt est ajusté en température, par chauffage ou refroidissement, avant chaque opération d'homogénéisation, de manière à atteindre la température d'entrée recherchée.

En pratique, les paramètres des opérations d'homogénéisation, et en particulier la pression mise en oeuvre, sont adaptés en fonction du seuil de coupure choisi pour la membrane utilisée lors de l'étape de microfiltration tangentielle (b).

En particulier, dans le cas d'une membrane ayant un seuil de coupure de l'ordre de 1,4 $\mu$m, les deux opérations d'homogénéisation successives sont avantageusement chacune mises en oeuvre avec une pression de l'ordre de 300 à 900 bar, et de préférence encore de l'ordre de 600 bar.

Ces paramètres sont en particulier adaptés pour réduire les gouttelettes lipidiques de taille supérieure à 1 $\mu$m, afin de faciliter l'étape de microfiltration tangentielle (b) sur une membrane ayant un seuil de coupure de 1,4 $\mu$m. Plus précisément, cette étape d'homogénéisation (a) est avantageusement mise en oeuvre de sorte qu'au moins 85 %, et de préférence encore au moins 95 %, des gouttelettes lipidiques aient un diamètre inférieur à 1 $\mu$m.

Dans le cas d'une membrane ayant un seuil de coupure de l'ordre de 0,8 $\mu$m, l'étape d'homogénéisation (a) comprend avantageusement deux opérations d'homogénéisation successives, chacune mise en oeuvre avec une pression de l'ordre de 700 à 900 bar, et encore de préférence de l'ordre de 800 bar.

Ces seconds paramètres du procédé d'homogénéisation sont en particulier adaptés pour diminuer les gouttelettes lipidiques de taille supérieure à 0,3 $\mu$m, afin de faciliter l'étape de microfiltration tangentielle (b) sur une membrane ayant un seuil de coupure de 0,8 $\mu$m.

Plus précisément, cette étape d'homogénéisation (a) est mise en oeuvre de sorte qu'au moins 85 %, et de préférence au moins 95 % des gouttelettes lipidiques, aient un diamètre inférieur à 0,3 $\mu$m.

**Etape de microfiltration tangentielle du procédé selon l'invention (étape (b))**

L'étape de microfiltration tangentielle (b), mise en oeuvre sur le milieu d'intérêt homogénéisé issu de l'étape (a) selon l'invention, permet de séparer un microfiltrat ou perméat et un rétentat.

Par « microfiltration tangentielle », on entend une technique dans laquelle le liquide ou milieu à traiter circule parallèlement ou tangentiellement à la surface de la membrane de microfiltration fixe. Par « microfiltration tangentielle », on entend également une technique dans laquelle le passage au travers des pores de la membrane d'une partie au moins du liquide ou du milieu à traiter, aussi appelé filtration, se produit dans une direction perpendiculaire à la direction de l'écoulement du liquide ou du milieu fourni.

La membrane de microfiltration agit comme une barrière sélective.

En pratique, le milieu d'intérêt issu de l'étape (a), c'est-à-dire contenant les gouttelettes lipidiques homogénéisées, fait l'objet d'une étape de microfiltration tangentielle sur une membrane ayant un seuil de coupure autorisant le passage dans le perméat d'au moins une partie desdites gouttelettes lipidiques, tout en retenant dans le rétentat au moins une partie des bactéries.

Le perméat, issu de cette étape (b), constitue un milieu alimentaire et/ou biologique homogénéisé dont la teneur bactérienne est réduite par rapport au milieu avant la mise en oeuvre du procédé.

L'homme du métier connaît les caractéristiques générales des dispositifs de microfiltration tangentielle, et, si besoin, il peut se reporter notamment au document FR-2 776 208 ; on peut citer également l'article de L. Saboya et JL Maubois « Current developments of microfiltration technology in the dairy industry » (Lait, 2000, 80, pp 541-553).

Dans le procédé de l'invention, on peut utiliser n'importe quel type de membrane, par exemple organique, composite ou de préférence minérale, à condition que la membrane considérée soit adaptée à l'installation de microfiltration tangentielle mise en oeuvre.

La mise en oeuvre proprement dite de la microfiltration à courant tangentiel est réalisée dans une installation de type connu.

Le procédé de l'installation se prête à une mise en oeuvre continue ou discontinue.

Dans le cas d'une mise en oeuvre discontinue, c'est-à-dire dans le cas d'un procédé de traitement par lots, la quantité déterminée du milieu à traiter est mise en contact avec les membranes de l'unité de filtration, jusqu'à l'obtention d'un perméat et d'un rétentat ayant les propriétés désirées.

Mais les installations de microfiltration tangentielle se prêtent aussi à une mise en oeuvre continue, selon laquelle le milieu à traiter est amené au contact des membranes de manière continue, les conditions de marche de l'installation étant choisies pour permettre de recueillir, également en continu, un perméat et un rétentat ayant les propriétés souhaitées.

De plus, le produit à traiter est introduit par une pompe d'alimentation dans une boucle de recirculation en flux tangentiel et passe dans des canaux dont la surface interne est constituée de membranes à caractéristiques appropriées (notamment en terme de seuil de coupure des pores). La recirculation du perméat à co-courant permet d'assurer une pression transmembranaire uniforme.

Une partie du produit, perméat ou microfiltrat, passe à travers la membrane et est collectée dans une enceinte stérile.

La partie du milieu d'intérêt qui ne passe pas à travers la membrane (ou rétentat) est collectée en sortie du pilote de microfiltration selon le facteur de concentration volumique recherché (système à extraction continue).

Dans la pratique, les installations se présentent sous la forme d'un système en boucle. De telles boucles peuvent être reliées en parallèle pour constituer des installations de plus grande capacité.

La mise en oeuvre de cette étape de microfiltration tangentielle (b) est assurée en respectant les conditions hydro-dynamiques appropriées.

Le demandeur démontre que les conditions suivantes sont particulièrement adaptées pour le traitement du produit issu de l'étape d'homogénéisation (a), en particulier pour le lait de mammifère, avec :

- une température pour le milieu homogénéisé ajustée entre 50°C et 60°C, et de préférence encore entre 56°C et 57°C,
- un débit de perméation compris entre 150 et 300 L/h/m$^2$,
- un facteur de concentration volumique compris entre 8 et 25,
- une vitesse de balayage comprise entre 6 et 8 m/s,
- et une pression d'alimentation variant entre 1,5 et 2,5 bar.

Le facteur de concentration volumique (encore désigné par la suite « FCV ») est obtenu par la formule suivante :

$$FCV = \text{Débit de fluide entrant / Débit de rétentat.}$$

Le débit de fluide entrant est obtenu par la formule suivante :

$$\text{Débit de fluide entrant} = (\text{débit du perméat} + \text{débit de rétentat})$$

L'étape de microfiltration (b) implique avantageusement au moins une microfiltration tangentielle avec une membrane possédant un seuil de coupure compris entre 0,5 $\mu$m et 1,8 $\mu$m. Ce seuil de coupure correspond au diamètre moyen des pores de la membrane.

Ce seuil de coupure correspond avantageusement à un seuil de coupure dit « effectif » compris entre 0,2 $\mu$m et 1,6 $\mu$m

respectivement.

A titre d'exemple, le diamètre des pores peut être déterminé par la procédure dite de « perméamétrie », avantageusement étalonnée en référence de la porosité au mercure, avec une préparation spécifique d'échantillons pour obtenir une information valide des couches filtrantes.

Dans la présente description et par souci de simplification, il est employé encore les termes de « membranes de x $\mu$m », dans lequel la valeur de « x » est le seuil de coupure correspondant au diamètre moyen des pores de la membrane.

Cette étape de microfiltration tangentielle (b) peut être mise en oeuvre avec une seule membrane de microfiltration répondant à cette définition ou bien en cascade, c'est-à-dire qui peut être pratiquée par une ou plusieurs microfiltrations successives à des seuils de coupure identiques ou différents situés dans la gamme de seuils de coupure compris entre 0,5 et 1,8 $\mu$m.

Le facteur de concentration volumique recherché est avantageusement compris entre 8 et 100, de préférence de 8 et 25, et de préférence encore de l'ordre de 20.

Dans le cas d'une étape de microfiltration tangentielle (b) en cascade, ce facteur de concentration volumique final est avantageusement obtenu par :

- une première microfiltration mise en oeuvre selon un facteur de concentration volumique de l'ordre de 10, puis
- une seconde microfiltration mise en oeuvre selon un facteur de concentration volumique de l'ordre de 2 à 10.

En pratique, dans le cas où l'objectif est une réduction partielle de la teneur bactérienne du milieu alimentaire et/ou biologique homogénéisé, l'étape de microfiltration tangentielle (b) est mise en oeuvre sur une membrane ayant un seuil de coupure moyen compris entre 1 $\mu$m et 1,8 $\mu$m, et de préférence encore de l'ordre de 1,4 $\mu$m ; c'est-à-dire avantageusement un seuil de coupure effectif compris entre 1 $\mu$m et 1,6 $\mu$m.

Par « réduction partielle de la teneur bactérienne », on entend une réduction décimale d'au moins 3 log de la teneur bactérienne et/ou une valeur exprimée en UFC / mL inférieure à 50 (et de préférence inférieure à 10).

Pour stériliser le milieu alimentaire et/ou biologique homogénéisé, l'étape de microfiltration tangentielle (b) est avantageusement mise en oeuvre sur une membrane ayant un seuil de coupure compris entre 0,5 et 0,9 $\mu$m, et de préférence encore de l'ordre de 0,8 $\mu$m ; cela correspond avantageusement à un seuil de coupure effectif compris entre 0,2 $\mu$m et 0,8 $\mu$m.

L'utilisation d'une membrane avec un seuil de coupure moyen de 0,8 $\mu$m permet de stériliser physiquement le lait : c'est-à-dire une rétention de 100 % des bactéries et des cellules somatiques.

On entend par « stérilisation », l'élimination de toutes les bactéries du milieu, ou au moins une valeur de UFC / mL inférieure à 1.

De manière générale, la valeur de UFC / mL s'entend pour la flore totale dans le milieu, de préférence encore la flore aérobie mésophile revivifiable à 30°C.

Cette valeur peut être déterminée par la technique décrite par exemple dans le document Trouvé et al. (1991) Lait, 71, pp. 1-13.

Dans le cas du lait de mammifère, la microfiltration est mise en oeuvre sur le lait standardisé en matière grasse (entier ou partiellement écrémé), auquel une opération d'homogénéisation (a) a été appliquée. On filtre ainsi un milieu qui présente la composition biochimique du lait standardisé en matière grasse et éventuellement en protéines, dont les globules gras sont homogénéisés.

Le microfiltrat contient alors toutes les particules qui sont passées à travers la membrane : protéines (caséines et protéines sériques), azote non protéique, lactose, sels minéraux solubles et gouttelettes lipidiques homogénéisées.

Le rétentat présente quant à lui la composition du lait d'origine, enrichie en particules qui ne sont pas passées à travers la membrane : une partie des protéines (caséines en particulier), des gouttelettes lipidiques homogénéisées, mais surtout des bactéries et des cellules somatiques. Ce rétentat de microfiltration peut par exemple être valorisé sous forme de fromage blanc, après avoir subi un traitement thermique ; de manière alternative, ce rétentat peut être soumis à une nouvelle opération de microfiltration tangentielle selon les paramètres développés ci-dessus, de manière à valoriser ce co-produit issu de la première opération de microfiltration tangentielle.

Tel qu'illustré sur la figure 2, on utilise de préférence :

- une membrane 0,8 $\mu$m pour la microfiltration de lait demi-écrémé homogénéisé, et
- une membrane 1,4 $\mu$m pour la microfiltration de lait demi-écrémé ou entier homogénéisé.

**Etape de traitement thermique final (étape (d))**

En fonction de la durée de conservation souhaitée, le milieu d'intérêt traité (c'est-à-dire homogénéisé puis microfiltré) peut faire l'objet d'une étape finale et facultative de traitement thermique (étape (d)).

L'objectif de cette étape de traitement thermique est d'inactiver les enzymes susceptibles d'altérer la qualité du lait au cours du stockage (protéases, lipases, etc.), et aussi de détruire les bactéries résiduelles notamment après la microfiltration 1,4 $\mu$m. Par exemple et tel que illustré sur la figure 2, pour les laits de mammifère microfiltrés qui se conservent un mois à 4°C, le traitement thermique final peut être de type pasteurisation, avec l'application d'un traitement thermique de l'ordre de 72°C pendant 15 secondes.

Pour les laits de mammifères microfiltrés destinés à être conservés trois à six mois à température ambiante (c'est-à-dire avantageusement de l'ordre de 20°C), il peut être envisagé un traitement thermique d'inactivation enzymatique à 96°C pendant 6 secondes (voir figure 2).

Ce traitement thermique peut être mis en oeuvre au moyen de tout dispositif approprié. On peut citer tous les pilotes de traitement thermique de type pasteurisateur ou stérilisateur disponibles.

### Installation pour la mise en oeuvre du procédé selon l'invention

La présente invention porte encore sur une installation pour la mise en oeuvre du procédé.

Cette installation comporte avantageusement :

(i) un poste d'homogénéisation comprenant au moins un homogénéisateur, pour la mise en oeuvre de l'étape (a),
(ii) un poste de microfiltration, pour la mise en oeuvre de l'étape (b), et optionnellement,
(iii) un poste de traitement thermique, pour la mise en oeuvre de l'étape (d).

Ces postes sont montés en série, raccordés hydriquement par des conduites adaptées.

Le poste d'homogénéisation comprend avantageusement deux homogénéisateurs (à simple étage ou à double étage) montés en série.

Ces différents postes sont décrits ci-dessus en relation avec le procédé selon l'invention.

Selon une forme de réalisation possible illustrée schématiquement sur la figure 37, adaptée pour le traitement de lait entier, l'installation comprend successivement, de l'amont vers l'aval tenant compte du sens de cheminement du produit traité, les éléments fonctionnels suivants :

- une cuve réfrigérée 1, pour maintenir le lait entier à 4°C,
- un échangeur de chaleur 2, pour augmenter la température du lait à 50°C,
- un dispositif 3 pour l'écrémage du lait à 50°C, permettant la séparation du lait écrémé 4 et de la crème 5 (utilisée pour la standardisation du lait en matière grasse),
- une cuve 6 pour le stockage du lait standardisé,
- un échangeur de chaleur 7, pour ajuster la température du lait standardisé à la température souhaitée pour la première homogénéisation,
- un premier homogénéisateur 8 à deux étages (par exemple, pressions de 600 ou de 800 bar appliquées sur le premier étage et 10 à 20% de cette pression est appliquée sur le second étage),
- un échangeur de chaleur 9, pour ajuster la température du lait standardisé, homogénéisé une première fois, à la température souhaitée pour la seconde homogénéisation,
- un second homogénéisateur 10 à deux étages (par exemple, pressions de 600 ou de 800 bar appliquées sur le premier étage et 10 à 20% de cette pression est appliquée sur le second étage),
- une cuve 11 pour le stockage du lait standardisé et homogénéisé deux fois,
- un premier pilote de microfiltration tangentielle UTP 12, pour l'épuration microbiologique du lait (température de l'opération 57°C; premier étage de microfiltration tangentielle),
- un second pilote de microfiltration tangentielle UTP 13 (second étage de microfiltration tangentielle), pour le traitement du rétentat obtenu sur le premier étage de microfiltration tangentielle (le microfiltrat étant réintégré au microfiltrat obtenu sur le premier étage de microfiltration tangentielle),
- un dispositif de traitement thermique 14,
- un poste 15 pour le conditionnement, en condition stérile, du produit épuré microbiologiquement, et
- un poste 16 pour le stockage du produit épuré microbiologiquement.

### Milieux alimentaires et/ou biologiques homogénéisés et microfiltrés

De manière générale, le produit obtenu à l'issue du procédé reste un milieu alimentaire et/ou biologique, et plus précisément un liquide contenant des gouttelettes lipidiques avantageusement en suspension.

L'invention concerne également les produits laitiers obtenus par la mise en oeuvre du procédé selon l'invention.

Pour définir ce produit, on peut utiliser en particulier des caractéristiques relatives à la distribution de taille des gouttelettes lipidiques.

On peut citer par exemple sa population de gouttelettes lipidiques la plus importante en volume, dénommée encore « mode », mesurée en $\mu$m.

La distribution en taille des gouttelettes lipidiques peut être caractérisée par un diamètre dit « Sauter » ($d_{3.2}$) et une valeur $d_{4.3}$, définis respectivement par les formules suivantes :

$$d_{3.2} = \Sigma n_i d_i^3 / \Sigma n_i d_i^2$$

$$d_{4.3} = \Sigma n_i d_i^4 / \Sigma n_i d_i^3$$

où $n_i$ est le nombre de gouttelettes lipidiques de diamètre $d_i$.

Ces deux valeurs permettent d'évaluer au mieux la distribution en taille des gouttelettes lipidiques contenues dans le milieu d'intérêt.

Cette population de gouttelettes lipidiques est par exemple déterminée par la technique de granulométrie laser.

Un premier produit laitier selon l'invention, avantageusement un lait partiellement écrémé, présente une teneur en matière grasse totale inférieure à 40 g/kg, de préférence de l'ordre de 10 à 40 g/kg, de préférence encore de l'ordre de 30 à 40 g/kg (c'est-à-dire par exemple un lait dit « entier » en France ayant une teneur de 36 g/kg) ou de l'ordre de 10 à 20 g/kg (de préférence de l'ordre de 15 g/kg pour un lait dit « demi-écrémé » en France), dont les paramètres vérifient les caractéristiques suivantes :

- une population de gouttelettes lipidiques la plus importante en volume comprise dans un domaine s'étendant entre 0,12 et 0,15 $\mu$m,
- une valeur de $d_{4.3}$ comprise entre 0,12 et 0,16 $\mu$m,
- une valeur de $d_{3.2}$ comprise entre 0,10 et 0,12 $\mu$m,
- au moins 95% des gouttelettes lipidiques ont une taille maximale de 0,3 $\mu$m,
- une teneur en protéines solubles dont le taux de dénaturation est inférieur à 10%, et
- une teneur bactérienne inférieure à 1 UFC / mL.

Un tel produit laitier est en particulier issu d'un procédé mis en oeuvre sur un lait standardisé en matière grasse, et remplissant les paramètres suivants :

- une étape d'homogénéisation (a) comprenant deux opérations d'homogénéisation successives, chacune mise en oeuvre avec une pression comprise entre 700 bar et 900 bar, et de préférence de l'ordre de 800 bar, et
- une étape de microfiltration tangentielle (b) sur une membrane ayant un seuil de coupure de l'ordre de 0,8 $\mu$m (seuil de coupure effectif de 0,5 $\mu$m).

Ce produit laitier consiste ainsi avantageusement en un lait partiellement écrémé, homogénéisé et microfiltré.

Un second produit laitier selon l'invention présente une teneur en matière grasse totale inférieure à 40 g/kg, de préférence de l'ordre de 10 à 40 g/kg, de préférence de l'ordre de 10 à 40 g/kg, de préférence encore de l'ordre de 30 à 40 g/kg (c'est-à-dire par exemple un lait dit « entier » en France ayant une teneur de 36 g/kg) ou de l'ordre de 10 à 20 g/kg (de préférence de l'ordre de 15 g/kg pour un lait dit « demi-écrémé » en France), dont les paramètres vérifient les caractéristiques suivantes :

- une population de gouttelettes lipidiques la plus importante en volume comprise dans un domaine s'étendant entre 0,14 et 0,17 $\mu$m,
- une valeur de $d_{4.3}$ comprise entre 0,15 et 0,35 $\mu$m,
- une valeur de $d_{3.2}$ comprise entre 0,12 et 0,16 $\mu$m,
- au moins 95% des gouttelettes lipidiques ont une taille maximale de 1 $\mu$m,
- une teneur en protéines solubles dont le taux de dénaturation est inférieur à 10 %, et
- une teneur bactérienne inférieure à 10 UFC / mL.

Ce produit laitier est en particulier issu d'un procédé partant d'un lait entier ou standardisé en matière grasse, et remplissant les conditions suivantes :

- une étape d'homogénéisation (a) comprenant deux opérations d'homogénéisation successives, chacune mise en oeuvre avec une pression comprise entre 300 bar et 900 bar, et de préférence de l'ordre de 600 bar,

- une étape de microfiltration tangentielle (b) sur une membrane ayant un seuil de coupure de l'ordre de 1,4 $\mu$m.

Pour ces deux produits, la teneur en cellules somatiques est avantageusement inférieure à 5 000 / mL au seuil de détection.

Ce produit laitier consiste avantageusement en un lait entier, homogénéisé et microfiltré.

**Mode de réalisation**

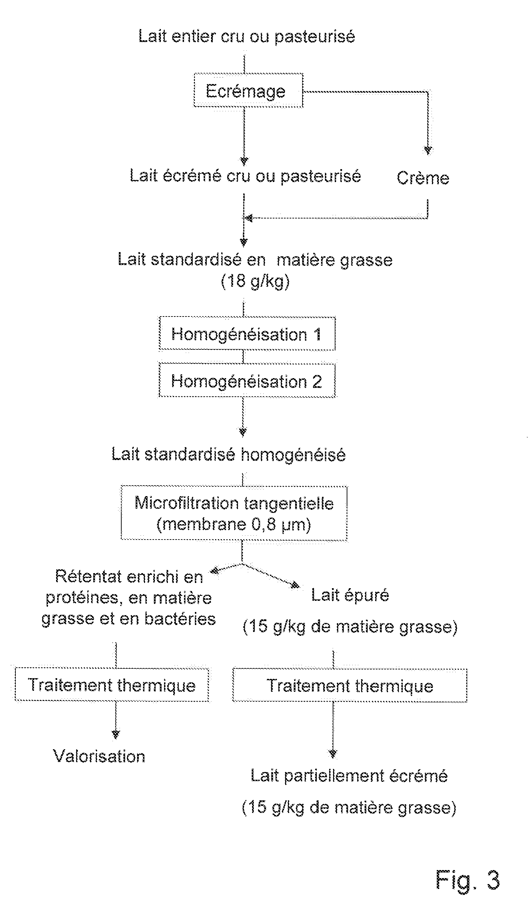

L'invention est encore illustrée, sans être aucunement limitée, par la description de différents modes de réalisation du procédé pour le traitement de lait de mammifère, cela en relation avec les figures 3 à 10.
Les conditions mises en oeuvre au niveau de chaque étape, notamment d'homogénéisation et de microfiltration, sont avantageusement telles que détaillées ci-dessus.

La figure 3 est un schéma d'un procédé d'obtention d'un lait partiellement écrémé, de préférence demi-écrémé à 15 g/kg de matière grasse, qui est stérile, à hautes valeurs organoleptiques et nutritionnelles.

Ce procédé consiste à s'approvisionner en lait entier, cru ou pasteurisé, constituant le milieu d'intérêt.

Une étape d'écrémage est appliquée à ce milieu d'intérêt, de manière à séparer le lait écrémé (cru ou pasteurisé) et la crème.

Une partie de la crème ainsi obtenue est réintroduite dans le lait écrémé de manière à standardiser ce dernier en matière grasse (par exemple 18 g/kg, pour compenser les pertes et le rendement des étapes suivantes). La partie non-utilisée de la crème peut être valorisée, par exemple comme crème de consommation, beurre et/ou fromages.

Une étape d'homogénéisation est ensuite appliquée à ce lait standardisé en matière grasse, cette étape comprenant ici deux opérations d'homogénéisation successives.

Le lait standardisé homogénéisé fait ensuite l'objet d'une étape de microfiltration tangentielle sur membrane dont le seuil de coupure est de 0,8 $\mu$m, ce qui permet l'épuration bactérienne totale du perméat.

Cette étape de microfiltration tangentielle permet de récupérer, d'une part, un perméat constituant le lait stérile (sans bactéries) avec une concentration en matière grasse de 15 g/kg, et d'autre part, un rétentat enrichi en protéines, en matière grasse et en bactéries par rapport au lait standardisé homogénéisé.

Ce lait stérile partiellement écrémé (de préférence dit « demi-écrémé » avec une concentration en matière grasse de 15 g/kg) peut être soumis à un traitement thermique final dont l'intensité va dépendre de la durée de conservation du lait recherchée. Par exemple, pour un lait qui devrait se conserver plus de 3 mois à température ambiante, un traitement thermique du type pasteurisation (par exemple 96°C pendant 6 secondes) pourrait être appliqué.

En parallèle, le rétentat peut également faire l'objet d'une opération de traitement thermique de type pasteurisation, de manière à le valoriser, par exemple comme fromage blanc ou dans le domaine de la technologie fromagère.

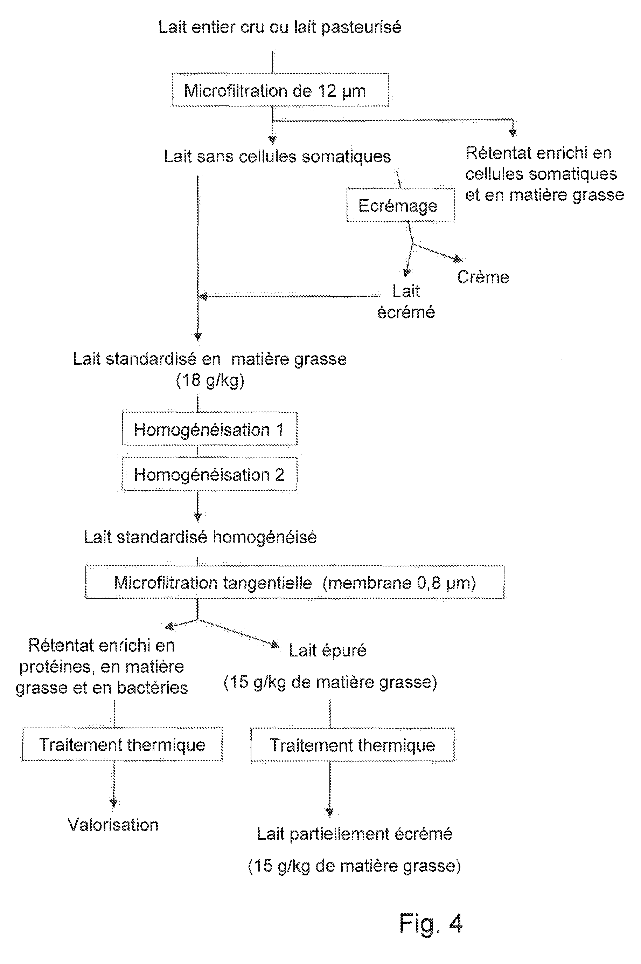

La figure 4 est un schéma d'un procédé pour l'obtention également d'un lait partiellement écrémé (de préférence « demi-écrémé » à 15g/kg de matière grasse) stérile, à hautes valeurs organoleptiques et nutritionnelles, qui se distingue de celui décrit ci-dessus en relation avec la figure 3 par le fait qu'il comporte une étape préalable d'élimination des cellules somatiques.

Plus précisément, cette étape préliminaire consiste en une microfiltration tangentielle d'un lait cru ou pasteurisé sur une membrane présentant un seuil de coupure de 12 $\mu$m.
Cette première étape permet de séparer, d'une part, un rétentat enrichi en cellules somatiques et en matière grasse (éventuellement valorisable en technologie fromagère), et d'autre part, un perméat constitué par un lait (cru ou pasteurisé) sans cellules somatiques.

Pour standardiser en matière grasse ce lait dépourvu de cellules somatiques, les étapes suivantes peuvent être mises en oeuvre :

- une portion de ce lait (sans cellules somatiques) est écrémée, puis
- cette portion de lait écrémé est réintroduite dans la portion de lait sans cellules somatiques, de sorte à diluer son taux de matière grasse jusqu'à la valeur souhaitée (par exemple 18 g/kg).

Ce lait sans cellules somatiques et standardisé en matière grasse peut ensuite subir l'ensemble des étapes décrites ci-dessus en relation avec la figure 3, c'est-à-dire en particulier une étape d'homogénéisation et une étape de microfiltration tangentielle sur 0,8 $\mu$m, jusqu'à l'obtention du lait stérile partiellement écrémé (de préférence demi-écrémé) qui peut être soumis à un traitement thermique final dont l'intensité va dépendre de la durée de conservation du lait recherchée. Par exemple, pour un lait qui devrait se conserver plus de 3 mois à température ambiante, un traitement thermique d'inactivation enzymatique (par exemple 96°C pendant 6 secondes) pourrait être appliqué.

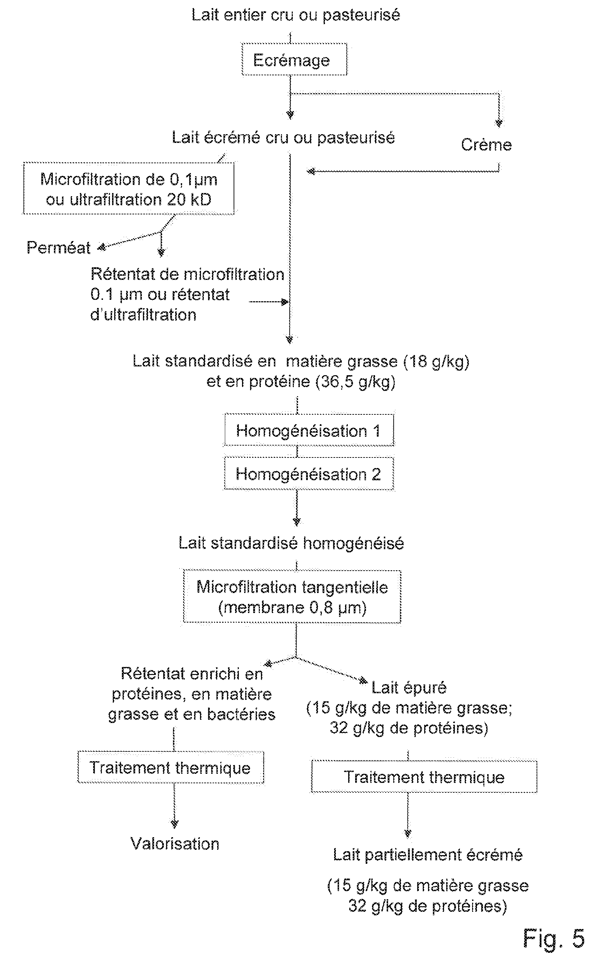

La figure 5 représente un schéma d'un procédé de traitement d'un lait entier cru ou pasteurisé, en vue de l'obtention d'un lait partiellement écrémé (de préférence demi-écrémé) stérile, qui serait standardisé également en protéines dans le cas où le lait du départ ne serait pas assez riche en protéines.

Le procédé de traitement correspondant est, pour cela, similaire à celui décrit ci-dessus en relation avec la figure 3.

Il s'en distingue par une étape supplémentaire de standardisation en protéines, mise en oeuvre en parallèle de l'étape de standardisation en matières grasses.

Cette étape de standardisation en protéines consiste :

- à isoler une partie du lait écrémé, cru ou pasteurisé, de manière à lui faire subir une microfiltration sur une membrane ayant un seuil de coupure de 0,1 $\mu$m ou une ultrafiltration à 20 kD,
- à récupérer le rétentat issu de l'étape précédente de filtration, (le perméat peut par exemple être utilisé après séchage dans l'alimentation animale),
- à introduire dans le lait ledit rétentat collecté (avant ou après standardisation en matière grasse), de sorte à obtenir la concentration en protéines souhaitée (par exemple une concentration en protéines de 36,5 g/kg de lait, pour tenir compte des pertes et rendement du procédé).

On obtient ainsi au final un lait stérile demi-écrémé, dont la concentration en matière grasse est de 15 g/kg et dont la concentration en protéines est de 32 g/kg. Ce lait épuré, dit « demi-écrémé », peut être soumis là encore à un traitement thermique final dont l'intensité va dépendre de la durée de conservation du lait recherchée.

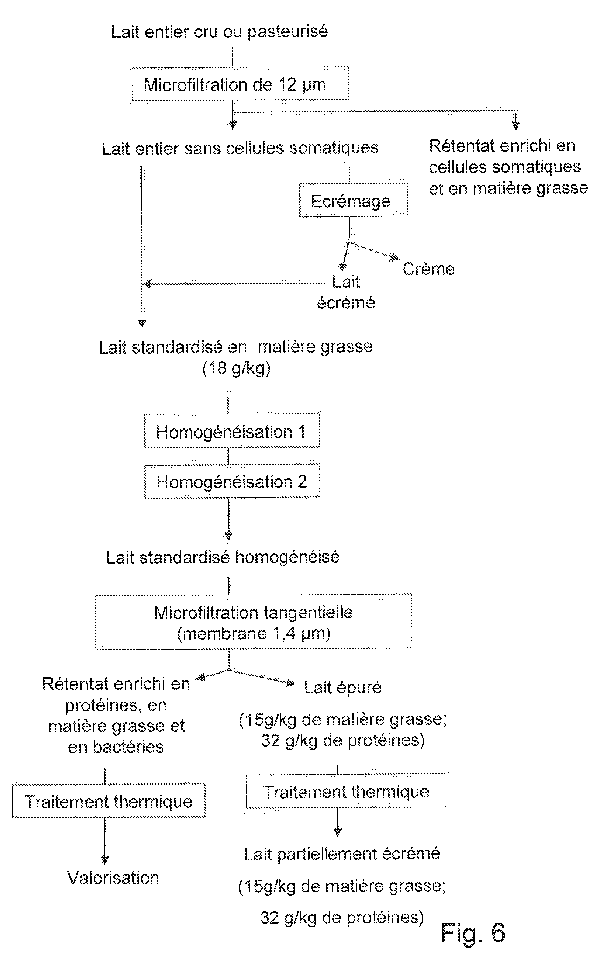

La figure 6 est un schéma d'un procédé de traitement d'un lait entier cru ou pasteurisé pour l'obtention d'un lait partiellement écrémé (de préférence demi-écrémé) partiellement épuré.

Ce procédé est là encore similaire à celui décrit ci-dessus en relation avec la figure 4, et s'en distingue uniquement par une étape de microfiltration tangentielle dans laquelle la membrane utilisée comporte un seuil de coupure de 1,4 $\mu$m (en remplacement d'une membrane dont le seuil de coupure est de 0,8 $\mu$m en relation avec la figure 4). Cette membrane de 1,4 $\mu$m permet une épuration partielle du perméat (épuration supérieure à 99,9% comme indiqué dans l'article Saboya et Maubois, 2000).

La mise en oeuvre de ce procédé permet l'obtention d'un lait dit « demi-écrémé », dont la concentration en matière grasse est de 15 g/kg. Ce lait « demi-écrémé » peut être soumis à un traitement thermique final approprié dont l'intensité va dépendre de la durée de conservation du lait recherchée. Par exemple, pour un lait qui devrait se conserver 1 mois à 4°C, un traitement thermique du type pasteurisation (par exemple 72°C pendant 15 secondes) pourrait être appliqué.

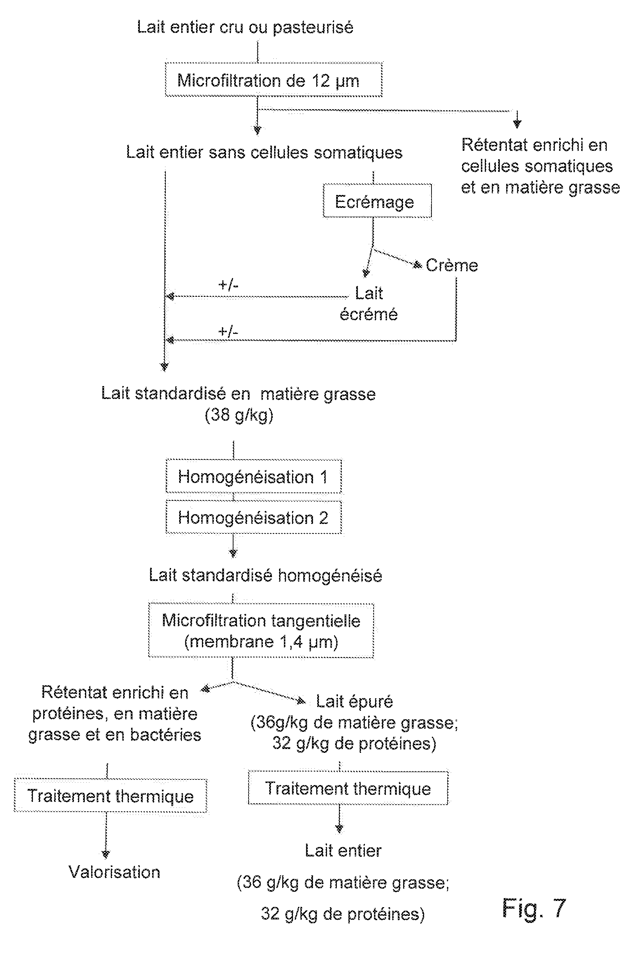

La figure 7 illustre les principales étapes d'un procédé d'obtention d'un lait dit entier partiellement épuré, partant d'un lait entier cru ou pasteurisé.

Ce procédé est similaire à celui décrit ci-dessus en relation avec la figure 6, et s'en distingue uniquement par une étape de standardisation du lait visant à obtenir une concentration en matière grasse de 38 g/kg (en lieu et place d'une teneur en matière grasse de 18 g/kg en relation avec la figure 6).

Suite aux étapes d'homogénéisation et de microfiltration tangentielle sur une membrane dont le seuil de coupure est de 1,4 $\mu$m, on obtient ainsi un lait dit entier dont la concentration en matière grasse est de 36 g/kg (la concentration en protéines est de 32 g/kg).

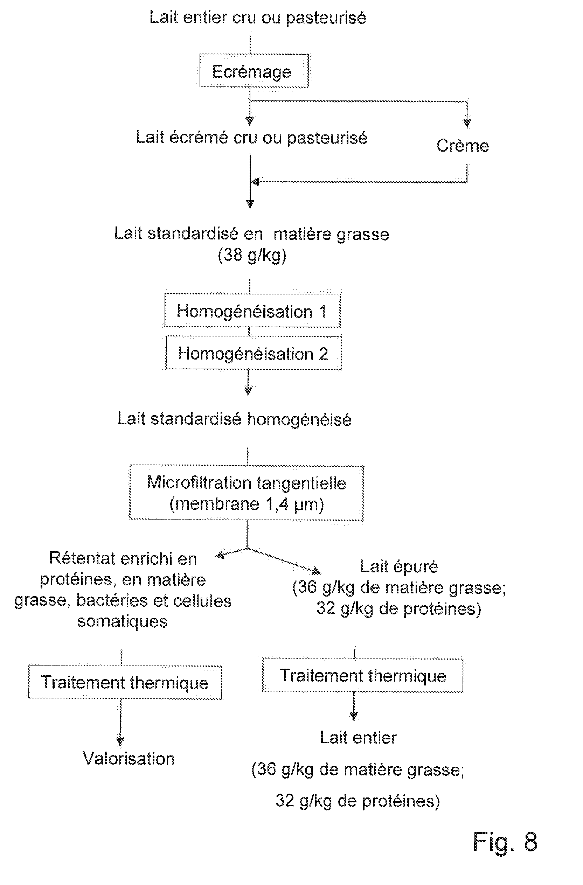

La figure 8 correspond à un schéma d'un procédé d'obtention d'un lait entier partiellement épuré.

Ce procédé selon la figure 8 se distingue de celui décrit ci-dessus en relation avec la figure 7, uniquement par l'absence de l'étape préalable de filtration pour l'élimination des cellules somatiques par microfiltration sur membrane dont le seuil de coupe est de l'ordre de 12 $\mu$m.

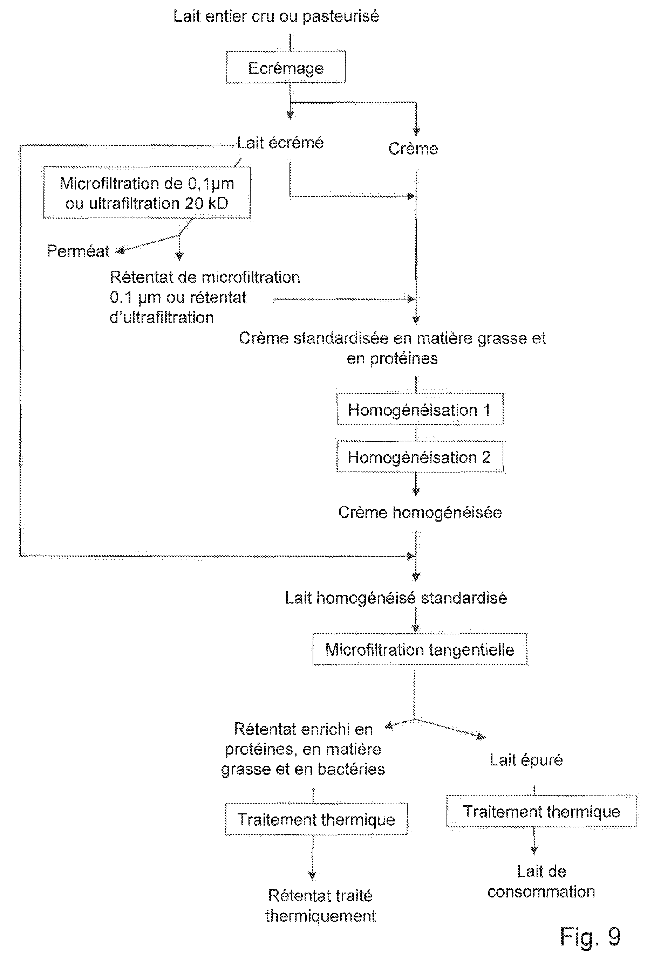

La figure 9 correspond à un schéma d'un procédé de traitement de la crème issue de lait de mammifère.

Les étapes suivantes sont avantageusement mises en oeuvre:

- préalablement à l'étape d'homogénéisation (a), ladite crème à traiter est enrichie en protéines du lait obtenues par ultrafiltration 20 kD ou microfiltration sur 0,1 $\mu$m, de sorte à obtenir un rapport protéines/matière grasse compris entre 0,3 et 1, et de préférence selon un rapport de l'ordre de 0,8 (l'ajout de protéines de lait totales sous forme de poudre enrichirait le lait en lactose, ce qui n'est pas souhaitable ; l'utilisation d'un rétentat de protéines de lait est préférable),
- l'étape d'homogénéisation (a) est mise en oeuvre sur ladite crème enrichie en protéines du lait, avec l'avantage de diminuer les quantités de produit à homogénéiser d'un facteur environ 3 à 4 pour un lait « demi-écrémé » et environ 1,5 à 2 pour un lait « entier » (gain de temps et d'énergie pour les applications industrielles et une moindre destruction des bactéries et des cellules somatiques au cours de l'homogénéisation),
- préalablement à l'étape de microfiltration tangentielle (b), ladite crème enrichie en protéines du lait et homogénéisée est diluée avec du lait écrémé pour obtenir les concentrations en matière grasse et en protéines souhaitées (dilution d'un facteur environ 3 à 4 pour un lait « demi-écrémé » et environ 1,5 à 2 pour un lait « entier »),
- l'étape de microfiltration tangentielle (b) est appliquée à ladite crème diluée dans le lait écrémé, pour réaliser l'épuration microbienne.

Le perméat issu de l'étape de microfiltration peut être soumis à un traitement thermique final approprié dont l'intensité va dépendre de la durée de conservation du lait recherchée.

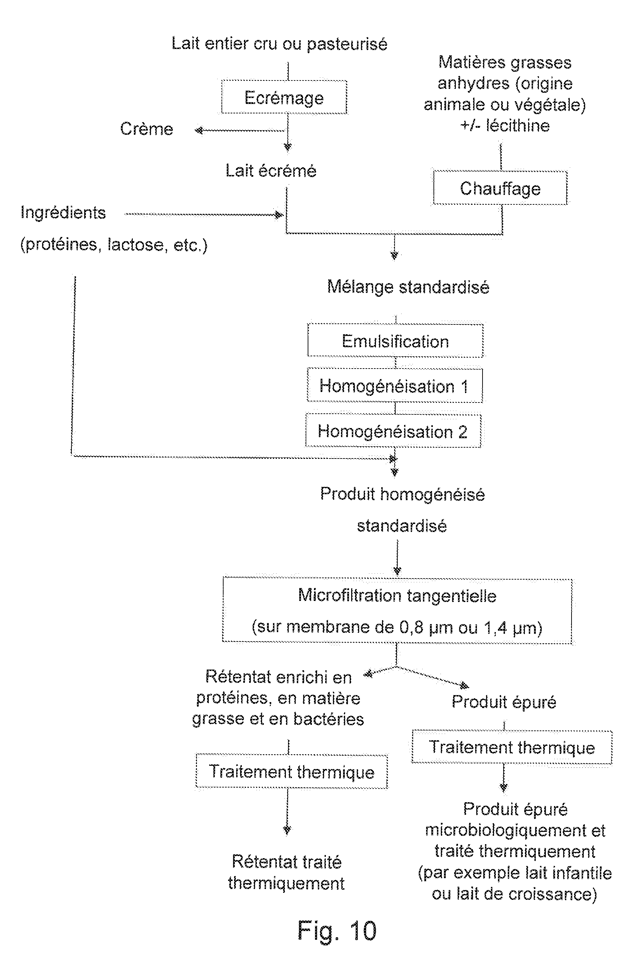

La figure 10 correspond à un schéma d'un procédé de traitement et de fabrication d'un lait infantile ou d'un lait de croissance, issu de lait de mammifère.

Les étapes suivantes sont avantageusement mises en oeuvre :

- on s'approvisionne en lait entier, cru ou pasteurisé,
- ce milieu est écrémé, de manière à séparer le lait écrémé (cru ou pasteurisé) et la crème,
- d'une part, des matières grasses anhydres (éventuellement chauffées à une température supérieure au point de fusion des matières grasses pour les rendre liquides), dans lesquelles sont introduites éventuellement de la lécithine et/ou des vitamines liposolubles, et d'autre part, des ingrédients complémentaires (protéines, lactose, minéraux, etc.), sont introduits dans le lait écrémé,
- ce produit standardisé fait l'objet d'une opération d'émulsification qui vise à disperser les matières grasses sous forme de gouttelettes,
- une étape d'homogénéisation est ensuite appliquée à ce produit standardisé en matière grasse et en protéines, cette étape comprenant ici deux opérations d'homogénéisation successives selon l'invention,
- éventuellement après une nouvelle introduction d'ingrédients complémentaires (protéines, lactose, minéraux, etc.), le produit standardisé homogénéisé fait ensuite l'objet d'une étape de microfiltration tangentielle sur membrane ce qui permet l'épuration bactérienne du perméat, de sorte à récupérer, d'une part, un perméat constituant le produit stérile (sans microorganismes) ou à une teneur au moins réduite en bactéries, et d'autre part, un rétentat enrichi en protéines, en matière grasse et en bactéries,
- ce produit épuré microbiologiquement peut être soumis à un traitement thermique final dont l'intensité va dépendre de la durée de conservation du lait recherchée ; en parallèle, le rétentat peut également être soumis à un traitement thermique pour sa valorisation.

De manière générale, l'invention permet de limiter l'intensité des traitements thermiques appliqués aux milieux alimentaires et/ou biologiques d'intérêt, contenant de la matière grasse, et ainsi de conserver ses qualités biochimiques, organoleptiques et nutritionnelles originelles.

Le procédé selon l'invention est en plus intéressant industriellement pour le lait de mammifères : des essais de microfiltration ont été réalisés sur des longues durées (supérieures à 7 heures) sans problèmes de colmatage des membranes. De plus, le demandeur a constaté que le milieu ainsi traité et pasteurisé peut être conservé jusqu'à 6 mois à 20°C, sans constater aucune déstabilisation physique du produit (précipitation des protéines changement d'aspect), ni contamination microbienne.

Le procédé de traitement est en plus simplifié par rapport aux procédés d'obtention de laits microfiltrés actuellement commercialisés : l'invention permet d'une part d'éliminer l'étape de traitement thermique de la crème, en circuit parallèle du lait écrémé qui est seul microfiltré, et d'autre part, d'éliminer les risques d'une nouvelle contamination lors du mélange de la crème traitée thermiquement et du lait écrémé épuré.

De plus, ce procédé permet l'utilisation des lignes de fabrication existantes dans l'industrie laitière (écrémeuse, homogénéisateur, pasteurisateur/stérilisateur, conditionneuse aseptique). Ce procédé permet encore l'utilisation de membranes minérales à résistance mécanique élevée (par exemple en céramique), en comparaison avec les membranes organiques utilisées dans les procédés de microfiltration dynamique.

Le lait épuré microbiologiquement selon l'invention peut être valorisé selon de nombreuses voies : lait de consommation, formules de laits infantiles/croissance, poudres ultra propres de lait enrichi en matière grasse (poudre « ultra low heat » qui sont actuellement fabriquées sans matière grasse), fromage à fermentation acide (yaourts, fromages blancs, fromages de chèvre).

A propos des caractéristiques organoleptiques et nutritionnelles, le lait obtenu par le procédé selon l'invention ne présente pas le goût de « cuit » lié au traitement thermique de type UHT, les protéines sont le moins dénaturées possible, ce qui ne diminue pas leur digestibilité et les vitamines liposolubles sont préservées.

EXEMPLES

Exemple 1 : Effet de la pression lors de la mise en **oeuvre** de **deux** opérations d'homogénéisation successives, sur le diamètre des gouttelettes lipidiques d'un lait entier et d'un lait demi-écrémé

Matériau de départ

Laits de vache de grand mélange, qui ont été standardisés pour faire un lait entier (36 à 40 g/kg) et un lait demi-écrémé (18 à 20 g/kg).

Conditions expérimentales :

Homogénéisateur employé : Rannie Lab 12/51 H (APV, Evreux, France)
Paramétrage : Pressions entre 200 et 1000 bar ; Température d'entrée = 45 $\pm$ 1°C ; Débit = 100 à 120 L/h
Détermination des paramètres granulométriques des gouttelettes lipidiques : Mastersizer 2000 (Malvern, UK)

Résultats :

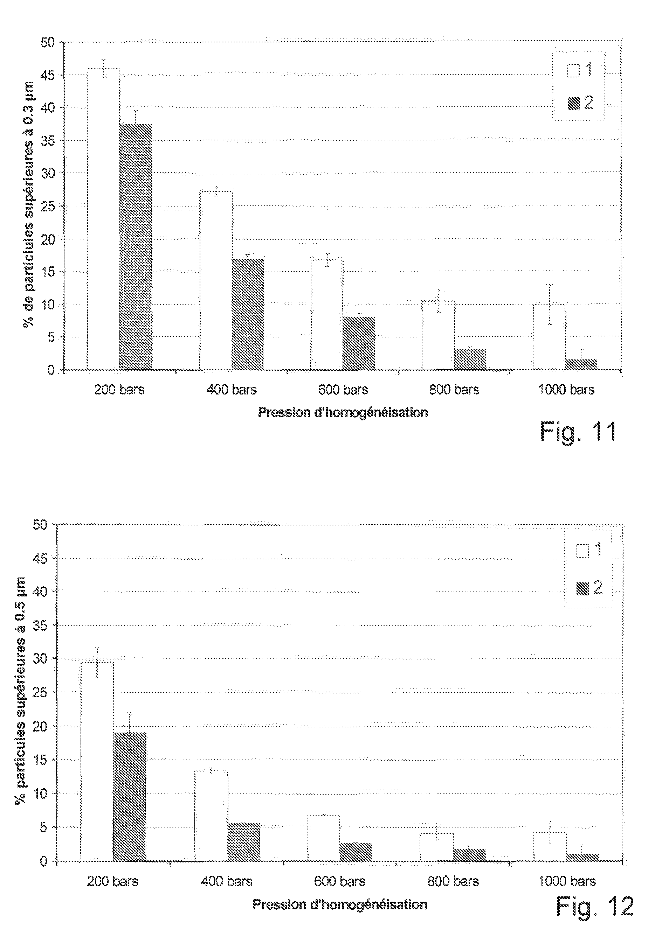

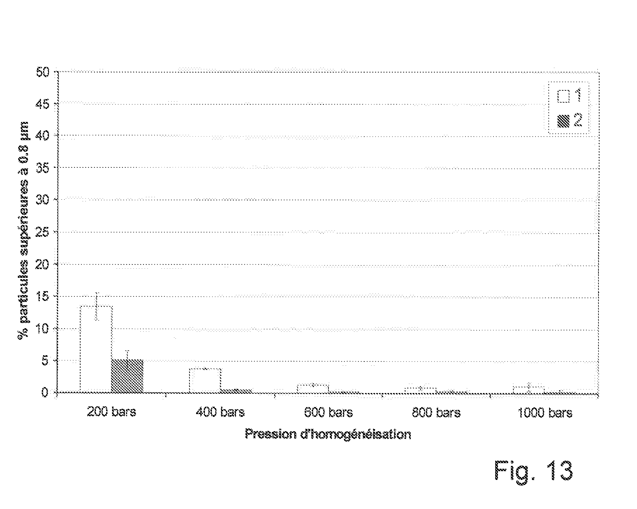

Les résultats sont présentés dans les figures 11 à 13, avec le pourcentage de particules supérieures à 0,3 $\mu$m, 0,5 $\mu$m et 0,8 $\mu$m respectivement, en fonction de la pression et du nombre d'homogénéisation.
Dans le cas de deux homogénéisations successives à une pression de 800 bar, on obtient en particulier les paramètres granulométriques suivants des gouttelettes lipidiques : mode = 0,13-0,14 $\mu$m ; $d_{32}$ = 0,12 $\mu$m ; $d_{43}$ = 0,15 $\mu$m.
Dans le cas de deux homogénéisations successives à une pression de 600 bar, on obtient en particulier les paramètres granulométriques suivants des gouttelettes lipidiques : mode = 0,14 $\mu$m ; $d_{32}$ = 0,12 $\mu$m ; $d_{43}$ = 0,16 $\mu$m.
Dans le cas de deux homogénéisations successives à une pression de 400 bar, on obtient en particulier les paramètres granulométriques suivants des gouttelettes lipidiques : mode = 0,15 $\mu$m $d_{32}$ = 0,13 $\mu$m ; $d_{43}$ = 0,2 $\mu$m.

Conclusion :

Quelle que soit la teneur en matière grasse dans le lait initial (lait entier ou lait partiellement écrémé), les résultats montrent que deux homogénéisations successives à une pression de 800 bar, permettent d'obtenir un milieu homogénéisé potentiellement adapté à une étape suivante de microfiltration sur une membrane 0,8 $\mu$m.
De même, deux homogénéisations successives à une pression de 400 ou 600 bar, permettent d'obtenir un milieu homogénéisé potentiellement adapté à une étape suivante de microfiltration sur une membrane 1,4 $\mu$m.

**Exemple 2 : Microfiltration tangentielle sur une membrane de 0,8 $\mu$m**

Matériau de départ :

Lait de vache de grand mélange standardisé en matière grasse et homogénéisé 2 fois.

Membranes de microfiltration :

Des membranes minérales (PALL EXEKIA, Tarbes, France ; 19 canaux avec 4 mm de diamètre; 1P19-40) avec un seuil de coupure de 0,8 $\mu$m et une double couche d'alumine (Sterilox), ont été utilisées.
La microfiltration tangentielle a été réalisée avec une pression transmembranaire uniforme (UTP), sur des membranes de longueurs différentes : 0,85 m et 1,02 m, correspondant à une surface de 0,2 m$^2$ et 0,24 m$^2$ respectivement.
Les résultats présentés ci-après ont été obtenus avec une membrane de 1,02 m de long (0,24 m$^2$ de surface).

Paramètres de microfiltration :

La vitesse de balayage choisie est de 7 m/s.
La pression d'alimentation utilisée variait de 1,7 à 2 bar.
La température de conduite de la microfiltration est de 56 $\pm$ 1°C.
Le facteur de concentration volumique (FCV) est fixé à 10.
Le débit de perméation est fixé à 200 L/h/m$^2$.
La microfiltration a été conduite sur une longue durée, c'est-à-dire 8 h 30 min.

Sont présentés ci-après les résultats de deux microfiltrations sur une membrane de 0,8 $\mu$m, réalisées sur une longue durée avec deux pressions d'homogénéisation du lait, à savoir 370 + 40 bar (exemple 2.1) ou 800 + 80 bar (exemple 2.2).

**Exemple 2.1 : Microfiltration d'un lait cru standardisé en matière grasse, homogénéisés deux fois successives à 370 + 40 bar**

Matériau de départ :

Lait de vache de grand mélange standardisé en matière grasse à 20,75 g/kg par ajout de lait écrémé dans du lait entier, puis homogénéisé deux fois à 370 + 40 bar (T entrée = 50°C).

Evolution de la pression transmembranaire

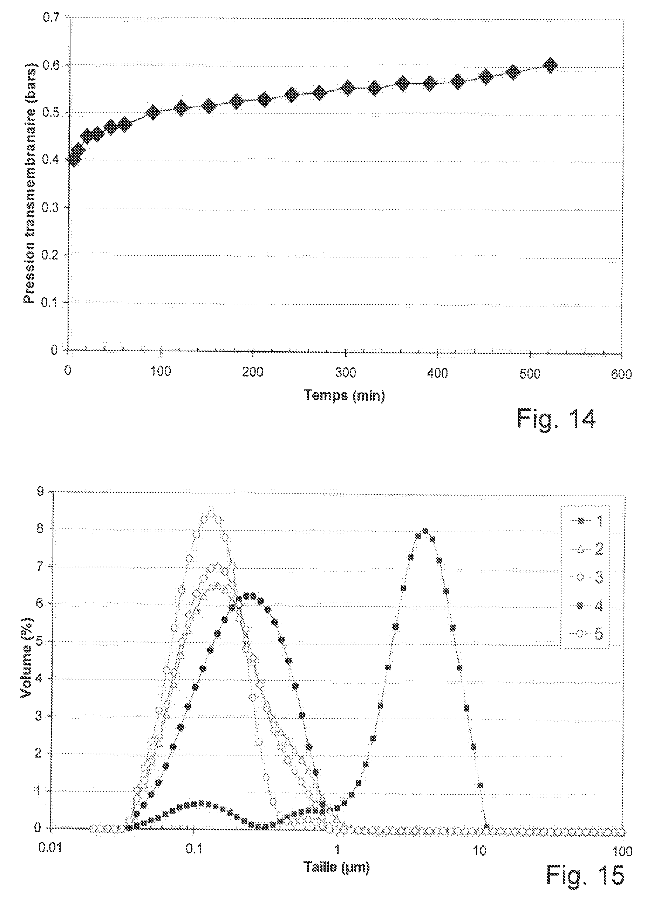

La figure 14 illustre l'évolution de la pression transmembranaire au cours du temps.

La pression transmembranaire a augmenté de 0,40 à 0,61 bar en 8 h 30. Cette évolution de la pression transmembranaire n'a pas conduit au colmatage de la membrane. Le débit, fixé à 200 L/h/m$^2$, n'évolue pas au cours du temps.

Dans ces conditions, 460 litres de lait homogénéisé ont été utilisés. Nous avons obtenu 408 litres de lait épuré.

Teneur bactérienne

La teneur bactérienne est précisée dans le tableau 1 ci-dessous.

Tableau 1 : flore totale et coliformes

| Echantillons | Coliformes totaux UFC / mL | Flore totale * UFC/ mL |
|---|---|---|
| Lait standardisé | $4.10^2$ | $5,5\ 10^4$ |
| Microfiltrat 0,8 $\mu$m à t=7h | < 1 | < 1 |
| * Flore aérobie mésophile revivifiable (FMAR) | | |

Composition biochimique du lait

La composition biochimique du lait, aux différents stades du procédé de traitement, est détaillée dans le tableau 2 ci-dessous.

Tableau 2 : Composition biochimique du lait à différentes étapes du procédé de traitement

| | pH | MG* g/kg | EST* g/kg | MAT* g/kg | NCN* g/kg | NPN* g/kg |
|---|---|---|---|---|---|---|
| Lait standardisé | 6,78 | 20,75 | 110,6 | 33,54 | 7,6 | 1,72 |
| Lait homogénéisé 2 | 6,65 | ND | 111,01 | 33,43 | 7,57 | 1,76 |
| Microfiltrat 1h | ND | 15,5 | 101,33 | 30,62 | 7,63 | 1,78 |
| Microfiltrat 3h | 6,68 | 15 | 100,92 | 30,23 | 7,62 | 1,80 |
| Microfiltrat 5h | ND | 14,75 | 100,7 | 30,1 | 7,75 | 1,82 |
| Microfiltrat 7h | 6,64 | 15,25 | 102,76 | 30,8 | 7,69 | 1,81 |
| Microfiltrat 8h | ND | 15,25 | ND | ND | ND | ND |
| Microfiltrat moyen 8h | ND | 15,5 | 102,24 | 30,46 | 7,89 | 1,83 |
| Rétentat 1h | ND | 57,3 | 164,25 | 52,27 | ND | ND |
| Rétentat 3h | 6,68 | 57 | 164,97 | 51,91 | ND | ND |
| Rétentat 5h | ND | 57 | 165,98 | 52,65 | ND | ND |
| Rétentat 7h | 6,64 | 59,3 | 165,7 | 52,06 | ND | ND |

(suite)

|  | pH | MG* g/kg | EST* g/kg | MAT* g/kg | NCN* g/kg | NPN* g/kg |
|---|---|---|---|---|---|---|
| Rétentat moyen 6h | ND | 61,75 | 169,23 | 53,71 | 7,75 | 1,72 |

ND = non déterminé Légende : Lait standardisé = lait avant traitement, standardisé en matière grasse ; Lait homogénéisé 2 = lait après les deux homogénéisations successives et avant l'étape de microfiltration tangentielle ; Microfiltrat et Rétentat = produits récupérés au cours de l'étape de microfiltration tangentielle sur membrane à 0,8μm, à différents temps (exprimés en heure).

* Abréviations : MG = matière grasse ; EST = extrait sec total ; MAT = Matière Azotée totale ; NCN = Azote non caséinique ; NPN = azote non protéique.

Les résultats montrent :

i) une absence d'évolution des taux de NCN (azote non caséinique) et NPN (azote non protéique), ce qui indique qu'il n'y a pas eu de dénaturation des protéines solubles ni d'hydrolyse des protéines totales au cours de l'ensemble du procédé ;
ii) un taux de passage de la matière grasse de 74.7%, c'est-à-dire (15,5 / 20,75) x 100 ;
iii) un taux de passage de la matière azotée totale de 90,82%, c'est-à-dire (30,46 / 33,54) x 100.

Distribution de tailles des gouttelettes lipidiques

La figure 15 représente la distribution de tailles des gouttelettes lipidiques à différents stades du procédé de traitement.
Les valeurs correspondantes sont encore détaillées dans le tableau 3 ci-dessous.

Tableau 3 : Paramètres granulométriques extraits des distributions de tailles des gouttelettes lipidiques

| Echantillons | Paramètres granulométriques | | | | | |
|---|---|---|---|---|---|---|
|  | Mode ($\mu$m) | $d_{32}$ ($\mu$m) | $d_{43}$ ($\mu$m) | > 0,3 $\mu$m (%) | > 0,5 $\mu$m (%) | > 0,8 $\mu$m (%) |
| Lait standardisé | 4,18 | 0,95 | 4,02 | 92.7 | 91.9 | 89.9 |
| Lait homogénéisé 1 | 0,15 | 0,14 | 0,23 | 21.9 | 8.9 | 1.9 |
| Lait homogénéisé 2 | 0,15 | 0,13 | 0,20 | 15.9 | 4.8 | 0.3 |
| Microfiltrat moyen 8h | 0,13 | 0,11 | 0,15 | 4.8 | 1.1 | 0.1 |
| Rétentat moyen 6h | 0,25 | 0,18 | 0,27 | 35.3 | 11.6 | 0.6 |

Lait standardisé = lait avant traitement, standardisé en matière grasse ; Lait homogénéisé 1 et 2 = lait ayant subi respectivement une, ou deux homogénéisations successives, avant l'étape de microfiltration tangentielle ; Microfiltrat et Rétentat = produits récupérés au cours de l'étape de microfiltration tangentielle sur membrane 0,8 $\mu$m, pendant respectivement 8h et 6h.

Conclusions :

i) La microfiltration sur membrane 0,8 $\mu$m permet de retenir dans le rétentat les bactéries du lait homogénéisé ; le lait est parfaitement épuré.
ii) Les différentes étapes du procédé ont préservé la qualité des protéines : pas de dénaturation des protéines solubles.
iii) Les paramètres du procédé ont permis l'obtention d'un lait épuré avec une teneur en matière grasse de 15 g/kg, ce qui correspond à un lait de consommation dit demi-écrémé.
iv) Les essais de microfiltration réalisés avec une membrane de 0,8 $\mu$m, sur une longue durée (temps > 7 heures), n'ont pas conduit à un colmatage de la membrane.

Ces résultats démontrent qu'il est possible de microfiltrer un lait contenant de la matière grasse dispersées sous forme de gouttelettes.

**Exemple 2.2 : Microfiltration d'un lait cru standardisé en matière grasse et en protéines préalablement homogénéisé deux fois successives à 800 + 80 bar**

Matériau de départ :

Lait de vache de grand mélange standardisé en matière grasse à 17,5 g/kg par ajout de crème au lait écrémé, et standardisé à 36 g/kg de protéines par ajout de rétentat de microfiltration de lait obtenu sur 0,1 $\mu$m. Ce lait standardisé a été homogénéisé deux fois à 800 + 80 bar (Tentrée = 45°C).

Evolution de la pression transmembranaire

La figure 16 illustre l'évolution de la pression transmembranaire au cours du temps.
La microfiltration a été conduite sur une longue durée, environ 7 heures (410 minutes). La pression transmembranaire a augmenté de 0,44 à 0,60 bar et n'a pas conduit au colmatage de la membrane. Là encore, le débit fixé à 200 L/h/m$^2$ n'évolue pas au cours du temps.
Pour la microfiltration, nous avons travaillé avec 364 litres de lait. 328 litres de lait épuré ont été obtenus.

Teneur bactérienne et cellules somatiques

La teneur bactérienne est précisée dans le tableau 4 ci-dessous.

Tableau 4 : flore totale et coliformes

| Echantillons | Coliformes UFC/mL | Flore totale UFC/mL |
|---|---|---|
| Lait standardisé | < 10 | 6,3 10$^3$ |
| Rétentat 0,8 $\mu$m | < 10 | 1,4 10$^4$ |
| Microfiltrat 0,8 $\mu$m | < 1 | < 1 |

D'autre part, les valeurs de taux de cellules somatiques sont détaillées dans le tableau 5 ci-dessous.

Tableau 5 : Cellules somatiques

| Echantillons | Quantité de cellules somatiques / mL |
|---|---|
| Lait standardisé | 152.10$^3$ |
| Rétentat 0,8 $\mu$m | 1.10$^3$ (*) |
| Microfiltrat 0,8 $\mu$m | 1.10$^3$ (*) |
| (*) bruit de fond de l'appareil de mesure | |

Composition biochimique du lait

La composition biochimique du lait, aux différents stades du procédé de traitement, est détaillée dans le tableau 6 ci-dessous.

Tableau 6 : Composition biochimique du lait à différentes étapes du procédé de traitement

| | pH | MG* g/kg | EST* g/kg | MAT* g/kg | NCN* g/kg | NPN* g/kg |
|---|---|---|---|---|---|---|
| Lait standardisé | 6,76 | 17,5 | 110,9 | 37,7 | 7,96 | 1,85 |
| Microfiltrat 0,8 $\mu$m | 6,73 | 15,25 | 105,1 | 34,8 | 7,43 | 1,92 |
| Rétentat 0,8 $\mu$m | 6,74 | 36,5 | 155,8 | 61,3 | 7,76 | 1,83 |

Légende : Lait standardisé = lait avant traitement, standardisé en matière grasse et protéines ; Microfiltrat et Rétentat = produits récupérés à l'issu de l'étape de microfiltration tangentielle sur membrane 0,8 $\mu$m à 7 heures.

* Abréviations : MG = matière grasse ; EST = extrait sec total ; MAT = matière azotée totale ; NCN = azote non caséinique ; NPN = azote non protéique.

Les résultats montrent :

i) une perte du NCN de 7%.
ii) un taux de passage de la matière grasse à travers la membrane de : (15,25 / 17,5) x 100 = 87,14 %
iii) un taux de passage de la matière azotée totale à travers la membrane de : (34,8 / 37,7) x 100 = 92,31 %

La microfiltration sur membrane 0,8 $\mu$m conduit à une légère rétention de matière azotée totale (MAT) et de matière grasse (MG). Toutefois, la composition du microfiltrat en MAT et en MG est conforme à l'objectif de préparation d'un lait de consommation dit « demi-écrémé ».

Distribution de tailles des gouttelettes lipidiques

La figure 17 représente la distribution de tailles des gouttelettes lipidiques à différents stades du procédé de traitement.

Les valeurs correspondantes sont encore détaillées dans le tableau 7 ci-dessous.

Tableau 7 : Paramètres granulométriques extraits des distributions de tailles des gouttelettes

| Echantillons | Paramètres granulométriques | | | | | |
|---|---|---|---|---|---|---|
| | Mode ($\mu$m) | $d_{32}$ ($\mu$m) | $d_{43}$ ($\mu$m) | > 0,3 $\mu$m (%) | > 0,5 $\mu$m (%) | > 0,8 $\mu$m (%) |
| Lait standardisé | 4,01 | 0,96 | 3,83 | 92.9 | 91.2 | 89.0 |
| Lait homogénéisé 1 | 0,13 | 0,12 | 0,17 | 9.9 | 3.9 | 0.7 |
| Lait homogénéisé 2 | 0,12 | 0,11 | 0,14 | 3.7 | 1.6 | 0.2 |
| Microfiltrat 0,8 $\mu$m | 0,14 | 0,11 | 0,14 | 0.1 | 0.0 | 0.0 |
| Rétentat 0,8 $\mu$m | 0,15 | 0,13 | 0,18 | 13.6 | 3.5 | 0.2 |

Lait standardisé = lait avant traitement, standardisé en matière grasse et en protéines ; Lait homogénéisé 1 et 2 = lait ayant subi respectivement une, ou deux homogénéisations successives, avant l'étape de microfiltration tangentielle ; Microfiltrat et Rétentat = produits récupérés au cours de l'étape de microfiltration tangentielle sur membrane 0,8 $\mu$m à 7h.

Conclusions :

i) La microfiltration tangentielle sur une membrane de 0,8 $\mu$m retient près de 100% de la flore totale présente dans le lait homogénéisé deux fois à 800 + 80 bar. Le lait était parfaitement épuré.
ii) Les cellules somatiques sont détruites par l'homogénéisation. Par conséquent, on n'en dénombre pas dans le rétentat, ni dans le perméat.
iii) Les paramètres du procédé ont permis d'atteindre les objectifs en termes de concentrations en matière grasse et en protéines, qui correspondent à un lait de consommation dit « demi-écrémé ».
iv) Le procédé a conduit à une diminution du NCN de 7%, qui pourrait correspondre à une légère dénaturation des protéines solubles.
iv) D'un point de vue technologique, cette pression d'homogénéisation de 800 + 80 bar permet d'augmenter significativement le passage de matière grasse à travers la membrane de 0,8 $\mu$m (87,14% contre 74,7% pour une pression d'homogénéisation de 370 + 40 bar).
iv) Les essais de microfiltration réalisés avec une membrane de 0,8 $\mu$m, selon les paramètres prédéfinis, ont été conduits sur une longue durée (temps > 7 heures) sans colmatage de la membrane. Ces résultats confirment qu'il est possible de microfiltrer tangentiellement un lait contenant de la matière grasse.

**Exemple 3 : Traitement thermique des laits microfiltrés et essais de longue conservation**

**Exemple 3.1 : Microfiltration tangentielle sur une membrane de 0,8 μm d'un lait standardisé, puis traitement thermique**

Matière première :

Utilisation i) de lait écrémé (issu de lait entier pasteurisé à l'usine : 74°C, 10 sec) et ii) de crème, achetés à une laiterie locale.

Le lait a été standardisé à 17,5 g/kg de matière grasse et à 36 g/kg de protéines (apport d'un concentré (x3) en caséines obtenu par microfiltration sur membrane 0,1 μm)

Procédé : homogénéisation et microfiltration

Le lait a été homogénéisé 2 fois à 800 + 80 bar (Tentrée = 45°C).

Pour la microfiltration, une membrane minérale (PALL EXEKIA, Tarbes, France; 19 canaux avec 4 mm de diamètre ; 1P19-40), avec un seuil de coupure de 0,8 μm et une double couche d'alumine (Sterilox), a été utilisée.

La microfiltration a été réalisée avec une pression transmembranaire uniforme (UTP), sur une membrane de longueur 1,02 m, correspondant à une surface de 0,24 m$^2$.

La vitesse de balayage choisie pour les essais était de 7 m/s. La pression d'alimentation utilisée variait de 1,7 à 2 bar. La température de conduite de la microfiltration était 56 ± 1°C. Le facteur de concentration volumique (FCV) était fixé à 10. Le débit de perméation était fixé à 200 L/h/m$^2$.

Traitement thermique du lait

Le microfiltrat est conditionné dans un conteneur stérile puis introduit dans le pilote de traitement thermique (UHT, HTST Lab-Electric, model 25DH ; Microthermics, Etats-Unis).

Deux traitements thermiques différents ont été appliqués aux laits :

(1) 96 ± 0.5°C pendant 6 secondes,
(2) 140 ± 2°C pendant 3 à 4 secondes, pour comparer avec les laits UHT du commerce.

Conservation des laits

Les laits homogénéisés et microfiltrés ont été conditionnés stérilement et stockés à 2 températures différentes, 20°C et 30°C. En effet, les laits de consommation UHT du commerce se conservent à température ambiante (20°C). L'incubation des laits a été réalisée à 30°C pour s'assurer de la qualité microbiologique des laits homogénéisés et épurés : cette température de 30°C permet d'accélérer les mécanismes de dégradation des laits, comme l'hydrolyse des protéines, et favorise le développement bactérien.

Suivi de l'évolution des laits au cours du temps

L'évolution biochimique des laits a été caractérisée au cours du temps par la quantification de la dégradation enzymatique des caséines du lait. Ainsi, des mesures de l'azote non caséinique (NCN) et non protéique (NPN) ont été réalisées au cours du temps. Le NCN et le NPN sont des indicateurs de dégradation des protéines du lait. Des analyses microbiologiques et des tests de stabilité ont également été réalisés (test de Ramsdell ; Ramsdell et al., 1931).

Résultats

i) Développement bactérien

Aucun développement bactérien n'a été observé au cours des 180 jours de stockage à 20°C ou à 30°C des laits traités thermiquement (flore totale = 0 bactérie dans 10 mL).

ii) Evolution des concentrations en NPN et en NCN

Les figures 18 et 19 illustrent les résultats correspondant à l'évolution des concentrations en NPN et en NCN (g/kg) des laits conservés respectivement à 20°C et 30°C, au cours du temps (jours).

Les figures 20 et 21 visent à comparer l'évolution de la concentration en NCN et en NPN (g/kg) respectivement, au cours du temps (jours), entre les laits expérimentaux et des laits industriels UHT (Traitement UHT : 140°C, 3 à 4 secondes; n=4). La figure 20 montre également que le procédé mis en oeuvre, à savoir la succession de 2 homogénéisations suivie d'une microfiltration sur membrane avec un seuil de coupure de 0,8 μm, n'altère pas le NCN par rapport au lait cru du départ (points à t = 0). Par contre, les traitements thermiques appliqués après la microfiltration diminuent le NCN, ce qui correspond à une dénaturation des protéines solubles.

Au cours des 180 jours de stockage à 20°C des laits traités thermiquement, il n'y a pas eu d'évolution significative des concentrations en NCN et en NPN. Cette durée de 180 jours est le double de la date limite de consommation pour les laits UHT actuellement commercialisés.

Après une conservation de 1 mois à 30°C (température utilisée pour tester la stérilité du lait en condition accélérée), le lait microfiltré non traité thermiquement évolue de 6,96 à 13,84 g/kg de NCN (+ 6,88 g/kg) ; cette évolution peut être due à l'action des enzymes présentes dans le lait. Le même lait traité thermiquement (96°C, 6 secondes) évolue de 4,24 à 4,73 g/kg de NCN (+ 0.5 g/kg ; figure 19).

Avec l'objectif de conserver plus de 3 mois à température ambiante (20°C) le lait homogénéisé et microfiltré sur une membrane de 0,8 μm, un traitement thermique est intéressant pour éviter les évolutions biochimiques. Ce traitement thermique doit être suffisant pour inactiver les enzymes susceptibles d'altérer la qualité du lait (protéolyse, lipolyse, déstabilisation physique, mauvais goûts, etc.).

iii) Résultats du test de Ramsdell

Les résultats obtenus par la mise en oeuvre du test de Ramsdell sont détaillés dans la figure 22 et le tableau 8 ci-dessous.

Tableau 8 : résultats du test de Ramsdell

| Les valeurs correspondent à un volume, exprimé en mL de $KH_2PO_4$ 0,5 M. | | | | |
|---|---|---|---|---|
| Temps (jours) | Température de conservation des laits | | | |
| | 20°C | | 30°C | |
| | Traitement thermique des laits | | Traitement thermique des laits | |
| | 96°C, 6 sec | 140°C, 4 sec | 96°C, 6 sec | 140°C, 4 sec |
| 2 | 1,7 | 1,8 | ND | ND |
| 6 | 1,7 | 1,8 | 1,7 | 1,8 |
| 15 | 2,1 | 2,1 | 2,1 | 2,1 |
| 90 | 1,7 | 1,7 | 1,8 | 1,7 |
| 120 | 1,3* | 1,8 | 0* | 2,3 |
| (*) Diminution significative de la stabilité du lait ; ND = non déterminé | | | | |

Conclusions

i) Les laits homogénéisés, microfiltrés puis traités thermiquement ont été conservés pendant 6 mois à 20°C sans aucun développement bactérien, ce qui démontre leur stérilité. L'opération de microfiltration stérilise le lait ce qui permet ensuite de diminuer l'intensité des traitements thermiques par rapport aux traitements UHT réalisés actuellement au niveau industriel sur des laits non microfiltrés. Particulièrement, nous avons montré qu'un traitement thermique de 96°C pendant 6 secondes permet d'obtenir un lait de longue conservation à 20°C. Par comparaison, les laits du commerce qui sont traités thermiquement à 140°C pendant 4 secondes ont une date limite de consommation (DLC) de 3 mois.

ii) Le lait expérimental microfiltré traité thermiquement à 140°C pendant 4 secondes, a une teneur en NCN supérieure aux laits industriels UHT (n=4). Ceci montre qu'il y a moins de dénaturation des protéines solubles dans le lait expérimental microfiltré. Le NCN du lait expérimental traité à 96°C pendant 6 secondes est plus élevé que celui des laits industriels (n=4).

L'évolution au cours du temps du NCN des laits traités à 96°C pendant 6 secondes est similaire à celle des laits traités thermiquement à 140°C pendant 4 secondes.

iii) Aucune différence significative de NPN n'a été observée entre les laits traités thermiquement à 140°C pendant 4 secondes, les laits industriels UHT et le lait expérimental traité à 96°C pendant 6 secondes.

iv) Au regard des résultats issus du test de Ramsdell, la stabilité du lait expérimental microfiltré, traité thermiquement à 96°C pendant 6 secondes, diminue à 120 jours.

**Exemple 3.2 : Microfiltration tangentielle sur une membrane de 1,4 $\mu$m d'un lait partiellement écrémé, puis traitement thermique et suivi des laits au cours de leur conservation à froid**

Matériau de départ

Lait de vache cru de grand mélange, standardisé en matière grasse à 17,5 g/kg.

Après écrémage du lait entier sur l'écrémeuse Elecrem à 50°C, la crème a été ajoutée au lait écrémé pour réaliser la standardisation à 17,5 g/kg de matière grasse.

Homogénéisation

Le lait standardisé à 17,5 g/kg de matière grasse a été chauffé à 45°C puis homogénéisé deux fois successives à 600+60 bar (homogénéisateur Rannie Lab 12/51 H, ATS, Moissy Cramayel, France).

Paramètres de la microfiltration tangentielle

Des membranes minérales (PALL EXEKIA, Tarbes, France ; 19 canaux avec 4 mm de diamètre, longueur 1,02 m ; surface de 0,24 m$^2$ ; 1P19-40) avec une double couche d'alumine (Sterilox) et un seuil de coupure de 1,4 $\mu$m ont été utilisées.

L'étape de microfiltration tangentielle a été réalisée avec une pression transmembranaire uniforme (UTP).

Les paramètres de la microfiltration sont les suivants :

- La vitesse de balayage est de 7 m/s (soit un débit de recirculation de 6 m$^3$/h),
- La pression d'alimentation est de 1,8 bar,
- La température de conduite de la microfiltration est de 57 $\pm$ 1°C,
- Le facteur de concentration volumique (FCV) est fixé à FCV = 10,
- Le débit de perméation est fixé à 290 L/h/m$^2$ (soit 70 L/h pour une membrane de 0,24 m$^2$).

La microfiltration tangentielle a été conduite sur une longue durée, c'est-à-dire environ 5 heures.

Traitement thermique et conditionnement

Le lait standardisé à 17,5 g/kg de matière grasse, homogénéisé deux fois à 600+60 bar puis microfiltré sur 1,4 $\mu$m a été :

(i) conditionné sans traitement thermique en conditions stériles ou

(ii) traité thermiquement à 72°C pendant 18 secondes (pilote de traitement thermique HTST Lab-Electric, model 25DH, Microthermics, Etats-Unis).

Les laits ont été conditionnés dans des flacons stériles.

Conservation des laits

Les laits homogénéisés, microfiltrés sur 1,4 $\mu$m puis (i) non-traités thermiquement ou (ii) traités thermiquement à 72°C pendant 18 secondes (pasteurisation), ont été stockés en chambre froide à 5 $\pm$ 1°C. Leurs évolutions biochimiques et microbiologiques ont été caractérisées au cours du temps.

Suivi de l'évolution des laits au cours du temps

L'évolution biochimique au cours du temps des laits a été caractérisée par la quantification de la dégradation enzymatique des caséines du lait. Ainsi, des mesures de l'azote non caséinique (NCN) et non protéique (NPN) ont été réalisées au cours du temps. Le NCN et le NPN sont des indicateurs de dégradation des protéines du lait. Des analyses microbiologiques ont également été réalisées.

Résultats

i) Evolution de la pression transmembranaire au cours de l'étape de microfiltration tangentielle

La figure 23 illustre l'évolution de la pression transmembranaire au cours du temps.

La pression transmembranaire a augmenté de 0,33 à 0,345 bar pendant les 5 heures de la microfiltration tangentielle. Ensuite, l'alimentation en produit s'est épuisée et l'expérience a été arrêtée. Cette évolution n'a pas conduit au colmatage de la membrane.

ii) Teneur bactérienne et cellules somatiques

Les teneurs bactériennes et les teneurs en cellules somatiques des produits obtenus aux différents stades du procédé de traitement sont précisées dans le tableau 9 ci-dessous.

Tableau 9 : Coliformes, flore totale et cellules somatiques

| Echantillons | Coliformes (UFC/mL) | Flore totale* (UFC/mL) | Cellules somatiques (par mL) |
|---|---|---|---|
| Lait entier | 113 | $1,1 \cdot 10^4$ | 221 000 |
| Lait standardisé | 150 | $9,8 \cdot 10^3$ | 95 000 |
| Lait homogénéisé 1 | <10 | $3,7 \cdot 10^3$ | 87 000 |
| Lait homogénéisé 2 | <1 | $6,6 \cdot 10^2$ | 0 |
| Lait microfiltré | <1 | <10 | 0 |
| Lait microfiltré pasteurisé | <1 | <1 | 0 |
| Rétentat | <1 | $3 \cdot 10^3$ | 0 |

* Flore aérobie mésophile revivifiable (FMAR)
Légende : Lait standardisé = lait standardisé à 17,5 g/kg de matière grasse ; Lait homogénéisé 1 = Lait standardisé homogénéisé une fois à 600 + 60 bar ; Lait homogénéisé 2 = Lait standardisé homogénéisé deux fois successives à 600 + 60 bar ; Lait microfiltré et Rétentat = produits récupérés au cours de l'étape de microfiltration tangentielle sur une membrane de 1,4 $\mu$m; Lait microfiltré pasteurisé = lait microfiltré traité thermiquement à 72°C pendant 18 secondes.

iii) Composition biochimique des produits

La composition biochimique des produits obtenus aux différents stades du procédé de traitement, est détaillée dans le tableau 10 ci-dessous.

Tableau 10 : Composition biochimique des produits à différentes étapes du procédé de traitement

| | pH | MG* g/kg | EST* g/kg | MAT* g/kg | NCN* g/kg | NPN* g/kg |
|---|---|---|---|---|---|---|
| Lait entier | 6,6 | ND | ND | 33,8 | 7,1 | 1,6 |
| Lait standardisé | 6,76 | 17,5 | 107,39 | 34,2 | 7,1 | 1,7 |
| Lait homogénéisé 1 | ND | ND | ND | ND | ND | ND |
| Lait homogénéisé 2 | ND | ND | ND | ND | ND | ND |
| Lait microfiltré | 6,64 | 17 | 105,18 | 33,0 | 6,9 | 1,7 |
| Lait microfiltré pasteurisé | 6,66 | 17 | 105,18 | 33,0 | 6,7 | 1,7 |
| Rétentat | 6,56 | 29 | 124,21 | 40,9 | 7,0 | 1,7 |

Légende : Lait standardisé = lait standardisé à 17,5 g/kg de matière grasse ; Lait homogénéisé 1 = Lait standardisé homogénéisé une fois à 600 + 60 bar ; Lait homogénéisé 2 = Lait standardisé homogénéisé deux fois à 600 + 60 bar ; Lait microfiltré et Rétentat = produits récupérés au cours de l'étape de microfiltration tangentielle sur une mem-brane de 1,4 $\mu$m ; Lait microfiltré pasteurisé = lait microfiltré traité thermiquement à 72°C pendant 18 secondes.
* Abréviations : MG = matière grasse ; EST = extrait sec total ; MAT = matière azotée totale ; NCN = azote non caséinique ; NPN = azote non protéique. ND = non déterminé.

iv) Taille des gouttelettes lipidiques

La figure 24 représente la distribution de tailles des gouttelettes lipidiques à différents stades du procédé de traitement.

Les valeurs correspondantes sont encore détaillées dans le tableau 11 ci-dessous.

Tableau 11 : Paramètres granulométriques extraits des distributions de tailles des gouttelettes lipidiques.

| | Paramètres granulométriques | | | | | |
|---|---|---|---|---|---|---|
| | Mode $\mu$m | $d_{32}$ $\mu$m | $d_{43}$ $\mu$m | < 0,3 $\mu$m % | < 0,5 $\mu$m % | < 0,8 $\mu$m % |
| Lait standardisé | 3.78 | 2.50 | 3.90 | 0.93 | 2.33 | 3.86 |
| Lait homogénéisé 1 | 0.14 | 0.13 | 0.21 | 82.35 | 92.48 | 98.46 |
| Lait homogénéisé 2 | 0.14 | 0.12 | 0.17 | 90.39 | 96.91 | 99.78 |
| Microfiltrat | 0.14 | 0.11 | 0.16 | 93.26 | 98.10 | 99.85 |
| Rétentat | 0.19 | 0.17 | 0.44 | 69.26 | 87.69 | 95.78 |

Légende : Lait standardisé = lait standardisé à 17,5 g/kg de matière grasse, avant traitement ; Lait homogénéisé 1 = lait homogénéisé 1 fois à 600 + 60 bar ; Lait homogénéisé 2 = lait homogénéisé 2 fois successives à 600 + 60 bar ; Microfiltrat et Rétentat = produits récupérés au cours de l'étape de microfiltration tangentielle sur une membrane de 1,4 $\mu$m.

v) Suivi des laits au cours du stockage

v-1) Développement bactérien

Les teneures bactériennes des laits partiellement écrémés, microfiltrés sur 1,4 $\mu$m puis (i) non-traités thermiquement ou (ii) traités thermiquement à 72°C pendant 18 secondes (pasteurisation), ont été caractérisées tous les 3 jours au cours de leur conservation à 5 $\pm$ 1°C.

Les résultats sont les suivants : pas d'évolution bactérienne au cours de la conservation pendant 84 jours à 5 $\pm$ 1 °C des laits (i) non traités thermiquement et (ii) traités thermiquement à 72°C pendant 18 secondes (pasteurisation).

Les teneurs bactériennes sont restées inférieures à 10 UFC/mL dans les laits non traités thermiquement et inférieures à 1 UFC/mL dans les laits pasteurisés.

Cette durée de conservation des laits microfiltrés sur 1,4 $\mu$m puis (i) non-traités thermiquement ou (ii) traités thermiquement à 72°C pendant 18 secondes (pasteurisation) est bien supérieure à la date limite de consommation fixée par la législation pour un lait pasteurisé.

v-2) Evolution des concentrations en NPN et en NCN

La figure 25 illustre les résultats correspondant à l'évolution des concentrations en NPN et en NCN (g/kg) des laits conservés en chambre froide à 5 $\pm$ 1 °C, au cours du temps (jours).

<u>Conclusions :</u>

(a) La microfiltration sur 1,4 $\mu$m du lait standardisé à 17,5 g/kg de matière grasse et homogénéisé deux fois successivement à 600 + 60 bar a été réalisée sur une durée de 5 heures, sans aucun problème de colmatage.

(b) La microfiltration sur 1,4 $\mu$m a permis l'épuration bactérienne du lait standardisé à 17,5 g/kg de matière grasse et homogénéisé deux fois à 600 + 60 bar. Dans le lait microfiltré, la teneur bactérienne était inférieure à 10 UFC/mL. Après le traitement thermique, la teneur bactérienne était inférieure à 1 UFC/mL.

(c) Au cours de l'étape de microfiltration tangentielle sur 1,4 $\mu$m du lait standardisé à 17,5 g/kg et homogénéisé deux fois successives à 600 + 60 bar, le passage de la matière grasse au travers de la membrane était de 97,1% et le passage de la matière azotée totale était de 96,5%. Les résultats montrent qu'il n'y a pas eu d'évolution significative des pourcentages de passage de matière grasse et de matière azotée totale à travers la membrane au cours des 5 heures de conduite de la microfiltration.

(d) Au cours du procédé d'homogénéisation et de microfiltration tangentielle sur 1,4 $\mu$m, 3,7% des protéines solubles du lait ont été dénaturées. Après l'étape de traitement thermique (72°C pendant 18 secondes), 7,4% des protéines solubles ont été dénaturées.

(e) Les laits microfiltrés sur 1,4 μm puis (i) non traités thermiquement ou (ii) traités thermiquement à 72°C pendant 18 secondes ont été conservés à 5 ± 1°C pendant 84 jours sans aucune évolution de leur teneur bactérienne. D'un point de vue biochimique, le NCN des deux types de laits a légèrement augmenté au cours du temps, alors que le NPN n'a pas augmenté de manière significative. Cette durée de conservation des laits est bien supérieure à celle des laits pasteurisés commercialisés actuellement, ce qui démontre l'intérêt du procédé développé.

**Exemple 3.3 : Microfiltration tangentielle sur une membrane de 1,4 μm d'un lait entier, puis traitement thermique et suivi des laits au cours de leur conservation à froid**

Matériau de départ

Lait de vache cru de grand mélange, standardisé en matière grasse à 38 g/kg.

Après écrémage du lait entier sur l'écrémeuse Elecrem à 50°C, la crème a été ajoutée au lait écrémé pour réaliser la standardisation à 38 g/kg de matière grasse.

Partant de ce lait, les conditions expérimentales sont quasi-identiques à celles décrites ci-dessus dans l'Exemple 3.2 relatif à un lait partiellement écrémé.

En pratique, seuls deux paramètres diffèrent :

- lors de l'étape de microfiltration tangentielle, le débit de perméation est fixé à 250 L/h/m² (soit 60 L/h pour une membrane de 0,24 m²) et cette microfiltration tangentielle a été conduite sur une longue durée, c'est-à-dire 7 heures ; et

- le traitement thermiquement consiste en une température de 72°C pendant 15 secondes (pilote de traitement thermique HTST Lab-Electric, model 25DH, Microthermics, Etats-Unis).

Résultats

i) Evolution de la pression transmembranaire au cours de l'étape de microfiltration tangentielle

La figure 26 illustre l'évolution de la pression transmembranaire au cours du temps.

La pression transmembranaire a évolué de 0,27 à 0,40 bar pendant les 7 heures de la microfiltration tangentielle. Ensuite, l'alimentation en produit s'est épuisée et l'expérience a été arrêtée. Cette évolution de la pression transmembranaire n'a pas conduit au colmatage de la membrane.

ii) Teneur bactérienne

Les teneurs bactériennes des produits obtenus aux différents stades du procédé de traitement sont précisées dans le tableau 12 ci-dessous.

Tableau 12 : Coliformes, thermophiles et flore totale

| Echantillons | Coliformes (UFC/mL) | Thermophiles (UFC/mL) | Flore totale* (UFC/mL) |
|---|---|---|---|
| Lait entier | 45,8 | 16,8 | $11 \cdot 10^3$ |
| Lait standardisé | 40,8 | 19,1 | $9,8 \cdot 10^3$ |
| Lait homogénéisé 1 | 1,7 | <1 | $8,2 \cdot 10^3$ |
| Lait homogénéisé 2 | <1 | <1 | $3,7 \cdot 10^3$ |
| Microfiltrat 1h | <1 | <1 | <10 |
| Microfiltrat 2h | <1 | <1 | <10 |
| Microfiltrat 4h | <1 | <1 | <10 |
| Lait microfiltré | <1 | <1 | <10 |
| Lait microfiltré pasteurisé | <1 | <1 | <1 |
| Rétentat 1h | <1 | <1 | $25 \cdot 10^3$ |
| Rétentat 2h | <1 | <1 | $23 \cdot 10^3$ |

(suite)

| Echantillons | Coliformes (UFC/mL) | Thermophiles (UFC/mL) | Flore totale* (UFC/mL) |
|---|---|---|---|
| Rétentat 4h | <1 | <1 | 24 10$^3$ |

* Flore aérobie mésophile revivifiable (FMAR) Légende : Lait standardisé = lait standardisé à 38 g/kg de matière grasse ; Lait homogénéisé 1 = Lait standardisé homogénéisé une fois à 600 + 60 bar ; Lait homogénéisé 2 = Lait standardisé homogénéisé deux fois à 600 + 60 bar ; Microfiltrat et Rétentat = produits récupérés au cours de l'étape de microfiltration tangentielle sur une membrane de 1,4 μm en fonction du temps (en heures) ; Lait microfiltré = microfiltrat conditionné stérilement ; Lait microfiltré pasteurisé = lait microfiltré traité thermiquement à 72°C pendant 15 secondes puis conditionné stérilement.

iii) Composition biochimique des produits

La composition biochimique des produits obtenus aux différents stades du procédé de traitement, est détaillée dans le tableau 13 ci-dessous.

Tableau 13: Composition biochimique des produits à différentes étapes du procédé de traitement

| | pH | MG* g/kg | EST* g/kg | MAT* g/kg | NCN* g/kg | NPN* g/kg |
|---|---|---|---|---|---|---|
| Lait entier | 6,74 | 45,5 | 128,49 | 33,54 | 7,51 | 1,62 |
| Lait standardisé | 6,74 | 38 | 124,63 | 33,51 | 7,50 | 1,67 |
| Lait homogénéisé 1 | 6,60 | ND | ND | 33,51 | 6,98 | 1,44 |
| Lait homogénéisé 2 | 6,65 | 37,25 | ND | 33,51 | 6,87 | 1,47 |
| Microfiltrat 1h | 6,64 | 34,5 | ND | 31,97 | ND | ND |
| Microfiltrat 2h | 6,60 | 34,5 | ND | 32,24 | ND | ND |
| Microfiltrat 4h | 6,69 | 34,75 | ND | 32,24 | ND | ND |
| Microfiltrat 6h | ND | 33,75 | ND | 32,12 | ND | ND |
| Microfiltrat 7h | ND | 34,50 | ND | 32,07 | ND | ND |
| Microfiltrat moyen | 6,67 | 34,40 | ND | 32,25 | ND | ND |
| Rétentat 1h | 6,67 | 62 | ND | 43,39 | ND | ND |
| Rétentat 2h | 6,66 | 64 | ND | 44,54 | ND | ND |
| Rétentat 4h | 6,66 | 67,5 | ND | 45,24 | ND | ND |
| Rétentat 6h | ND | 66,12 | ND | 45,96 | ND | ND |
| Rétentat 7h | ND | 67,18 | ND | 45,89 | ND | ND |
| Rétentat moyen | 6,58 | 65,36 | ND | 45,52 | ND | ND |
| Lait microfiltré | 6,67 | 34,25 | 120,43 | 31,79 | 7,02 | 1,73 |
| Lait microfiltré pasteurisé | 6,67 | 34,5 | 120,66 | 32,16 | 6,54 | 1,73 |

Légende : Lait standardisé = lait standardisé à 38 g/kg de matière grasse ; Lait homogénéisé 1 = Lait standardisé homogénéisé une fois à 600 + 60 bar ; Lait homogénéisé 2 = Lait standardisé homogénéisé deux fois à 600 + 60 bar ; Microfiltrat et Rétentat = produits récupérés au cours de l'étape de microfiltration tangentielle sur une membrane de 1,4 μm au cours du temps (en heures) ; Lait microfiltré = microfiltrat conditionné stérilement ; Lait microfiltré pasteurisé = lait microfiltré traité thermiquement à 72°C pendant 15 secondes.

Abréviations : MG = matière grasse ; EST = extrait sec total ; MAT = matière azotée totale ; NCN = azote non caséinique ; NPN = azote non protéique. ND = non déterminé.

iv) Taille des gouttelettes lipidiques

La figure 27 représente la distribution de tailles des gouttelettes lipidiques à différents stades du procédé de traitement.

Les valeurs correspondantes sont encore détaillées dans le tableau 14 ci-dessous.

Tableau 14 : Paramètres granulométriques extraites des distributions de tailles des gouttelettes lipidiques.

| | Paramètres granulométriques | | | | | |
|---|---|---|---|---|---|---|
| | Mode µm | $d_{32}$ µm | $d_{43}$ µm | < 0,3 µm % | < 0,5 µm % | < 0,8 µm % |
| Lait standardisé | 3,81 | 3,51 | 4,18 | 0 | 0 | 0 |
| Lait homogénéisé 1 | 0.15 | 0.14 | 0.25 | 74.76 | 87.90 | 96.50 |
| Lait homogénéisé 2 | 0.15 | 0.13 | 0.19 | 85.24 | 94.9 | 99.53 |
| Microfiltrat 1,4 µm | 0.14 | 0.12 | 0.17 | 91.15 | 97.25 | 99.82 |
| Rétentat 1,4 µm | 0.18 | 0.16 | 0.26 | 68.94 | 86.97 | 98.23 |

Légende : Lait standardisé = lait standardisé à 38 g/kg de matière grasse, avant traitement ; Lait homogénéisé 1 = lait homogénéisé 1 fois à 600 + 60 bar ; Lait homogénéisé 2 = lait homogénéisé 2 fois à 600 + 60 bar ; Microfiltrat et Rétentat = produits récupérés au cours de l'étape de microfiltration tangentielle sur une membrane de 1,4 µm.

v) Suivi des laits au cours de leur conservation

v-1) Développement bactérien

Les teneures bactériennes des laits standardisés à 38 g/kg de matière grasse, homogénéisés deux fois à 600+60 bar, microfiltrés sur 1,4 µm puis (i) non-traités thermiquement ou (ii) traités thermiquement à 72°C pendant 18 secondes (pasteurisation), ont été caractérisées tous les 3 jours au cours de leur conservation à 5 ± 1°C.

Les résultats sont les suivants : pas d'évolution bactérienne au cours de la conservation pendant 43 jours à 5 ± 1 °C des laits (i) non traités thermiquement et (ii) traités thermiquement à 72°C pendant 18 secondes (pasteurisation).

Les teneurs bactériennes sont restées inférieures à 10 UFC/mL dans les laits non traités thermiquement et inférieures à 1 UFC/mL dans les laits pasteurisés.

Cette durée de conservation des laits microfiltrés sur 1,4 µm puis (i) non-traités thermiquement ou (ii) traités thermiquement à 72°C pendant 18 secondes (pasteurisation), est bien supérieure à la date limite de consommation fixée par la législation pour un lait pasteurisé.

v-2) Evolution des concentrations en NPN et en NCN

La figure 28 illustre les résultats correspondant à l'évolution des concentrations en NPN et en NCN (g/kg) des laits conservés en chambre froide à 5 ± 1°C, au cours du temps (jours).

Ces laits ont été conservés pendant 43 jours à 5 ± 1°C, puis les flacons de laits ont été épuisés et l'expérience a été arrêtée.

Conclusions

(a) La microfiltration du lait standardisé à 38 g/kg de matière grasse et homogénéisé deux fois sur 600 + 60 bar a été réalisée sur une durée de 7 heures, sans aucun problème de colmatage.

(b) La microfiltration sur 1,4 µm a permis l'épuration bactérienne du lait standardisé à 38 g/kg de matière grasse et homogénéisé deux fois sur 600 + 60 bar. Dans le lait microfiltré, la teneur bactérienne était inférieure à 10 UFC/mL. Après le traitement thermique, la teneur bactérienne était inférieure à 1 UFC/mL.

(c) Au cours de l'étape de microfiltration tangentielle sur 1,4 µm du lait standardisé à 38 g/kg homogénéisé deux fois à 600 + 60 bar, le passage de la matière grasse au travers de la membrane était de 90,5% et le passage de la matière azotée totale était de 96,3%. Les résultats montrent qu'il n'y a pas eu d'évolution significative des pourcentages de passage de matière grasse et de matière azotée totale à travers la membrane de microfiltration.

(d) Au cours du procédé d'homogénéisation et de microfiltration tangentielle sur 1,4 µm, 9,3% des protéines solubles ont été dénaturées. Après l'étape de traitement thermique (72°C pendant 15 secondes), 17,5% des protéines solubles ont été dénaturées.

(e) Les laits microfiltrés sur 1,4 µm puis (i) non traités thermiquement ou (ii) traités thermiquement à 72°C pendant 15 secondes, ont été conservés à 5 ± 1°C pendant 43 jours sans aucune évolution de leur teneur bactérienne. Le NCN et le NPN des laits n'ont pas évolué de manière significative. Cette durée de conservation des laits est bien supérieure à celle des laits pasteurisés commercialisés actuellement, ce qui démontre l'intérêt du procédé développé.

**Exemple 4 : Influence du facteur de concentration volumique sur l'étape de microfiltration tangentielle**

Matériau de départ

Lait de vache cru de grand mélange, standardisé en matière grasse à 18 g/kg après écrémage sur écrémeuse Elecrem à 50°C.

Le lait standardisé a été chauffé à 45°C puis homogénéisé deux fois à 800+80 bar (homogénéisateur Rannie Lab 12/51 H, ATS, Moissy Cramayel, France)

Paramètres de la microfiltration tangentielle

Des membranes minérales (PALL EXEKIA, Tarbes, France ; 19 canaux avec 4 mm de diamètre, longueur 1,02 m ; 1P19-40) avec une double couche d'alumine (Sterilox) et un seuil de coupure de 0,8 $\mu$m (surface de 0,24 m$^2$) ont été utilisées pour l'étape de microfiltration. L'étape de microfiltration tangentielle a été réalisée avec une pression transmembranaire uniforme (UTP).

Les paramètres de la microfiltration sont les suivants :

- La vitesse de balayage est de 7 m/s (soit un débit de recirculation de 6 m$^3$/h),
- La pression d'alimentation est de 1,8 bar,
- La température de conduite de la microfiltration est de 57 $\pm$ 1 °C,
- Les facteurs de concentration volumique (FCV) sont fixés à (i) FCV = 10, (ii) FCV = 15, et (iii) FCV = 20,
- Les débits de perméation sont fixés (i) à 200 L/h/m$^2$ pour le FCV = 10 et (ii) à 150 L/h/m$^2$ pour le FCV = 15 et le FCV = 20.

Résultats

i) Evolution de la pression transmembranaire en fonction des facteurs de concentration volumique

La figure 29 illustre l'évolution de la pression transmembranaire au cours du temps, en fonction du facteur de concentration volumique.

Pour un FCV égal à 10, la microfiltration du lait standardisé à 18 g/kg de matière grasse et homogénéisé 2 fois à 800 + 80 bar a été conduite pendant 2 heures. La pression transmembranaire a évolué de 0,39 à 0,55 bar.

Ensuite, le débit de perméat a été diminué à 150 L/h/m$^2$ (soit 36 L/h pour la membrane de 0,24 m$^2$) ; le débit de rétentat a été amené à 2,6 L/h pour obtenir un FCV de 15 (FCV = [(36+2.6)/2.6] ~ 15).

A FCV de 15, la microfiltration du lait standardisé à 18 g/kg de matière grasse et homogénéisé 2 fois à 800 + 80 bar a été conduite pendant 1h30. La pression transmembranaire a évolué de 0,50 à 0,54 bar.

Ensuite, le débit de perméat a été maintenu à 150 L/h/m$^2$ et le débit de rétentat a été amené à environ 1,6 L/h pour obtenir un FCV d'environ 20 (FCV = [(36+1.6)/1.6] ~ 23).

A FCV de 20, la microfiltration du lait standardisé à 18 g/kg de matière grasse et homogénéisé 2 fois à 800 + 80 bar a été conduite pendant 2 heures. La pression transmembranaire a évolué de 0,53 à 0,57 bar. Ensuite, l'alimentation en produit s'est épuisée et l'expérience a été arrêtée.

Cette augmentation du facteur de concentration volumique depuis un FCV de 10 jusqu'à un FCV de 20 n'a pas conduit au colmatage de la membrane de 0,8 $\mu$m.

ii) Teneur bactérienne

Les teneurs bactériennes sont précisées dans le tableau 15 ci-dessous.

Tableau 15 : Coliformes, thermophiles et flore totale

| Echantillons | Coliformes (UFC/mL) | Thermophiles (UFC/mL) | Flore totale* (UFC/mL) |
|---|---|---|---|
| Lait standardisé | 255 | 10 | 130 000 |
| Microfiltrat FCV = 10 | <1 | <1 | <1 |
| Microfiltrat FCV = 15 | <1 | <1 | <1 |
| Microfiltrat FCV = 20 | <1 | <1 | <1 |
| Rétentat FCV = 10 | <1 | 91 | 49 000 |
| Rétentat FCV = 15 | <1 | 110 | 67 000 |

(suite)

| Echantillons | Coliformes (UFC/mL) | Thermophiles (UFC/mL) | Flore totale* (UFC/mL) |
|---|---|---|---|
| Rétentat FCV = 20 | <1 | 110 | 51 000 |

\* Flore aérobie mésophile revivifiable (FMAR)
Légende : Lait standardisé = lait standardisé à 18 g/kg de matière grasse et homogénéisé deux fois à 800 + 80 bar ;
Microfiltrat et Rétentat = produits récupérés au cours de l'étape de microfiltration tangentielle sur une membrane de 0,8 $\mu$m, avec différents facteurs de concentration volumique (FCV)

iii) Composition biochimique des produits

La composition biochimique des produits obtenus aux différents stades du procédé de traitement, est détaillée dans le tableau 16 ci-dessous.

Tableau 16: Composition biochimique des produits à différentes étapes du procédé de traitement

| | pH | MG* g/kg | EST* g/kg | MAT* g/kg | NCN* g/kg | NPN* g/kg |
|---|---|---|---|---|---|---|
| Lait standardisé | 6,77 | 18,00 | 106,22 | 33,89 | 7,13 | 1,38 |
| Lait homogénéisé 2 | 6,76 | 17,75 | ND | 33,89 | 6,57 | 1,49 |
| Microfiltrat FCV=10 | 6,75 | 15,00 | 103,67 | 31,56 | 6,65 | 1,63 |
| Microfiltrat FCV=15 | 6,75 | 15,25 | 103,39 | 31,18 | 6,63 | 1,65 |
| Microfiltrat FCV=20 | 6,72 | 15,75 | 104,64 | 32,79 | 6,96 | 1,67 |
| Rétentat FCV=10 | 6,68 | 35,50 | 147,80 | 54,87 | ND | ND |
| Rétentat FCV=15 | 6,63 | 41,90 | 156,24 | 59,94 | ND | ND |
| Rétentat FCV=20 | 6,65 | 44,45 | 160,73 | 62,81 | ND | ND |

Légende : Lait standardisé = lait standardisé à 18 g/kg de matière grasse et homogénéisé deux fois à 800 + 80 bar ;
Lait homogénéisé 2 = lait standardisé, homogénéisé deux fois successivement et avant l'étape de microfiltration tangentielle ; Microfiltrat et Rétentat = produits récupérés au cours de l'étape de microfiltration tangentielle sur une membrane de 0,8 $\mu$m réalisée avec différents facteurs de concentration volumique (FCV)
\* Abréviations : MG = matière grasse ; EST = extrait sec total ; MAT = matière azotée totale ; NCN = azote non caséinique ; NPN = azote non protéique. ND = non déterminé.

Conclusions :

(a) Il est possible d'augmenter le facteur de concentration volumique (FCV) au cours de l'étape de microfiltration tangentielle du lait partiellement écrémé (18 g/kg de matière grasse) depuis FCV = 10 jusqu'à FCV = 20. Cela n'a pas entraîné de colmatage de la membrane.

(b) La microfiltration tangentielle réalisée sur la membrane de 0,8 $\mu$m retient près de 100% de la flore totale présente dans le lait partiellement écrémé et homogénéisé deux fois. Une teneur bactérienne inférieure à 1 UFC/mL a été obtenue dans le microfiltrat, quel que soit le FCV utilisé. Ces essais démontrent que l'augmentation du FCV au cours de l'étape de microfiltration tangentielle du lait partiellement écrémé depuis FCV = 10 jusqu'à FCV = 20 n'affecte pas l'épuration microbienne du produit.

(c) L'augmentation du FCV permet d'augmenter le pourcentage de passage de la matière grasse au travers de la membrane de 0,8 $\mu$m : 83.3% pour FCV = 10 contre 87.5% pour FCV = 20.

(d) L'augmentation du FCV permet d'augmenter le pourcentage de passage de la matière azotée totale au travers de la membrane de 0,8 $\mu$m : 93,1% pour FCV = 10 contre 96,8% pour FCV = 20.

(e) L'augmentation du FCV permet de réduire les volumes de co-produit (rétentat) : 10% de rétentat à FCV = 10 ; 7,5% à FCV = 15 ; 5% de rétentat à FCV = 20.

(f) En alternative, le rétentat obtenu avec FCV = 10 pourrait être retraité sur un second étage de microfiltration sur 0,8 $\mu$m avec un FCV = 2 et des débits adaptés. Le microfiltrat obtenu sur ce second étage, parfaitement épuré sur 0,8 $\mu$m, pourrait être ajouté au lait épuré obtenu sur le premier étage de la microfiltration. Cela permettrait de réduire la quantité de co-produit.

**Exemple 5 : Potentialités de retraitement sur un second étage de microfiltration tangentielle d'un rétentat obtenu sur le premier étage**

Matériau de départ

Rétentat de microfiltration d'un lait standardisé, homogénéisé 2 fois à 640 + 60 bar (homogénéisateur RANNIE LAB 12/51 H, ATS, Moissy Cramayel, France) obtenu à FCV 10 sur une membrane de 1,4 $\mu$m.

Paramètres de la microfiltration

Des membranes minérales (PALL EXEKIA, Tarbes, France ; 19 canaux avec 4 mm de diamètre, longueur 1,02 m ; 1P19-40) avec une double couche d'alumine (Sterilox) et un seuil de coupure de 1,4 $\mu$m (surface de 0,24 m$^2$) ont été utilisées pour la microfiltration du rétentat. L'étape de microfiltration tangentielle a été réalisée avec une pression transmembranaire uniforme (UTP).

Les paramètres de la microfiltration sont les suivants :

- La vitesse de balayage est de 7 m/s (soit un débit de recirculation de 6 m$^3$/h) ;
- La pression d'alimentation est de 1,8 bar ;
- La température de conduite de la microfiltration est de 57 $\pm$ 1 °C ;
- Le facteur de concentration volumique (FCV) est fixé à FCV = 2 ;
- Les débits de perméation ont été ajustés.

**Exemple 5.1 : Retraitement d'un rétentat de microfiltration obtenu à partir d'un lait standardisé à 38 g/kg**

Paramètres de la microfiltration

La membrane de microfiltration utilisée dans cet essai est celle qui a servi préalablement pour la production du rétentat pendant 7 heures à FCV 10 à partir d'un lait standardisé à 38 g/kg de matière grasse homogénéisé deux fois à 640+60 bar.

Le débit de perméation est fixé à 125 L/h/m$^2$ (soit 30 Uh pour une membrane de 0,24 m$^2$).

Le débit de rétentat est fixé à 30 Uh (recirculation de ce rétentat dans le bac d'alimentation, soit un fonctionnement en batch).

Résultats

i) Evolution de la pression transmembranaire

La figure 30 illustre l'évolution de la pression transmembranaire au cours du temps. La microfiltration du rétentat FCV10 a été conduite pendant environ de 30 minutes. La pression transmembranaire a évolué à partir de 15 minutes de 0,33 à 0,46 bar. Aucun colmatage n'a été observé. L'alimentation en produit s'est épuisée et l'expérience a été arrêtée.

ii) Teneur bactérienne

Les teneurs bactériennes sont précisées dans le tableau 17 ci-dessous.

Tableau 17 : flore totale

| Echantillons | Flore totale * UFC/mL |
| --- | --- |
| Rétentat FCV10 | 23 600 |
| Microfiltrat second étage 1,4 $\mu$m | <10 |
| Rétentat second étage 1,4 $\mu$m | 119 000 |
| * Flore aérobie mésophile revivifiable (FMAR) | |

iii) Composition biochimique des produits

La composition biochimique des produits obtenus aux différents stades du procédé de traitement, est détaillée dans le tableau 18 ci-dessous.

Tableau 18: Composition biochimique des produits à différentes étapes du procédé de traitement

|  | pH | MG* g/kg | MAT* g/kg | NCN* g/kg | NPN* g/kg |
|---|---|---|---|---|---|
| Lait standardisé | 6,74 | 38,00 | 33,51 | 7,5 | 1,67 |
| Rétentat FCV10 | 6,58 | 65,36 | 45,52 | ND | ND |
| Rétentat second étage 1,4µm | ND | 81,81 | 55,71 | ND | ND |
| Microfiltrat second étage 1,4µm | 6,72 | 41,75 | 36,94 | 7,12 | 1,78 |

Légende : Lait standardisé = lait standardisé à 38 g/kg de matière grasse et homogénéisé deux fois à 640 + 60 bar ;Rétentat FCV10 = rétentat récupéré au cours de l'étape de microfiltration tangentielle sur une membrane de 1,4 µm du lait standardisé à 38 g/kg de matière grasse et homogénéisé deux fois à 640 + 60 bar; Rétentat second étage 1,4µm et Microfiltrat second étage 1,4µm = produits récupérés au cours de l'étape de microfiltration tangentielle sur une membrane de 1,4 µm réalisée à partir du rétentat FCV10.

\* Abréviations : MG = matière grasse ; EST = extrait sec total ; MAT = matière azotée totale ; NCN = azote non caséinique ; NPN = azote non protéique. ND = non déterminé.

Conclusions :

Il est possible de retraiter un rétentat FCV = 10 obtenu avec un lait standardisé à 38 g/kg de matière grasse en faisant un second étage de microfiltration tangentielle sur 1,4 µm. Dans nos conditions expérimentales, cela n'a pas conduit au colmatage de la membrane.

Le second étage de microfiltration sur 1,4 µm permet l'épuration microbienne du rétentat obtenu sur le premier étage de la microfiltration. La teneur bactérienne du microfiltrat était inférieure à 10 UFC/mL.

Le second étage de microfiltration sur 1,4 µm permet d'obtenir un produit(microfiltrat) dont les teneurs en matière grasse et en protéines sont supérieures à celles du lait initial, à savoir matière grasse : 41.8 g/kg contre 38 g/kg, et matière azotée totale = 36.9 g/kg contre 33.5 g/kg.

L'ajout de ce microfiltrat au lait épuré obtenu sur le premier étage du procédé permettra d'augmenter les teneurs en protéines et en matière grasse.

Dans les conditions testées, cela a permis de valoriser 50% du co-produit (rétentat) obtenu sur le premier étage du procédé en l'épurant microbiologiquement sur un second étage de microfiltration.

**Exemple 5.2 : Retraitement d'un rétentat de microfiltration obtenu à partir d'un lait standardisé à 17.5 g/kg**

Paramètres de la microfiltration

La membrane de microfiltration utilisée dans cet essai est celle qui a servi préalablement pour la production du rétentat pendant 5 heures à FCV 10 à partir d'un lait standardisé à 17.5 g/kg de matière grasse homogénéisé deux fois à 640+60 bar.

Le débit de perméation était fixé à 165 L/h/m$^2$ (soit 40 Uh pour une membrane de 0,24 m$^2$).

Le débit de rétentat était fixé à 35 Uh (recirculation de ce rétentat dans le bac d'alimentation, soit un fonctionnement en batch).

Résultats

i) Evolution de la pression transmembranaire

La figure 31 illustre l'évolution de la pression transmembranaire au cours du temps. La microfiltration du rétentat FCV10 a été conduite pendant 60 minutes. La pression transmembranaire, d'environ 0,32 bar, n'a pas évolué de manière significative au cours de la microfiltration. Aucun colmatage n'a été observé. L'alimentation en produit s'est épuisée et l'expérience a été arrêtée.

Le facteur de concentration final est de 8, et le facteur de concentration volumique global de l'essai est de 8 x 10 soit un FCV de 80.

ii) Teneur bactérienne

Les teneurs bactériennes sont précisées dans le tableau 19 ci-dessous.

Tableau 19 : flore totale

| Echantillons | Flore totale * UFC/mL |
|---|---|
| Rétentat FCV10 | 3000 |
| Microfiltrat second étage 1,4 μm | <10 |
| Rétentat second étage 1,4μm | 120 000 |
| * Flore aérobie mésophile revivifiable (FMAR) | |

iii) Composition biochimique des produits

La composition biochimique des produits obtenus aux différents stades du procédé de traitement, est détaillée dans le tableau 20 ci-dessous.

Tableau 20 : Composition biochimique des produits à différentes étapes du procédé de traitement

| | pH | MG* g/kg | EST* g/kg | MAT* g/kg | NCN* g/kg | NPN* g/kg |
|---|---|---|---|---|---|---|
| Lait standardisé | 6,76 | 17,5 | 107,39 | 34,2 | 7,1 | 1,7 |
| Rétentat FCV10 | 6,56 | 29 | 124,21 | 40,9 | 7,0 | 1,7 |
| Rétentat second étage 1,4μm | ND | 37 | ND | 67,4 | ND | ND |
| Microfiltrat second étage 1,4μm | ND | 21 | ND | 41,9 | ND | ND |

Légende : Lait standardisé = lait standardisé à 17,5 g/kg de matière grasse et homogénéisé deux fois à 640 + 60 bar ;Rétentat FCV10 = rétentat récupéré au cours de l'étape de microfiltration tangentielle sur une membrane de 1,4 μm du lait standardisé à 17,5 g/kg de matière grasse et homogénéisé deux fois à 640 + 60 bar; Rétentat second étage 1,4μm et Microfiltrat second étage 1,4μm = produits récupérés au cours de l'étape de microfiltration tangentielle sur une membrane de 1,4 μm réalisée à partir du rétentat FCV10.
* Abréviations : MG = matière grasse ; EST = extrait sec total ; MAT = matière azotée totale ; NCN = azote non caséinique ; NPN = azote non protéique. ND = non déterminé.

Conclusions :

(a) Il est possible de retraiter un rétentat FCV = 10 obtenu avec un lait standardisé à 17,5 g/kg de matière grasse en faisant un second étage de microfiltration tangentielle sur 1,4 μm. Dans les présentes conditions expérimentales, il a été obtenu un FCV de 8 sur le second étage, ce qui conduit à un FCV final de 80 (FCV = 10 x 8). Ces conditions expérimentales n'ont pas conduit au colmatage de la membrane.

(b) Le second étage de microfiltration sur 1,4 μm permet l'épuration microbienne du rétentat obtenu sur le premier étage de la microfiltration. La teneur bactérienne du microfiltrat était inférieure à 10 UFC/mL.

(c) Le second étage de microfiltration sur 1,4 μm permet d'obtenir un microfiltrat dont les teneurs en matière grasse et en protéines sont supérieures à celles du lait initial (matière grasse : 21 g/kg contre 17.5 g/kg ; matière azotée totale = 41.9 g/kg contre 34.2 g/kg).

L'ajout de ce microfiltrat au lait épuré obtenu sur le premier étage de microfiltration du procédé permettra d'augmenter les teneurs en protéines et en matière grasse.

(d) Dans les conditions testées, cela a permis de valoriser 87.5% du co-produit (rétentat de microfiltration) obtenu sur le premier étage de microfiltration du procédé en l'épurant microbiologiquement sur un second étage de microfiltration.

**Exemple 6 : Comparaison de la qualité des laits homogénéisés et microfiltrés, préparés avec et sans cellules somatiques**

Nous avons montré que les cellules somatiques du lait sont cassées au cours de l'étape d'homogénéisation. Une microfiltration tangentielle sur membrane de 12 $\mu$m, qui permet d'éliminer les cellules somatiques du lait, pourrait améliorer la qualité des laits.

Nous avons donc comparé la stabilité des laits, avec ou sans microfiltration tangentielle sur membrane de 12 $\mu$m en amont de l'étape d'homogénéisation.

Matière première : Laits de vache de grand mélange.

Préparation du lait

   i) avec cellules somatiques : le lait contenait 150 000 cellules/mL (teneur classique). Le lait a été standardisé en matière grasse à 19 g/kg avec du lait écrémé.
   ii) sans cellules somatiques : le lait a été microfiltré sur une membrane de seuil de coupure de 12 $\mu$m, en utilisant les paramètres hydrodynamiques suivants : vitesse de balayage = 4,6 m/s ; température = 55°C ; pression d'alimentation = 1,7 bar ; débit de perméation = 1500 L/h/m$^2$ ; Facteur de réduction volumique = 15. La microfiltration sur membrane 12 $\mu$m a permis d'enlever toutes les cellules somatiques du lait.

Le lait a été standardisé en matière grasse à 19 g/kg avec du lait écrémé sans cellules somatiques.

Homogénéisation

Les laits avec ou sans cellules ont subi deux homogénéisations successives à 800 + 80 bar.

Microfiltration 0,8 $\mu$m

Les laits homogénéisés ont été microfiltrés sur une membrane de 0,8 $\mu$m.

Traitement thermique du lait

Les microfiltrats ont été conditionnés dans des conteneurs stériles puis introduits dans le pilote de traitement thermique (UHT, HTST Lab-Electric, model 25DH ; Microthermics, Etats-Unis). Les laits épurés ont subi un traitement thermique de 96 $\pm$ 0.5°C pendant 6 secondes.

Conservation des laits et suivi de leur évolution au cours du temps

Les laits ont été stockés à 30°C.
Des mesures de l'azote non caséinique (NCN) ont été réalisées au cours du temps. Des analyses microbiologiques ont également été réalisées.

Résultats

Les laits avec et sans cellules somatiques étaient stériles après l'étape de microfiltration sur 0,8 $\mu$m. Aucun développement bactérien n'a été constaté dans les laits au cours de leur stockage pendant 90 ou 180 jours à 30°C.
Pour ce qui est de l'évolution du taux de NCN (g/kg) au cours du temps, les résultats obtenus sont présentés dans la figure 32.

Conclusions

Il n'y a pas d'effet de la présence des cellules somatiques en amont de l'homogénéisation, sur l'évolution du NCN au cours du temps (90 jours, 30°C) après microfiltration sur 0,8 $\mu$m et un traitement thermique à 96°C pendant 6 secondes.

**Exemple 7 : Epuration microbienne d'une préparation à base de lait écrémé et de matière grasse végétale émulsionnée.**

Matériaux de départ :

Lait de vache de grand mélange écrémé (la matière grasse laitière a été éliminée par écrémage centrifuge)

Mélange de matières grasses végétales : Huile de palme (45%), Huile de coprah (25%), Huile de soja (30%). Le mélange des matières grasses végétales a été chauffé à une température permettant de le rendre dans un état liquide (60°C).

Le mélange de lait écrémé et de matières grasses végétales a été standardisé, émulsionné (45°C ; vitesse maximale, mélangeur dynamix SMX500, HMI S.A. Barthélémy Auffray, Vezin le coquet, France), puis homogénéisé 2 fois (homogénéisateur RANNIE LAB 12/51 H, ATS, Moissy Cramayel, France) avant d'être microfiltré pour assurer son épuration microbienne.

Membranes de microfiltration

Des membranes minérales (PALL EXEKIA, Tarbes, France ; 19 canaux avec 4 mm de diamètre, longueur 1,02 m ; 1P19-40) avec une double couche d'alumine (Sterilox) ont été utilisées pour l'étape de microfiltration. L'étape de microfiltration tangentielle a été réalisée avec une pression transmembranaire uniforme (UTP).

Deux seuils de coupure de membrane ont été utilisés, à savoir (i) 1,4 $\mu$m et (ii) 0,8 $\mu$m, pour l'épuration microbienne de la préparation à base de lait écrémé et de matière grasse végétale standardisée et homogénéisée 2 fois.

Selon le procédé proposé, l'épuration microbienne de la préparation à base de lait écrémé et de matière grasse végétale a été réalisée à des températures inférieures à celles employées dans une pasteurisation ou une stérilisation UHT. Le procédé d'épuration microbienne décrit par le demandeur conserve donc les valeurs nutritionnelles et les propriétés organoleptiques des composants.

Ce procédé pourrait, par exemple, être appliqué à l'épuration microbienne de boissons lactées préparées avec des matières grasses végétales, des laits infantiles et des laits de croissance.

**Exemple 7.1 : Epuration microbienne sur une membrane de 1,4 $\mu$m**

Homogénéisation :

Le mélange de lait écrémé et de matières grasses végétales standardisé a été homogénéisé 2 fois préalablement à la microfiltration sur 1,4 $\mu$m. Pour chaque étape d'homogénéisation, la pression appliquée sur le premier étage était de 650 bar et la pression appliquée sur le deuxième étage était de 65 bar. La température du produit à l'entrée de l'homogénéisateur était de 45°C $\pm$ 2°C.

Paramètres de la microfiltration :

La membrane utilisée présente un seuil de coupure de 1,4 $\mu$m (surface de 0,24 m$^2$). Les paramètres de la microfiltration sont les suivants :

- La vitesse de balayage est de 7 m/s ;
- La pression d'alimentation est de 1,8 bar ;
- La température de conduite de la microfiltration est de 57 $\pm$ 1 °C ;
- Le facteur de concentration volumique (FCV) est fixé à 10 ;
- Le débit de perméation est fixé à 250 L/h/m$^2$ ;

La microfiltration sur 1,4 $\mu$m a été conduite pendant plus de 4 heures (4h40), et ensuite l'alimentation en produit (préparation à base de lait écrémé et de matières grasses végétales, standardisée, émulsionnée et homogénéisée 2 fois) s'est épuisée et l'expérience a été arrêtée.

Résultats

i) Evolution de la pression transmembranaire au cours de la microfiltration sur 1,4 $\mu$m

La figure 33 illustre l'évolution de la pression transmembranaire au cours du temps. La pression transmembranaire a évolué de 0,28 à 0,39 bar en 4h40. Cette évolution n'a pas conduit au colmatage de la membrane.

ii) Teneur bactérienne

Les teneurs bactériennes sont précisées dans le tableau 21 ci-dessous.

Tableau 21 : Coliformes, thermophiles et flore totale

| Echantillons | Coliformes totaux UFC/mL | Thermophiles UFC/mL | Flore totale * UFC/mL |
|---|---|---|---|
| Produit émulsifié | <10 | > 300 | $1,15\ 10^3$ |
| Microfiltrat 1,4 $\mu$m | <1 | <1 | <10 |

\* Flore aérobie mésophile revivifiable (FMAR)

iii) Composition biochimique du lait

La composition biochimique des produits, aux différents stades du procédé de traitement, est détaillée dans le tableau 22 ci-dessous.

Tableau 22 : composition biochimique des produits à différentes étapes du procédé de traitement

| | pH | MG* g/kg | EST* g/kg | MAT* g/kg | NCN* g/kg | NPN* g/kg |
|---|---|---|---|---|---|---|
| Phase aqueuse | 6,93 | 0 | 96,67 | 22,00 | 5,26 | 1,18 |
| MG végétales | ND | 1000 | ND | 0,00 | 0,00 | 0,00 |
| Produit homogénéisé 2 | 6,89 | 24,25 | 118,39 | 21,19 | 3,80 | 1,03 |
| Microfiltrat 1h | 6,89 | 19,75 | ND | 19,95 | ND | ND |
| Microfiltrat 2h | 6,89 | 19,50 | ND | 19,95 | ND | ND |
| Microfiltrat 3h | 6,88 | 19,50 | ND | 19,95 | ND | ND |
| Microfiltrat 4h | 6,87 | 19,13 | ND | 18,00 | ND | ND |
| Microfiltrat moyen | 6,90 | 18,75 | 114,22 | 20,12 | 4,03 | 1,16 |
| Rétentat 1h | 6,89 | 56,50 | ND | 29,42 | ND | ND |
| Rétentat 2h | 6,88 | 56,25 | ND | 29,42 | ND | ND |
| Rétentat 3h | 6,86 | 57,25 | ND | 29,42 | ND | ND |
| Rétentat 4h | 6,88 | 58,00 | ND | 30,54 | ND | ND |
| Rétentat moyen | 6,83 | 57,00 | 160,91 | 30,09 | 3,57 | 1,08 |

Légende : Phase aqueuse = mélange du lait écrémé, du lactose et d'eau osmosée pour standardiser la préparation ; Produit homogénéisé 2 = préparation après les deux homogénéisations successives et avant l'étape de microfiltration tangentielle ; Microfiltrat et Rétentat = produits récupérés au cours de l'étape de microfiltration tangentielle sur une membrane de 1,4 $\mu$m, à différents temps (exprimés en heure).
\* Abréviations : MG = matière grasse ; EST = extrait sec total ; MAT = matière azotée totale ; NCN = azote non caséinique ; NPN = azote non protéique. ND = non déterminé.

iv) Distribution de taille des gouttelettes lipidiques

La figure 34 représente la distribution de tailles des gouttelettes lipidiques à différents stades du procédé de traitement.
Les valeurs correspondantes sont encore détaillées dans le tableau 23 ci-dessous.

Tableau 23 : Paramètres granulométriques extraites des distributions de tailles des gouttelettes lipidiques.

| | Paramètres granulométriques | | | | | |
|---|---|---|---|---|---|---|
| | Mode $\mu$ | $d_{32}$ $\mu$m | $d_{43}$ $\mu$m | < 0,3 $\mu$m % | < 0,5 $\mu$m % | < 0,8 $\mu$m % |
| Produit émulsifié | 8,48 | 5,78 | 8,66 | 0 | 0,14 | 0,69 |
| Produit homogénéisé 1 | 0,18 | 0,16 | 0,30 | 65,82 | 83,04 | 95,00 |
| Produit | 0,17 | 0,15 | 0,24 | 72,84 | 90,46 | 98,99 |

(suite)

| | Paramètres granulométriques | | | | | |
|---|---|---|---|---|---|---|
| | Mode $\mu$ | $d_{32}$ $\mu$m | $d_{43}$ $\mu$m | < 0,3 $\mu$m % | < 0,5 $\mu$m % | < 0,8 $\mu$m % |
| homogénéisé 2 | | | | | | |
| Microfiltrat moyen | 0,16 | 0,13 | 0,20 | 83,05 | 95,76 | 99,87 |
| Rétentat moyen | 0,45 | 0,23 | 0,36 | 48,54 | 75,46 | 95,41 |

Légende : Produit émulsionné = préparation à bases de lait écrémé et de matière grasse végétale standardisée, avant traitement ; Produit homogénéisé 1 = Produit homogénéisé 1 fois à 650 + 65 bar ; Produit homogénéisé 2 = Produit homogénéisé 2 fois à 650 + 65 bar ; Microfiltrat et Rétentat = produits récupérés au cours de l'étape de microfiltration tangentielle sur une membrane de 1,4 $\mu$m, pendant 4 heures.

Conclusions

(a) Ces résultats démontrent qu'il est possible de microfiltrer sur une membrane de 1,4 $\mu$m, une préparation à base de lait écrémé et de matière grasse végétale émulsionnée.
(b) La microfiltration tangentielle sur une membrane de 1,4 $\mu$m a permis de réduire la teneur bactérienne de la préparation à base de lait écrémé et de matière grasse végétale émulsionnée d'au moins 2 log et d'obtenir une teneur bactérienne inférieure à 10 UFC/mL dans le microfiltrat.
(c) Les résultats montrent :

- un taux de passage de la matière azotée totale de 95%, c'est-à-dire (20,12 / 21,19) x 100.
- un taux de passage de la matière grasse de 77%, c'est-à-dire (18,75 / 24,25) x 100. Ce taux de passage des gouttelettes lipidiques à travers la membrane de microfiltration de 1,4 $\mu$m pourrait être amélioré (a) en optimisant la formulation, par exemple en ajoutant des émulsifiants (lécithine), (b) en optimisant les paramètres de l'homogénéisation (valve de l'homogénéisateur, pression, nombre d'étape d'homogénéisation), (c) en optimisation les paramètres de la microfiltration tangentielle et en retraitant le rétentat avec un FCV de 2.

**Exemple 7.2 : Epuration microbienne sur une membrane de 0,8 $\mu$m**

Homogénéisation :

Le mélange de lait écrémé et de matières grasses végétales standardisé a été homogénéisé 2 fois préalablement à la microfiltration sur 0,8 $\mu$m. Pour chaque étape d'homogénéisation, la pression appliquée sur le premier étage était de 850 bar et la pression appliquée sur le deuxième étage était de 85 bar. La température du produit à l'entrée de l'homogénéisateur était de 45°C $\pm$ 2°C.

Paramètres de la microfiltration :

Membrane avec un seuil de coupure de 0,8 $\mu$m (surface de 0,24 m$^2$).
Les paramètres de la microfiltration son les suivants :

- La vitesse de balayage était de 7 m/s ;
- La pression d'alimentation était de 1,8 bar ;
- La température de conduite de la microfiltration était de 57 $\pm$ 1 °C ;
- Le facteur de concentration volumique (FCV) était fixé à 10 ;
- Le débit de perméation était fixé à 150 L/h/m$^2$.

La microfiltration sur 0,8 $\mu$m a été conduite pendant 2 heures, et ensuite l'alimentation en produit (préparation à base de lait écrémé et de matières grasses végétales, standardisée, émulsionnée et homogénéisée 2 fois) s'est épuisée et l'expérience a été arrêtée.

Résultats

i) Evolution de la pression transmembranaire au cours de la microfiltration sur 0,8 $\mu$m

La figure 35 illustre l'évolution de la pression transmembranaire au cours du temps. La pression transmembranaire a évolué de 0,35 à 0,59 bar en 2 heures. Cette évolution n'a pas conduit au colmatage de la membrane.

ii) Teneur bactérienne

Les teneurs bactériennes sont précisées dans le tableau 24 ci-dessous.

Tableau 24 : Coliformes, thermophiles et flore totale

| Echantillons | Coliformes totaux UFC/mL | Thermophiles UFC/mL | Flore totale * UFC/mL |
|---|---|---|---|
| Produit émulsifié | 1,70 $10^2$ | 3,6 $10^2$ | 2,8 $10^4$ |
| Microfiltrat 0,8 $\mu$m | <1 | <1 | <1 |
| * Flore aérobie mésophile revivifiable (FMAR) | | | |

iii) Composition biochimique du lait

La composition biochimique du lait, aux différents stades du procédé de traitement, est détaillée dans le tableau 25 ci-dessous.

Tableau 25: Composition biochimiques des produits à différentes étapes du procédé de traitement

| | pH | MG* g/kg | EST* g/kg | MAT* g/kg | NCN* g/kg | NPN* g/kg |
|---|---|---|---|---|---|---|
| Phase aqueuse | 6,88 | 0 | 102,88 | 24,44 | 5,40 | 1,24 |
| MG végétales | ND | 1000 | ND | 0,00 | 0,00 | 0,00 |
| Produit homogénéisé 2 | 6,72 | 29,75 | 130,08 | 23,76 | 4,91 | 1,19 |
| Microfiltrat 1h30 | 6,74 | 22,50 | 120,49 | 20,92 | 4,75 | 1,22 |
| Microfiltrat 1 h45 | 6,74 | 23,25 | 120,21 | 20,92 | 4,87 | 1,22 |
| Microfiltrat 2h | 6,75 | 23,38 | 121,27 | 21,29 | 4,84 | 1,22 |
| Rétentat 1h30 | 6,73 | 80,67 | 195,73 | 43,00 | 5,40 | 1,14 |

Légende : Phase aqueuse = mélange du lait écrémé, du lactose et d'eau osmosée utilisés pour standardiser la préparation ; Produit homogénéisé 2 = Produit après les deux homogénéisations successives et avant l'étape de microfiltration tangentielle ; Microfiltrat et Rétentat = produits récupérés au cours de l'étape de microfiltration tangentielle sur une membrane de 0,8 $\mu$m, à différents temps (exprimés en heure).
* Abréviations : MG = matière grasse ; EST = extrait sec total ; MAT = matière azotée totale ; NCN = azote non caséinique ; NPN = azote non protéique. ND = non déterminé.

iv) Distribution de taille des gouttelettes lipidiques

La figure 36 représente la distribution de tailles des gouttelettes lipidiques à différents stades du procédé de traitement.
Les valeurs correspondantes sont encore détaillées dans le tableau 26 ci-dessous.

Tableau 26 : Paramètres granulométriques extraites des distributions de tailles des gouttelettes lipidiques.

| | Paramètres granulométriques | | | | | |
|---|---|---|---|---|---|---|
| | Mode $\mu$m | $d_{32}$ $\mu$m | $d_{43}$ $\mu$m | < 0,3 $\mu$m % | < 0,5 $\mu$m % | < 0,8 $\mu$m % |
| Produit émulsifié | 6,51 | 3,91 | 6,57 | 0 | 0,35 | 2,72 |
| Produit homogénéisé 1 | 0,15 | 0,14 | 0,23 | 78,14 | 90,94 | 97,74 |

(suite)

| | Paramètres granulométriques | | | | | |
|---|---|---|---|---|---|---|
| | Mode $\mu$m | $d_{32}$ $\mu$m | $d_{43}$ $\mu$m | < 0,3 $\mu$m % | < 0,5 $\mu$m % | < 0,8 $\mu$m % |
| Produit homogénéisé 2 | 0,15 | 0,13 | 0,19 | 84,51 | 95,20 | 99,64 |
| Microfiltrat 2h | 0,14 | 0,11 | 0,15 | 95,33 | 98,50 | 99,85 |
| Rétentat 2h | 0,22 | 0,17 | 0,26 | 67,30 | 89,40 | 99,39 |

Légende : Lait émulsifié = mélange standardisé, avant traitement ; Produit homogénéisé 1 = Produit homogénéisé 1 fois à 850 + 85 bar ; Produit homogénéisé 2 = Produit homogénéisé 2 fois à 850 + 85 bar ; Microfiltrat 2h et Rétentat 2h = produits récupérés après 2 heures d'étape de microfiltration tangentielle sur une membrane de 0,8 $\mu$m.

Conclusions :

a) Ces résultats démontrent qu'il est possible de microfiltrer, sur membrane de 0,8 $\mu$m, une préparation à base de lait écrémé et de matière grasse végétale émulsionnée.

b) La microfiltration tangentielle sur une membrane de 0,8 $\mu$m retient près de 100% de la flore totale présente dans la préparation à base de lait écrémé et de matière grasse végétale émulsionnée. Une teneur bactérienne inférieure à 1 UFC/mL a été obtenue dans le microfiltrat. Cela montre que la préparation à base de lait écrémé et de matière grasse végétale émulsionnée a été parfaitement épurée microbiologiquement.

c) Les différentes étapes du procédé ont préservé la qualité des protéines contenues dans la préparation ; moins de 1% des protéines solubles ont été dénaturées (NCN : 4,85/4,91 = 0,98%).

d) Les résultats biochimiques montrent :

- un taux de passage de la matière azotée totale de 89,6%, c'est-à-dire (21,29 / 23,76) x 100.
- un taux de passage de la matière grasse de 78,6%, c'est-à-dire (23,38 / 29,75) x 100. Ce taux de passage des gouttelettes lipidiques à travers la membrane de microfiltration de 0,8 $\mu$m pourrait être amélioré (a) en optimisant la formulation, par exemple en ajoutant des émulsifiants (lécithine), (b) en optimisant les paramètres de l'homogénéisation (valve de l'homogénéisateur, pression, nombre d'étape d'homogénéisation), (c) en optimisation les paramètres de la microfiltration tangentielle et en retraitant le rétentat avec un FCV de 2.

**Revendications**

1. Procédé pour réduire la teneur bactérienne d'un milieu alimentaire et/ou biologique d'intérêt de départ, contenant des gouttelettes lipidiques, lequel procédé comprend les étapes suivantes :

(a) une étape d'homogénéisation appliquée audit milieu d'intérêt de manière à obtenir un milieu d'intérêt homogénéisé, ladite étape (a) générant, dans ledit milieu d'intérêt homogénéisé, des gouttelettes lipidiques ayant un diamètre adapté pour permettre ensuite leur passage à travers une membrane de microfiltration ayant un seuil de coupure déterminé,

(b) une étape de microfiltration appliquée audit milieu d'intérêt homogénéisé obtenu à l'étape (a), sur une membrane ayant un seuil de coupure permettant le passage dans le perméat de microfiltration d'au moins une partie desdites gouttelettes lipidiques tout en retenant dans le rétentat de microfiltration au moins une partie desdites bactéries, et

(c) la récupération dudit perméat de microfiltration issu de l'étape (b), ledit perméat constituant un milieu alimentaire et/ou biologique homogénéisé dont la teneur bactérienne est réduite par rapport au milieu d'intérêt de départ,

lequel procédé est **caractérisé en ce que** :

- d'une part, ladite étape d'homogénéisation (a) comprend au moins deux opérations d'homogénéisation successives appliquées sur ledit milieu d'intérêt à une pression comprise entre 300 bar et 950 bar. lesquelles opérations d'homogénéisation conduisent chacune à une réduction de la taille desdites gouttelettes lipidiques, et

- d'autre part, ladite étape de microfiltration (b) consiste en une étape de microfiltration tangentielle.

**2.** Procédé selon la revendication 1, **caractérisé en ce que** les opérations d'homogénéisation successives, mises en oeuvre lors de l'étape (a), sont au nombre de deux ou trois, et de préférence au nombre de deux.

**3.** Procédé selon l'une quelconque des revendications 1 ou 2, **caractérisé en ce que** l'étape d'homogénéisation (a) est mise en oeuvre selon des paramètres assurant un maintien de la température du milieu d'intérêt dans un domaine de valeur compris entre 30°C et 100°C tout au long de ladite étape d'homogénéisation (a).

**4.** Procédé selon l'une quelconque des revendications 1 à 3, **caractérisé en ce que** les opérations d'homogénéisation de l'étape d'homogénéisation (a) vérifient le paramètre suivant : une température d'entrée du milieu d'intérêt, avant chaque homogénéisation, comprise entre 30°C et 90°C.

**5.** Procédé selon l'une quelconque des revendications 1 à 4, **caractérisé en ce que** l'étape de microfiltration tangentielle (b) est mise en oeuvre sur une membrane ayant un seuil de coupure compris entre 0,5 $\mu$m et 1,8 $\mu$m.

**6.** Procédé selon la revendication 5, **caractérisé en ce que** :

(i) pour réduire partiellement la teneur bactérienne du milieu alimentaire et/ou biologique d'intérêt :

- l'étape d'homogénéisation (a) est mise en oeuvre de sorte qu'au moins 85 % des gouttelettes lipidiques aient un diamètre inférieur à 1 $\mu$m, et
- l'étape de microfiltration tangentielle (b) est mise en oeuvre sur une membrane ayant un seuil de coupure compris entre 1 $\mu$m et 1,8 $\mu$m, ou

(ii) pour stériliser le milieu alimentaire et/ou biologique d'intérêt :

- l'étape d'homogénéisation (a) est mise en oeuvre de sorte qu'au moins 85 % des gouttelettes lipidiques aient un diamètre inférieur à 0,3 $\mu$m, et
- l'étape de microfiltration tangentielle (b) est mise en oeuvre sur une membrane ayant un seuil de coupure compris entre 0,3 $\mu$m et 0,9 $\mu$m.

**7.** Procédé selon l'une quelconque des revendications 1 à 6, **caractérisé en ce que** les paramètres appliqués lors de l'étape de microfiltration tangentielle (b) vérifient les conditions suivantes :

- une température pour le milieu homogénéisé ajustée entre 50°C et 60°C,
- un débit de perméation compris entre 150 et 300 L/h/m$^2$,
- un facteur de concentration volumique compris entre 8 et 100,
- une vitesse de balayage comprise entre 6 et 8 m/s, et
- une pression d'alimentation comprise entre 1,5 et 2,5 bar.

**8.** Procédé selon l'une quelconque des revendications 1 à 7, **caractérisé en ce qu'**il comporte une étape de standardisation de la teneur en matière grasse et/ou en protéines du milieu d'intérêt.

**9.** Procédé selon l'une quelconque des revendications 1 à 8, **caractérisé en ce que** le perméat issu de l'étape de récupération (c) est soumis à une étape de traitement thermique final (d), par exemple du type pasteurisation ou inactivation enzymatique.

**10.** Procédé selon l'une quelconque des revendications 1 à 9, **caractérisé en ce que**, à titre de milieu alimentaire, on traite :

(i) du lait de mammifère ou un produit issu du lait de mammifère, et certaines au moins des gouttelettes lipidiques consistent en des globules gras, ou
(ii) de la crème obtenue par concentration des globules gras d'un lait de mammifère ou un mélange contenant un ou plusieurs composants du lait et des gouttelettes lipidiques contenant de la matière grasse d'origine végétale et/ou animale.

**11.** Installation pour la mise en oeuvre du procédé selon l'une quelconque des revendications 1 à 10, **caractérisée en**

**ce qu'**elle comporte :

- au moins un homogénéisateur (8, 10), pour la mise en oeuvre de l'étape d'homogénéisation (a) comprenant au moins deux opérations d'homogénéisation successives appliquées sur le milieu d'intérêt à une pression comprise entre 300 bar et 950 bar lesquelles opérations d'homogénéisation conduisent chacune à une réduction de la taille des gouttelettes lipidiques contenues dans ledit milieu d'intérêt, et

- au moins un dispositif de microfiltration tangentielle (12, 13), pour la mise en oeuvre de l'étape de microfiltration (b) appliquée audit milieu d'intérêt homogénéisé obtenu à l'étape (a) dont la membrane comporte un seuil de coupure permettant le passage dans le perméat de microfiltration d'au moins une partie desdites gouttelettes lipidiques tout en retenant dans le rétentat de microfiltration au moins une partie des bactéries.

12. Installation selon la revendication 11, **caractérisée en ce qu'**elle comporte au moins deux homogénéisateurs (8, 10) montés en série.

13. Produit du type milieu alimentaire et/ou biologique homogénéisé et microfiltré, consistant en le perméat de microfiltration obtenu à l'issue du procédé selon l'une quelconque des revendications 1 à 10.

14. Produit selon la revendication 13, **caractérisé en ce qu'**il consiste en :

(i) un produit laitier ayant une teneur en matière grasse totale inférieure à 40 g/kg, dont les paramètres vérifient les caractéristiques suivantes :

- une population en gouttelettes lipidiques la plus importante en volume comprise dans un domaine s'étendant entre 0,12 et 0,15 $\mu$m,
- une valeur de $d_{4.3}$ comprise entre 0,12 et 0,16 $\mu$m,
- une valeur de $d_{3.2}$ comprise entre 0,10 et 0,12 $\mu$m,
- au moins 95% des gouttelettes lipidiques ont une taille maximale de 0,3 $\mu$m,
- une teneur en protéines solubles dont le taux de dénaturation est inférieur à 10 %, et
- une teneur bactérienne inférieure à 1 UFC / mL, ou

(ii) un produit laitier ayant une teneur en matière grasse totale inférieure à 40 g/kg, dont les paramètres vérifient les caractéristiques suivantes :

- une population en gouttelettes lipidiques la plus importante en volume comprise dans un domaine s'étendant entre 0,14 et 0,17 $\mu$m,
- une valeur de $d_{4.3}$ comprise entre 0,15 et 0,35 $\mu$m,
- une valeur de $d_{3.2}$ comprise entre 0,12 et 0,16 $\mu$m,
- au moins 95% des gouttelettes lipidiques ont une taille maximale de 1 $\mu$m,
- une teneur en protéines solubles dont le taux de dénaturation est inférieur à 10 %, et
- une teneur bactérienne inférieure à 10 UFC / mL.


**Patentansprüche**

1. Verfahren zur Verringerung des Bakteriengehalts eines Ausgangsmilieus von Interesse, welches von lebensmittelartiger und/oder biologischer Beschaffenheit ist und Lipidtröpfchen enthält, wobei das Verfahren die folgenden Schritte umfasst:

(a) einen Schritt der Homogenisierung, welcher derart auf das Milieu von Interesse angewendet wird, dass ein homogenisiertes Milieu von Interesse erhalten wird, wobei der Schritt (a) in dem homogenisierten Milieu von Interesse Lipidtröpfchen mit einem Durchmesser erzeugt, der dafür geeignet ist, deren anschließenden Durchhang durch eine Mikrofiltrationsmembran mit einem bestimmten Ausschluss-Schwellenwert zu ermöglichen,

(b) einen Mikrofiltrationsschritt, der auf dem homogenisierte Milieu von Interesse angewendet wird, welches in Schritt (a) erhalten wurde, wobei er an einer Membran vorgenommen wird, deren Ausschluss-Schwellenwert es ermöglicht, dass mindestens ein Teil der Lipidtröpfchen in das Mikrofiltrationspermeat übergeht und mindestens ein Teil der Bakterien im Mikrofiltrationsretentat zurückgehalten wird, und

(c) die Gewinnung des Mikrofiltrationspermeats, das aus dem Schritt (b) stammt, wobei das Permeat ein homogenisiertes Milieu darstellt, welches von lebensmittelartiger und/oder biologischer Beschaffenheit ist, wobei dessen Bakteriengehalt gegenüber dem Ausgangsmilieu von Interesse verringert ist,

wobei das Verfahren dadurch gekennzeichet ist, dass:

- einerseits der Homogenisierungsschritt (a) mindestens zwei aufeinanderfolgende Homogenisierungsvorgänge umfasst, die bei einem Druck im Bereich von 300 bar bis 950 bar auf das Milieu von Interesse angewendet werden, wobei jeder der Homogenisierungsvorgänge zu einer Verringerung der Größe der Lipidtröpfchen führt, und
- andererseits der Mikrofiltrationsschritt (b) in einem Schritt der Querstrom-Mikrofiltration besteht.

2. Verfahren nach Anspruch 1, **dadurch gekennzeichnet, dass** die Anzahl der aufeinanderfolgenden Homogenisierungsvorgänge, welche im Schritt (a) durchgeführt werden, zwei oder drei beträgt, wobei die Anzahl vorzugsweise zwei beträgt.

3. Verfahren nach einem beliebigen der Ansprüche 1 oder 2, **dadurch gekennzeichnet, dass** der Homogenisierungsschritt (a) gemäß Parametern durchgeführt wird, die sicherstellen, dass die Temperatur des Milieus von Interesse während des gesamten Homogenisierungsschrittes (a) in einem Wertebereich von 30 °C bis 100 °C bleibt.

4. Verfahren nach einem beliebigen der Ansprüche 1 bis 3, **dadurch gekennzeichnet, dass** die Homogenisierungsvorgänge des Homogenisierungsschrittes (a) den folgenden Parameter erfüllen: eine Eingangstemperatur des Milieus von Interesse, die im Vorfeld jeder Homogenisierung im Bereich von 30 °C bis 90 °C liegt.

5. Verfahren nach einem beliebigen der Ansprüche 1 bis 4, **dadurch gekennzeichnet, dass** der Schritt der Querstrom-Mikrofiltration (b) an einer Membran vorgenommen wird, deren Ausschluss-Schwellenwert im Bereich von 0,5 $\mu$m bis 1,8 $\mu$m liegt.

6. Verfahren nach Anspruch 5, **dadurch gekennzeichnet, dass**:

(i) zur teilweisen Verringerung des Bakteriengehalts des Milieus von Interesse, welches von lebensmittelartiger und/oder biologischer Beschaffenheit ist:

- der Homogenisierungsschritt (a) derart durchgeführt wird, dass mindestens 85 % der Lipidtröpfchen einen Durchmesser von weniger als 1 $\mu$m halben, und
- der Schritt der Querstrom-Mikrofiltration (b) an einer Membran vorgenommen wird, deren Ausschluss-Schwellenwert im Bereich von 1 $\mu$m bis 1,8 $\mu$m liegt,
oder

(ii) zur Sterilisierung des Milieus von Interesse, welches von lebensmittelartiger und/oder biologischer Beschaffenheit ist :

- der Homogenisierungsschritt (a) derart durchgeführt wird, dass mindestens 85 % der Lipidtröpfchen einen Durchmesser von weniger als 0,3 $\mu$m haben, und
- der Schritt der Querstrom-Mikrofiltration (b) an einer Membran vorgenommen wird, deren Ausschluss-Schwellenwert im Bereich von 0,3 $\mu$m bis 0,9 $\mu$m liegt.

7. Verfahren nach einem beliebigen der Ansprüche 1 bis 6, **dadurch gekennzeichnet, dass** die Parameter, welche im Schritt der Querstrom-Mikrofiltration (b) angewendet werden, die folgenden Bedingungen erfüllen:

- eine Temperatur, die für das homogenisierte Milieu derart eingestellt wird, dass sie zwischen 50 °C und 60 °C beträgt,
- eine Permeations-Flussrate im Bereich von 150 bis 300 L/h/m$^2$,
- einen volumenbezogenen Konzentrationsfaktor im Bereich von 8 bis 100,
- eine Spülgeschwindigkeit im Bereich von 6 bis 8 m/s, rund
- einen Einspeisedruck im Bereich von 1,5 bis 2,5 bar.

8. Verfahren nach einem beliebigen der Ansprüche 1 bis 7, **dadurch gekennzeichnet, dass** es einen Schritt der Standardisierung des Gehaltes an Fett und/oder Proteinen des Milieus von Interesse aufweist.

9. Verfahren nach einem beliebigen der Ansprüche 1 bis 8, **dadurch gekennzeichnet, dass** das Permeat, welches aus dem Gewinnungsschritt (c) stammt, einem abschließenden Schritt der Wärmebehandlung (d) unterzogen wird, der beilspielsweise vom Typ Pasteurisierung oder Enzyminaktivierung ist.

10. Verfahren nach einem beliebigen der Ansprüche 1 bis 9, **dadurch gekennzeichnet, dass** als Milieu, welches von lebensmittelartiger Beschaffenheit ist, Folgendes behandelt wird:

(i) Milch von Säugetieren oder ein Produkt, das aus Milch von Säugetieren hervorgeht, wobei mindestens einige der Lipidtröpfchen aus Fettkügelchen bestehen,
oder
(ii) Rahm, der durch Aufkonzentrieren der Fettkügelchen einer Milch von Säugetieren erhalten wurde, oder eine Mischung, die einen oder mehrere Bestandteile dieser Milch sowie Lipidtröpfchen enthält, welche Fett pflanzlichen und/oder tierischen Ursprunges enthalten.

11. Anlage zur Durchführung des Verfahrens nach einem beliebigen der Ansprüche 1 bis 10, **dadurch gekennzeichnet, dass** sie Folgendes aufweist:

- mindestens einen Homogenisator (8, 10) zur Durchführung des Homogenisierungsschrittes (a), der mindestens zwei aufeinanderfolgende Homogenisierungsvorgänge umfasst, welche bei einem Druck im Bereich von 300 bar bis 950 bar auf das Milieu von Interesse angewendet werden, wobei jeder der Homogenisierungsvorgänge zu einer Verringerung der Größe der Lipidtröpfchen führt, die im Milieu von Interesse enthalten sind, und
- mindestens eine Vorrichtung zur Querstrom-Mikrofiltration (12, 13), die zur Durchführung des Mikrofiltrationsschrittes (b) bestimmt ist, welcher auf das in Schritt (a) erhaltene homogenisierte Milieu von Interesse angewendet wird, und deren Membran einen Ausschluss-Schwellenwert aufweist, welcher es ermöglicht, dass mindestens ein Teil der Lipidtröpfchen in das Mikrofiltrationspermeat übergeht und mindestens ein Teil der Bakterien im Mikrofiltrationsretentat zurückgehalten wird.

12. Anlage nach Anspruch 11, **dadurch gekennzeichnet, dass** sie mindestens zwei Homogenisatoren (8, 10) aufweist, die in Reihe angeordnet sind.

13. Produkt vom Typ homogenisiertes und mikrofiltriertes Milieu, welches von lebensmittelartiger und/oder biologischer Beschaffenheit ist, wobei es aus dem Mikrofiltrationspermeat besteht, das nach Abschluss des Verfahrens nach einem beliebigen der Ansprüche 1 bis 10 erhalten wird.

14. Produkt nach Anspruch 13, dadurch gekennzeichet, dass es aus Folgendem besteht:

(i) einem Milchprodukt mit einem Gesamtfettgehalt von weniger als 40 g/kg, wobei dessen Parameter den folgenden Eigenschaftsmerkmalen genügen:

- eine volumenmäßig überwiegende Gesamtheit an Lipidtröpfchen im Bereich von 0,12 bis 0,15 $\mu$m,
- einen Wert $d_{4,3}$ im Bereich von 0,12 bis 0,16 $\mu$m,
- einen Wert $d_{3,2}$ im Bereich von 0,10 bis 0,12 $\mu$m,
- mindestens 95 % der Lipidtröpfchen haben eine Größe von höchstens 0,3 $\mu$m,
- einen Gehalt an löslichen Proteinen, deren Denaturierungsgrad weniger als 10 % beträgt, und
- einen Bakteriengehalt von weniger als 1 KBE/mL, oder

(ii) ein Milchprodukt mit einem Gesamtfettgehalt von weniger als 40 g/kg, wobei dessen Parameter den folgenden Eigenschaftsmerkmalen genügen:

- eine volumenmäßig überwiegende Gesamtheit an Lipidtröpfchen im Bereich von 0,14 bis 0,17 $\mu$m,
- einen Wert $d_{4,3}$ im Bereich von 0,15 bis 0,35 $\mu$m,
- einen Wert $d_{3,2}$ = im Bereich von 0,12 bis 0,16 $\mu$m,
- mindestens 95 % der Lipidtröpfchen haben eine Größe von höchstens 1 $\mu$m,
- einen Gehalt an löslichen Proteinen, deren Denaturierungsgrad weniger als 10 % beträgt, und
- einen Bakteriengehalt von weniger als 10 KBE/mL.

**Claims**

1. A method for reducing the bacterial content of a starting food and/or biological medium of interest, containing lipid droplets, said method comprising the following steps:

   (a) a homogenization step applied to said medium of interest in order to obtain a homogenized medium of interest, said step (a) generating, in said homogenized medium of interest, lipid droplets with a diameter suitable for allowing them to pass subsequently through a microfiltration membrane having a specified cutoff threshold,
   (b) a microfiltration step applied to said homogenized medium of interest obtained in step (a), on a membrane having a cutoff threshold allowing the passage in the microfiltration permeate of at least part of said lipid droplets while retaining in the microfiltration retentate at least part of said bacteria,
   and
   (c) recovering said microfiltration permeate resulting from the step (b), said permeate constituting a homogenized food and/or biological medium whereof the bacterial content is reduced in comparison with the starting medium of interest.

   which method is **characterized in that**:

   - on the one hand, said homogenization step (a) comprises at least two successive homogenization procedures applied on said medium of interest at a pressure of between 300 bar and 950 bar, which homogenization procedures each lead to a reduction in the size of said lipid droplets, and
   - on the other hand, said microfiltration step (b) consists in a tangential microfiltration step.

2. The method according to claim 1, **characterized in that** the number of the successive homogenization procedures performed during step (a) is two or three, and preferably, two.

3. The method according to any one of claims 1 or 2, **characterized in that** the homogenization step (a) is performed according to parameters ensuring the temperature of the medium of interest to be maintained in a range of value of between 30°C and 100°C throughout said homogenization step (a).

4. The method according to any one of claims 1 to 3, **characterized in that** the homogenization procedures of the homogenization step (a) verify the following parameter: an input temperature of the medium of interest, before each homogenization, ranging from 30°C to 90°C.

5. The method according to any one of claims 1 to 4, **characterized in that** the tangential microfiltration step (b) is performed on a membrane having a cutoff threshold between 0.5 $\mu$m and 1.8 $\mu$m.

6. The method according to claim 5, **characterized in that**:

   (i) for partially reducing the bacterial content of the food and/or biological medium of interest:

   - the homogenization step (a) is performed so that at least 85% of the lipid droplets have a diameter lower than 1 $\mu$m, and
   - the tangential microfiltration step (b) is performed on a membrane having a cutoff threshold between 1 $\mu$m and 1.8 $\mu$m, or

   (ii) for sterilizing the food and/or biological medium of interest:

   - the homogenization step (a) is performed so that at least 85% of the lipid droplets have a diameter lower than 0.3 $\mu$m, and
   - the tangential microfiltration step (b) is performed on a membrane having a cutoff threshold between 0.3 $\mu$m and 0.9 $\mu$m.

7. The method according to any one of claims 1 to 6, **characterized in that** the parameters applied during the tangential Microfiltration step (b) verify the following conditions:

   - a temperature adjusted between 50°C and 60°C for the homogenized medium,
   - a permeate flow between 150 and 300 L/h/m$^2$,

- a volume concentration factor between 8 and 100.
- a scanning speed between 6 and 8 m/s, and
- a supply pressure between 1.5 and 2.5 bar.

8. The method according to any one of claims 1 to 7, **characterized in that** it includes a fat and/or protein content standardisation step of the medium of interest.

9. The method according to any one of claims 1 to 8, **characterized in that** the permeate resulting from the recovery step (c) is subjected to a final thermal treatment step (d), for example of the pasteurization or enzymatic inactivation type.

10. The method according to any one of claims 1 to 9, **characterized in that**, as a food medium, it is treated:

(i) mammalian milk or a product derived from mammalian milk, and at least some of the lipid droplets consist in fat globules, or
(ii) cream obtained by concentrating fat globules of a mammalian milk or a mixture containing one or more milk components and lipid droplets containing fat from vegetable and/or animal origin.

11. A device for implementing the method according to any one of claims 1 to 10, **characterized in that** it comprises:

- at least one homogenizer (8, 10), for implementing the homogenization step (a) comprising at least two successive homogenization procedures applied on the medium of interest at a pressure of between 300 bar and 950 bar, which homogenization procedures each lead to a reduction in the size of the lipid droplets contained in said medium of interest, and
- at least one tangential microfiltration device (12. 13), for implementing the Microfiltration step (b) applied to said homogenized medium of interest obtained in step (a), whereof the membrane has a cutoff threshold allowing the passage in the microfiltration permeate of at least part of said lipid droplets while retaining in the microfiltration retentate at least part of the bacteria.

12. The device according to claim 11, **characterized in that** it comprises at least two homogenizers (8, 10) connected in series.

13. A product of the food and/or biological medium type homogenized and microfiltered, consisting in the Microfiltration permeate obtained from the method according to any one of claims 1 to 10.

14. The product according to claim 13, **characterized in that** it consists in:

(i) a dairy product having a total fat content of less than 40 g/kg, the parameters of which verify the following characteristics:

- a lipid droplet population which is the largest in terms of volume within a range of from 0.12 to 0.15 $\mu$m,
- a $d_{4.3}$ value of between 0.12 and 0.16 $\mu$m,
- a $d_{3.2}$ value of between 0.10 and 0.12 $\mu$m,
- at least 95% of the lipid droplets have a maximum size of 0.3 $\mu$m,
- a content of soluble proteins whose the deriaturation rate is less than 10%, and
- a bacterial content of less than 1 CFU/mL, or

(ii) a dairy product having a total fat content of less than 40 g/kg, the parameters of which verify the hollowing characteristics:

- a lipid droplet population which is the largest in terms of volume within a range of from 0.14 to 0.17 $\mu$m,
- a $d_{4.3}$ value of between 0.15 and 0.35 $\mu$m,
- a $d_{3.2}$ value of between 0.12 and 0.16 $\mu$m,
- at least 95% of the lipid droplets have a maximum size of 1 $\mu$m,
- a content of soluble proteins whose the denaturation rate is less than 10%, and
- a bacterial content of less than 10 CFU/mL.

Milieu biologique et/ou alimentaire d'intérêt

```
┌ ─ ─ ─ ─ ─ ─ ─ ─ ─ ─ ─ ─ ─ ─ ─ ┐
│   ┌───────────────────────┐   │
│   │   Homogénéisation 1   │   │
│   └───────────────────────┘   │   Étape (a)
│   ┌───────────────────────┐   │
│   │   Homogénéisation 2   │   │
│   └───────────────────────┘   │
└ ─ ─ ─ ─ ─ ─ ─ ─ ─ ─ ─ ─ ─ ─ ─ ┘
```

Microfiltration tangentielle   Étape (b)

Récupération du perméat   Étape (c)

Traitement thermique   Étape (d)

Milieu biologique et/ou alimentaire final

Fig. 1

Fig. 2

Fig. 3

Lait entier cru ou lait pasteurisé

Microfiltration de 12 µm

Lait sans cellules somatiques

Rétentat enrichi en cellules somatiques et en matière grasse

Ecrémage

Crème

Lait écrémé

Lait standardisé en matière grasse (18 g/kg)

Homogénéisation 1

Homogénéisation 2

Lait standardisé homogénéisé

Microfiltration tangentielle (membrane 0,8 µm)

Rétentat enrichi en protéines, en matière grasse et en bactéries

Lait épuré (15 g/kg de matière grasse)

Traitement thermique

Traitement thermique

Valorisation

Lait partiellement écrémé (15 g/kg de matière grasse)

Fig. 4

Lait entier cru ou pasteurisé

Ecrémage

Lait écrémé cru ou pasteurisé

Crème

Microfiltration de 0,1μm
ou ultrafiltration 20 kD

Perméat

Rétentat de microfiltration
0.1 μm ou rétentat
d'ultrafiltration

Lait standardisé en matière grasse (18 g/kg)
et en protéine (36,5 g/kg)

Homogénéisation 1

Homogénéisation 2

Lait standardisé homogénéisé

Microfiltration tangentielle
(membrane 0,8 μm)

Rétentat enrichi en
protéines, en matière
grasse et en bactéries

Lait épuré
(15 g/kg de matière grasse;
32 g/kg de protéines)

Traitement thermique

Traitement thermique

Valorisation

Lait partiellement écrémé

(15 g/kg de matière grasse
32 g/kg de protéines)

Fig. 5

Lait entier cru ou pasteurisé

Microfiltration de 12 µm

Lait entier sans cellules somatiques

Rétentat enrichi en cellules somatiques et en matière grasse

Ecrémage

Crème

Lait écrémé

Lait standardisé en matière grasse (18 g/kg)

Homogénéisation 1

Homogénéisation 2

Lait standardisé homogénéisé

Microfiltration tangentielle (membrane 1,4 µm)

Rétentat enrichi en protéines, en matière grasse et en bactéries

Lait épuré

(15g/kg de matière grasse; 32 g/kg de protéines)

Traitement thermique

Traitement thermique

Valorisation

Lait partiellement écrémé

(15g/kg de matière grasse;

32 g/kg de protéines)

Fig. 6

Lait entier cru ou pasteurisé

Microfiltration de 12 µm

Lait entier sans cellules somatiques

Rétentat enrichi en cellules somatiques et en matière grasse

Ecrémage

Crème

+/-

Lait écrémé

+/-

Lait standardisé en matière grasse (38 g/kg)

Homogénéisation 1

Homogénéisation 2

Lait standardisé homogénéisé

Microfiltration tangentielle (membrane 1,4 µm)

Rétentat enrichi en protéines, en matière grasse et en bactéries

Lait épuré (36g/kg de matière grasse; 32 g/kg de protéines)

Traitement thermique

Traitement thermique

Valorisation

Lait entier (36 g/kg de matière grasse; 32 g/kg de protéines)

Fig. 7

Lait entier cru ou pasteurisé

Ecrémage

Lait écrémé cru ou pasteurisé          Crème

Lait standardisé en matière grasse
(38 g/kg)

Homogénéisation 1

Homogénéisation 2

Lait standardisé homogénéisé

Microfiltration tangentielle
(membrane 1,4 µm)

Rétentat enrichi en
protéines, en matière
grasse, bactéries et cellules
somatiques

Lait épuré
(36 g/kg de matière grasse;
32 g/kg de protéines)

Traitement thermique          Traitement thermique

Valorisation

Lait entier

(36 g/kg de matière grasse;

32 g/kg de protéines)

Fig. 8

Lait entier cru ou pasteurisé

Ecrémage

Lait écrémé　　　　　　Crème

Microfiltration de 0,1μm
ou ultrafiltration 20 kD

Perméat

Rétentat de microfiltration
0.1 μm ou rétentat
d'ultrafiltration

Crème standardisée en matière grasse et
en protéines

Homogénéisation 1

Homogénéisation 2

Crème homogénéisée

Lait homogénéisé standardisé

Microfiltration tangentielle

Rétentat enrichi en
protéines, en matière
grasse et en bactéries

Lait épuré

Traitement thermique

Traitement thermique

Rétentat traité
thermiquement

Lait de
consommation

Fig. 9

Lait entier cru ou pasteurisé

Ecrémage

Crème

Lait écrémé

Matières grasses anhydres (origine animale ou végétale) +/- lécithine

Chauffage

Ingrédients (protéines, lactose, etc.)

Mélange standardisé

Emulsification

Homogénéisation 1

Homogénéisation 2

Produit homogénéisé standardisé

Microfiltration tangentielle (sur membrane de 0,8 µm ou 1,4 µm)

Rétentat enrichi en protéines, en matière grasse et en bactéries

Produit épuré

Traitement thermique

Traitement thermique

Rétentat traité thermiquement

Produit épuré microbiologiquement et traité thermiquement (par exemple lait infantile ou lait de croissance)

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2692441
- FR 2699792
- JP 5023072 A
- FR 2776208

**Littérature non-brevet citée dans la description**

- **THIEBAUD et al.** *International Dairy Journal,* 2003, vol. 13, 427-439
- **TOWLER.** Modern Dairy Technology. 1986
- **SÉBASTIEN ROUSTEL.** Homogénéisation à haute pression des dispersions alimentaires liquides. *Technique de l'Ingénieur,* 2010
- The high pressure dairy homogenizer. **L.W PHIPPS.** Technical Bulletin. 1985
- **L. SABOYA ; JL MAUBOIS.** Current developments of microfiltration technology in the dairy industry. *Lait,* 2000, vol. 80, 541-553
- **TROUVÉ et al.** *Lait,* 1991, vol. 71, 1-13